# EUROPEAN PATENT APPLICATION

(11) **EP 4 462 834 A1**
(43) Date of publication of application: **13.11.2024**
(21) Application number: 23746126.4
(22) Date of filing: 17.01.2023
(51) Int. Cl.: H04W 8/22, H04W 48/16

(54) **TERMINAL MANAGEMENT METHOD AND CORE NETWORK DEVICE**

(30) Priority: 30.01.2022 CN 202210114767
(71) Applicant: Huawei Technologies Co., Ltd., Shenzhen, Guangdong 518129 (CN)
(72) Inventor: XU, Yishan, Shenzhen, Guangdong 518129 (CN); ZHU, Hualin, Shenzhen, Guangdong 518129 (CN); GUO, Longhua, Shenzhen, Guangdong 518129 (CN)
(74) Representative: Maiwald GmbH
(86) International application number: PCT/CN2023/072596
(87) International publication number: WO 2023/143244

(57) **Abstract**

Embodiments of this application provide a terminal management method and a core network device. The method includes: A first core network device receives a first message from a terminal. The first message is used to request to access a network. When determining, based on quantity information, to allow the terminal to access the network, the first core network device sends a second message to an operation requester to which the terminal belongs. The quantity information includes a quantity of terminals that the operation requester is allowed to use, the second message includes first identification information, and the first identification information includes one or more of the following: a terminal identifier of the terminal, an encrypted terminal identifier, a terminal application identifier, a terminal network identifier, and an operation requester identifier. In embodiments of this application, the first core network device determines, based on the quantity information, to allow the terminal to access the network, so that a quantity of terminals accessing the network among terminals corresponding to the operation requester can be prevented from being greater than or equal to the quantity of terminals that the operation requester is allowed to use.

## Description

This application claims priority to Chinese Patent Application No. 202210114767.1, filed with the China National Intellectual Property Administration on January 30, 2022 and entitled "TERMINAL MANAGEMENT METHOD AND CORE NETWORK DEVICE", which is incorporated herein by reference in its entirety.

### TECHNICAL FIELD

This application relates to the communication field, and in particular, to a terminal management method and a core network device.

### BACKGROUND

A passive internet of things (passive IoT, P-IoT) architecture may include a passive terminal, a reader (reader), and an operation requester. The passive terminal may be in a tag form, or may be in any other terminal form. The following describes the passive terminal by using a terminal as an example. The reader (reader) reads and writes the terminal (for example, an electronic tag or a radio frequency card) in a radio frequency manner, to identify a target and exchange data. When performing a terminal operation on the terminal, the operation requester may send an operation instruction to the reader through a core network device. The operation instruction may include but is not limited to performing an operation such as an operation of obtaining terminal information, an inventory operation (or referred to as a stock operation), a read operation, a write operation, an invalidation operation, or an operation of exchanging information with the terminal. After receiving the operation instruction, the reader sends the operation instruction to the terminal, and the terminal obtains or sends corresponding information based on the operation instruction. For example, when the operation instruction is an inventory instruction or instructs to perform the inventory operation, the terminal sends identification information of the terminal. For another example, when the operation instruction is a read instruction or instructs to perform the read operation, the terminal sends data information stored in a storage area of the terminal. For another example, when the operation instruction is a write instruction or instructs to perform the write operation, the terminal stores, in a storage area of the terminal, data information that is to be written into the terminal and that is included in the instruction. The reader receives information sent by the terminal, and sends the information to the operation requester through the core network device.

### SUMMARY

Embodiments of this application disclose a terminal management method and a core network device, to implement terminal management.

According to a first aspect, an embodiment of this application provides a terminal management method, including: A first core network device receives a first message from a terminal. The first message is used to request to access a network. When determining, based on quantity information, to allow the terminal to access the network, the first core network device sends a second message to an operation requester to which the terminal belongs. The quantity information includes a quantity of terminals that the operation requester is allowed to use, the second message includes first identification information, and the first identification information includes one or more of the following: a terminal identifier of the terminal, an encrypted terminal identifier, a terminal application identifier, a terminal network identifier, and an operation requester identifier.

In this embodiment of this application, when determining, based on the quantity information, to allow the terminal to access the network, the first core network device sends the second message to the operation requester to which the terminal belongs. That is, before sending the second message, the first core network device needs to determine, based on the quantity information, to allow the terminal to access the network, instead of directly allowing the terminal to access the network. The first core network device determines, based on the quantity information, to allow the terminal to access the network, so that a quantity of terminals accessing the network among terminals corresponding to the operation requester can be prevented from being greater than or equal to the quantity of terminals that the operation requester is allowed to use.

In a possible implementation, the determining, based on quantity information, to allow the terminal to access the network includes: When a quantity of terminals accessing the network among terminals corresponding to the operation requester is less than a quantity threshold, the first core network device determines to allow the terminal to access the network. The quantity threshold is the quantity of terminals that the operation requester is allowed to use.

In this implementation, when the quantity of terminals accessing the network among the terminals corresponding to the operation requester is less than the quantity threshold, the first core network device determines to allow the terminal to access the network. In this way, it can be quickly and accurately determined whether to allow the terminal to access the network, and the quantity of terminals accessing the network among the terminals corresponding to the operation requester is prevented from being greater than or equal to the quantity threshold.

In a possible implementation, the method further includes: When determining, based on the quantity information, not to allow the terminal to access the network, the first core network device sends a third message to the terminal. The third message indicates to reject the access of the terminal to the network.

In this implementation, when determining, based on the quantity information, not to allow the terminal to access the network, the first core network device sends the third message to the terminal, so that the quantity of terminals accessing the network among the terminals corresponding to the operation requester can be prevented from being greater than or equal to the quantity of terminals that the operation requester is allowed to use.

In a possible implementation, the determining, based on the quantity information, not to allow the terminal to access the network includes: When the quantity of terminals accessing the network among the terminals corresponding to the operation requester is greater than or equal to the quantity threshold, the first core network device determines not to allow the terminal to access the network. The quantity threshold is the quantity of terminals that the operation requester is allowed to use.

In this implementation, when the quantity of terminals accessing the network among the terminals corresponding to the operation requester is greater than or equal to the quantity threshold, the first core network device determines not to allow the terminal to access the network. In this way, it can be quickly and accurately determined whether to allow the terminal to access the network.

In a possible implementation, the method further includes: The first core network device sends a fourth message to a second core network device. The fourth message is used to request to execute an authentication procedure on the terminal, the fourth message includes second identification information and authentication information, the second identification information and the authentication information are used to execute the authentication procedure, and the second identification information includes one or more of the following: the terminal identifier of the terminal, the encrypted terminal identifier, the terminal application identifier, the terminal network identifier, and the operation requester identifier.

In this implementation, the first core network device sends the fourth message to the second core network device, to execute the authentication procedure on the terminal, thereby ensuring that the terminal is a trusted terminal.

In a possible implementation, after the first core network device determines, based on the quantity information, to allow the terminal to access the network, the first core network device sends a fourth message to a second core network device. The fourth message is used to request to execute an authentication procedure on the terminal, the fourth message includes second identification information and authentication information, the second identification information and the authentication information are used to execute the authentication procedure, and the second identification information includes one or more of the following: the terminal identifier of the terminal, the encrypted terminal identifier, the terminal application identifier, the terminal network identifier, and the operation requester identifier.

In this implementation, the first core network device sends the fourth message to the second core network device, to execute the authentication procedure on the terminal, thereby ensuring that the terminal is a trusted terminal.

In a possible implementation, the fourth message further includes indication information, and the indication information indicates that the authentication procedure is any one of the following: one-way authentication, two-way authentication, one-way authentication performed by the terminal on the network or the operation requester, or one-way authentication performed by the network or the operation requester on the terminal.

In this implementation, the indication information indicates that the authentication procedure is a one-way authentication procedure or a two-way authentication procedure, so that the second core network device determines a to-be-executed authentication procedure based on the indication information.

In a possible implementation, the method further includes: The first core network device executes an authentication procedure on the terminal based on the first message. The first message includes third identification information and authentication information, the third identification information and the authentication information are used to execute the authentication procedure, and the third identification information includes one or more of the following: the terminal identifier of the terminal, the encrypted terminal identifier, the terminal application identifier, the terminal network identifier, and the operation requester identifier.

In this implementation, the first core network device executes the authentication procedure on the terminal based on the first message, and the first core network device may execute the authentication procedure on the terminal without interacting with another device, so that signaling overheads can be reduced.

In a possible implementation, after determining, based on the quantity information, to allow the terminal to access the network, the first core network device executes an authentication procedure on the terminal based on the first message. The first message includes third identification information and authentication information, the third identification information and the authentication information are used to execute the authentication procedure, and the third identification information includes one or more of the following: the terminal identifier of the terminal, the encrypted terminal identifier, the terminal application identifier, the terminal network identifier, and the operation requester identifier.

In this implementation, the first core network device executes the authentication procedure on the terminal based on the first message, and the first core network device may execute the authentication procedure on the terminal without interacting with another device, so that signaling overheads can be reduced.

In a possible implementation, the method further includes: The first core network device determines, based on the third identification information included in the first message, the operation requester to which the terminal belongs. The third identification information includes one or more of the following: the terminal identifier of the terminal, the encrypted terminal identifier, the terminal application identifier, the terminal network identifier, and the operation requester identifier.

In this implementation, the first core network device determines, based on the third identification information included in the first message, the operation requester to which the terminal belongs, to determine, based on the quantity information, whether to allow the terminal to access the network.

In a possible implementation, that the first core network device determines, based on the third identification information included in the first message, the operation requester to which the terminal belongs includes: The first core network device determines, based on the third identification information and a first correspondence, the operation requester to which the terminal belongs. The first correspondence indicates that the terminal belongs to the operation requester. Optionally, the first correspondence includes a correspondence between the application identifier (the terminal identifier or the network identifier) of the terminal and the operation requester identifier. The operation requester identifier is an identifier of the operation requester.

In this implementation, the first core network device may quickly and accurately determine, based on the third identification information and the first correspondence, the operation requester to which the terminal belongs.

In a possible implementation, before that the first core network device determines, based on the third identification information included in the first message, the operation requester to which the terminal belongs, the method further includes: The first core network device determines a second correspondence based on an operation instruction from the operation requester. The second correspondence indicates that the terminal belongs to the operation requester. That the first core network device determines, based on the third identification information included in the first message, the operation requester to which the terminal belongs includes: The first core network device determines, based on the third identification information and the second correspondence, the operation requester to which the terminal belongs. The operation instruction may include a first identifier of the terminal. The first identifier is any one of the following: the terminal identifier of the terminal, the encrypted terminal identifier, the terminal application identifier, or the terminal network identifier.

In this implementation, the first core network device determines the second correspondence based on the operation instruction from the operation requester, and does not need to pre-store a correspondence between each terminal and an operation requester to which the terminal belongs, so that storage overheads can be reduced, and a workload of retrieving the operation requester to which the terminal belongs can be reduced.

In a possible implementation, the method further includes: The first core network device receives a fifth message. The first core network device sends a sixth message to the terminal. The fifth message indicates that the authentication procedure succeeds, and the sixth message indicates to accept the access of the terminal to the network; or the fifth message indicates that the authentication procedure fails, and the sixth message indicates to reject the access of the terminal to the network.

In this implementation, whether to accept or reject the access of the terminal to the network may be indicated in time.

In a possible implementation, the method further includes: The first core network device obtains the quantity information and/or the first identification information.

In this implementation, the first core network device obtains the quantity information and/or the first identification information, to determine, based on the quantity information, whether to allow the terminal to access the network, and implement the authentication procedure for the terminal.

In a possible implementation, the method further includes: The first core network device counts the quantity of terminals accessing the network among the terminals corresponding to the operation requester.

In this implementation, the first core network device counts the quantity of terminals accessing the network among the terminals corresponding to the operation requester, to determine, based on the terminal device and the quantity threshold, whether to allow the terminal to access the network.

In a possible implementation, that the first core network device counts the quantity of terminals accessing the network among the terminals corresponding to the operation requester includes: After the terminal passes the authentication, the first core network device updates, based on the first identification information and a third correspondence, the quantity of terminals accessing the network among the terminals corresponding to the operation requester. The third correspondence includes one or more correspondences between one or more of the following: the terminal identifier of the terminal, the encrypted terminal identifier, the terminal application identifier, the terminal network identifier, and the operation requester identifier.

In this implementation, the first core network device updates, based on the first identification information and the second correspondence, the quantity of terminals accessing the network among the terminals corresponding to the operation requester. In this way, the quantity of terminals accessing the network among the terminals corresponding to the operation requester can be accurately counted, and a plurality of terminals are prevented from accessing the network by using a same identifier.

According to a second aspect, this application provides another terminal management method, including: An operation requester obtains quantity information. The quantity information indicates a quantity of terminals that the operation requester is allowed to use. The operation requester obtains one or more terminal application identifiers based on the quantity information.

In this embodiment of this application, the operation requester obtains the one or more terminal application identifiers based on the quantity information, so that a quantity of the terminal application identifiers obtained by the operation requester can be prevented from exceeding the quantity of terminals that the operation requester is allowed to use.

In a possible implementation, the method further includes: The operation requester sends an operation instruction. The operation instruction includes a first application identifier, the first application identifier is included in the one or more terminal application identifiers, and the operation instruction is used to perform an operation on a terminal corresponding to the first application identifier.

In this implementation, the operation instruction includes the first application identifier, and the operation may be conveniently performed, by using the operation instruction including the first application identifier, on the terminal corresponding to the first application identifier.

In a possible implementation, the method further includes: The operation requester obtains network identification information. The network identification information includes one or more terminal network identifiers.

In this implementation, the operation requester obtains the network identification information, so that the operation requester implements terminal management by using the network identification information.

In a possible implementation, the method further includes: The operation requester sends the one or more terminal application identifiers and/or an operation requester identifier to a first core network device.

In this implementation, the operation requester sends the one or more terminal application identifiers and/or the operation requester identifier to the first core network device, so that the first core network device implements terminal management by using the one or more terminal application identifiers and/or the operation requester identifier.

According to a third aspect, this application provides another terminal management method, including: An operation requester obtains one or more terminal application identifiers. The operation requester sends an operation instruction. The operation instruction includes a first application identifier, the first application identifier is included in the one or more terminal application identifiers, and the operation instruction is used to perform an operation on a terminal corresponding to the first application identifier.

In this embodiment of this application, the operation requester obtains the one or more terminal application identifiers, and sends the operation instruction including the first application identifier, to perform the operation on the terminal corresponding to the first application identifier. That is, the operation may be performed on the corresponding terminal based on the one or more obtained terminal application identifiers.

In a possible implementation, that an operation requester obtains one or more terminal application identifiers includes: The operation requester receives the one or more terminal application identifiers from a first core network device.

In this implementation, the operation requester receives the one or more terminal application identifiers from the first core network device, and does not need to allocate a terminal application identifier by itself.

In a possible implementation, the method further includes: The operation requester obtains quantity information. The quantity information indicates a quantity of terminals that the operation requester is allowed to use.

In this implementation, the operation requester obtains the quantity information, so that the quantity of terminals that the operation requester is allowed to use can be learned.

According to a fourth aspect, this application provides another terminal management method, including: A second core network device obtains quantity information. The quantity information indicates a quantity of terminals that an operation requester is allowed to use. The second core network device sends the quantity information and/or first identification information to a first core network device. The first identification information includes one or more of the following: a terminal identifier of a terminal, an encrypted terminal identifier, a terminal application identifier, a terminal network identifier, and an operation requester identifier. The operation requester identifier is an identifier of the operation requester, and the terminal belongs to the operation requester.

In this embodiment of this application, the second core network device sends the quantity information and/or the first identification information to the first core network device, so that the first core network device determines, based on the quantity information, whether to allow the terminal to access a network.

In a possible implementation, the method further includes: The second core network device configures the quantity of terminals that the operation requester is allowed to use.

In this implementation, the second core network device configures the quantity of terminals that the operation requester is allowed to use, to perform terminal management by using the quantity of terminals.

In a possible implementation, after that a second core network device obtains quantity information, the method further includes: The second core network device obtains (for example, allocates) the terminal network identifier of the terminal based on the quantity information.

In this implementation, the second core network device obtains the terminal network identifier of the terminal based on the quantity information, to subsequently perform terminal management on the terminal based on the terminal network identifier.

In a possible implementation, after that the second core network device obtains (for example, allocates) the terminal network identifier of the terminal based on the quantity information, the method further includes: The second core network device sends the terminal network identifier of the terminal to the operation requester.

In this implementation, the second core network device sends the terminal network identifier to the operation requester, so that the operation requester performs terminal management on the corresponding terminal by using the terminal network identifier.

In a possible implementation, the method further includes: The second core network device receives one or more terminal application identifiers from the operation requester. The one or more terminal application identifiers include the terminal application identifier of the terminal.

In this implementation, the second core network device receives the one or more terminal application identifiers from the operation requester, to subsequently perform terminal management on the corresponding terminal by using these terminal application identifiers.

In a possible implementation, after that the second core network device receives the one or more terminal application identifiers from the operation requester, the method further includes: The second core network device configures the one or more terminal application identifiers.

In this implementation, the second core network device configures the one or more terminal application identifiers, to subsequently perform terminal management on the corresponding terminal by using these terminal application identifiers.

In a possible implementation, the method further includes: The second core network device obtains a seventh message. The seventh message includes the quantity information and fourth identification information, and the fourth identification information includes one or more of the following: the terminal identifier of the terminal, the encrypted terminal identifier, the terminal application identifier, the terminal network identifier, and the operation requester identifier. That the second core network device obtains a seventh message may be receiving the seventh message sent by another device (for example, a device belonging to an operator).

In this implementation, the second core network device obtains the seventh message, to obtain the first identification information by using the seventh message.

In a possible implementation, the method further includes: The second core network device sends the application identifier of the terminal and/or the quantity information to the operation requester.

In this implementation, the operation requester may obtain the application identifier of the terminal and/or the quantity information.

In a possible implementation, the method further includes: The second core network device receives a fourth message from the first core network device. The fourth message is used to request to execute an authentication procedure on the terminal, the fourth message includes second identification information and authentication information, and the second identification information includes one or more of the following: the terminal identifier of the terminal, the encrypted terminal identifier, the terminal application identifier, the terminal network identifier, and the operation requester identifier. The second core network device executes the authentication procedure on the terminal based on the fourth message.

In this embodiment of this application, the second core network device executes the authentication procedure on the terminal based on the fourth message, so that the terminal can be quickly authenticated.

In a possible implementation, the fourth message further includes indication information, and the indication information indicates that the authentication procedure is any one of the following: one-way authentication, two-way authentication, one-way authentication performed by the terminal on the network or the operation requester, or one-way authentication performed by the network or the operation requester on the terminal. The method further includes: The second core network device determines a type of the authentication procedure based on the indication information.

In this implementation, the second core network device determines the type of the authentication procedure based on the indication information, to execute the corresponding authentication procedure on the terminal.

In a possible implementation, the second identification information includes the operation requester identifier, and does not include the terminal identifier of the terminal, the encrypted terminal identifier, the terminal application identifier, and the terminal network identifier. After that the second core network device executes the authentication procedure on the terminal based on the fourth message, the method further includes: allocating the terminal network identifier to the terminal when the terminal passes the authentication.

In this implementation, when the terminal passes the authentication, the terminal network identifier is allocated to the terminal. In this way, the network identifier of the terminal does not need to be configured in the operation requester in advance, and the operation requester can be prevented from using a network identifier of one terminal in a plurality of terminals. That is, the terminal can obtain the terminal network identifier by using a unified procedure, which is more secure.

In a possible implementation, the method further includes: The second core network device counts a quantity of terminals accessing the network among terminals corresponding to the operation requester.

In this implementation, the second core network device counts the quantity of terminals accessing the network among the terminals corresponding to the operation requester, to determine, based on the terminal device and a quantity threshold, whether to allow the terminal to access the network.

In a possible implementation, that the second core network device counts a quantity of terminals accessing the network among terminals corresponding to the operation requester includes: After the terminal passes the authentication, the second core network device updates, based on the first identification information and a third correspondence, the quantity of terminals accessing the network among the terminals corresponding to the operation requester. The third correspondence includes one or more correspondences between one or more of the following: the terminal identifier of the terminal, the encrypted terminal identifier, the terminal application identifier, the terminal network identifier, and the operation requester identifier.

In this implementation, the second core network device updates, based on the first identification information and the third correspondence, the quantity of terminals accessing the network among the terminals corresponding to the operation requester. In this way, the quantity of terminals accessing the network among the terminals corresponding to the operation requester can be accurately counted, and a plurality of terminals can be prevented from accessing the network by using a same identifier.

In a possible implementation, after that the second core network device counts a quantity of terminals accessing the network among terminals corresponding to the operation requester, the method further includes: The second core network device notifies the first core network device of the quantity of terminals accessing the network among the terminals corresponding to the operation requester.

In this implementation, the first core network device may learn the quantity of terminals accessing the network among the terminals corresponding to the operation requester.

In a possible implementation, the terminal is a tag. The method further includes: The second core network device updates or deletes identification information of an invalidated tag. The identification information of the invalidated tag includes one or more of the following information: a terminal application identifier of the invalidated tag, a terminal network identifier, a terminal identifier, an encrypted terminal identifier, and a third correspondence, and the third correspondence includes a correspondence between two or more of the following: the terminal application identifier of the invalidated tag, the terminal network identifier, the terminal identifier, and the encrypted terminal identifier.

In this implementation, the second core network device updates or deletes the identification information of the invalidated tag, to better perform tag management.

In a possible implementation, the method further includes: receiving a tag message from the operation requester. That the second core network device updates or deletes identification information of an invalidated tag includes: The second core network device updates or deletes the identification information of the invalidated tag based on the tag information.

In this implementation, the identification information of the invalidated tag may be updated or deleted based on an indication of the operation requester.

According to a fifth aspect, an embodiment of this application provides a communication apparatus. The communication apparatus has a function of implementing behavior in the method embodiment in the first aspect. The function may be implemented by hardware, or may be implemented by hardware executing corresponding software. The hardware or software includes one or more modules or units that correspond to the foregoing function. In a possible implementation, the communication apparatus includes a transceiver module and a processing module. The transceiver module is configured to receive a first message from a terminal. The first message is used to request to access a network, and the transceiver module is further configured to: when the processing module determines, based on quantity information, to allow the terminal to access the network, send a second message to an operation requester to which the terminal belongs. The quantity information includes a quantity of terminals that the operation requester is allowed to use, the second message includes first identification information, and the first identification information includes one or more of the following: a terminal identifier of the terminal, an encrypted terminal identifier, a terminal application identifier, a terminal network identifier, and an operation requester identifier.

In a possible implementation, the processing module is specifically configured to: when a quantity of terminals accessing the network among terminals corresponding to the operation requester is less than a quantity threshold, determine to allow the terminal to access the network. The quantity threshold is the quantity of terminals that the operation requester is allowed to use.

In a possible implementation, the transceiver module is further configured to: when the processing module determines, based on the quantity information, not to allow the terminal to access the network, send a third message to the terminal. The third message indicates to reject the access of the terminal to the network.

In a possible implementation, the processing module is specifically configured to: when the quantity of terminals accessing the network among the terminals corresponding to the operation requester is greater than or equal to the quantity threshold, determine not to allow the terminal to access the network. The quantity threshold is the quantity of terminals that the operation requester is allowed to use.

In a possible implementation, the transceiver module is further configured to send a fourth message to a second core network device. The fourth message is used to request to execute an authentication procedure on the terminal, the fourth message includes second identification information and authentication information, the second identification information and the authentication information are used to execute the authentication procedure, and the second identification information includes one or more of the following: the terminal identifier of the terminal, the encrypted terminal identifier, the terminal application identifier, the terminal network identifier, and the operation requester identifier.

In a possible implementation, the fourth message further includes indication information, and the indication information indicates that the authentication procedure is any one of the following: one-way authentication, two-way authentication, one-way authentication performed by the terminal on the network or the operation requester, or one-way authentication performed by the network or the operation requester on the terminal.

In a possible implementation, the processing module is further configured to execute an authentication procedure on the terminal based on the first message. The first message includes third identification information and authentication information, the third identification information and the authentication information are used to execute the authentication procedure, and the third identification information includes one or more of the following: the terminal identifier of the terminal, the encrypted terminal identifier, the terminal application identifier, the terminal network identifier, and the operation requester identifier.

In a possible implementation, the processing module is further configured to determine, based on the third identification information included in the first message, the operation requester to which the terminal belongs. The third identification information includes one or more of the following: the terminal identifier of the terminal, the encrypted terminal identifier, the terminal application identifier, the terminal network identifier, and the operation requester identifier.

In a possible implementation, the processing module is specifically configured to determine, based on the third identification information and a first correspondence, the operation requester to which the terminal belongs. The first correspondence indicates that the terminal belongs to the operation requester. Optionally, the first correspondence includes a correspondence between the application identifier (the terminal identifier or the network identifier) of the terminal and the operation requester identifier. The operation requester identifier is an identifier of the operation requester.

In a possible implementation, the processing module is specifically configured to determine a second correspondence based on an operation instruction from the operation requester, where the second correspondence indicates that the terminal belongs to the operation requester; and determine, based on the third identification information and the second correspondence, the operation requester to which the terminal belongs. The operation instruction may include a first identifier of the terminal. The first identifier is any one of the following: the terminal identifier of the terminal, the encrypted terminal identifier, the terminal application identifier, or the terminal network identifier.

In a possible implementation, the transceiver module is further configured to: receive a fifth message; and send a sixth message to the terminal. The fifth message indicates that the authentication procedure succeeds, and the sixth message indicates to accept the access of the terminal to the network; or the fifth message indicates that the authentication procedure fails, and the sixth message indicates to reject the access of the terminal to the network.

In a possible implementation, the processing module is further configured to obtain the quantity information and/or the first identification information.

In a possible implementation, the processing module is further configured to count the quantity of terminals accessing the network among the terminals corresponding to the operation requester.

In a possible implementation, the processing module is specifically configured to: after the terminal passes the authentication, update, based on the first identification information and a third correspondence, the quantity of terminals accessing the network among the terminals corresponding to the operation requester. The third correspondence includes one or more correspondences between one or more of the following: the terminal identifier of the terminal, the encrypted terminal identifier, the terminal application identifier, the terminal network identifier, and the operation requester identifier.

For technical effects brought by the possible implementations of the fifth aspect, refer to the descriptions of the technical effects of the first aspect or the possible implementations of the first aspect.

According to a sixth aspect, an embodiment of this application provides a communication apparatus. The communication apparatus has a function of implementing behavior in the method embodiment in the first aspect. The function may be implemented by hardware, or may be implemented by hardware executing corresponding software. The hardware or software includes one or more modules or units that correspond to the foregoing function. In a possible implementation, the apparatus includes a transceiver module and a processing module. The transceiver module is configured to obtain quantity information. The quantity information indicates a quantity of terminals that the operation requester is allowed to use. The processing module is configured to obtain one or more terminal application identifiers based on the quantity information.

In a possible implementation, the transceiver module is further configured to send an operation instruction. The operation instruction includes a first application identifier, the first application identifier is included in the one or more terminal application identifiers, and the operation instruction is used to perform an operation on a terminal corresponding to the first application identifier.

In a possible implementation, the transceiver module is further configured to obtain network identification information. The network identification information includes one or more terminal network identifiers.

In a possible implementation, the transceiver module is further configured to send the one or more terminal application identifiers and/or an operation requester identifier to a first core network device.

For technical effects brought by the possible implementations of the sixth aspect, refer to the descriptions of the technical effects of the second aspect or the possible implementations of the second aspect.

According to a seventh aspect, an embodiment of this application provides a communication apparatus. The communication apparatus has a function of implementing behavior in the method embodiment in the third aspect. The function may be implemented by hardware, or may be implemented by hardware executing corresponding software. The hardware or software includes one or more modules or units that correspond to the foregoing function. In a possible implementation, the communication apparatus includes a transceiver module. The transceiver module is configured to: obtain one or more terminal application identifiers; and send an operation instruction. The operation instruction includes a first application identifier, the first application identifier is included in the one or more terminal application identifiers, and the operation instruction is used to perform an operation on a terminal corresponding to the first application identifier.

In a possible implementation, the transceiver module is specifically configured to receive the one or more terminal application identifiers from a first core network device.

In a possible implementation, the transceiver module is further configured to obtain quantity information. The quantity information indicates a quantity of terminals that an operation requester is allowed to use.

For technical effects brought by the possible implementations of the seventh aspect, refer to the descriptions of the technical effects of the third aspect or the possible implementations of the third aspect.

According to an eighth aspect, an embodiment of this application provides a communication apparatus. The communication apparatus has a function of implementing behavior in the method embodiment in the fourth aspect. The function may be implemented by hardware, or may be implemented by hardware executing corresponding software. The hardware or software includes one or more modules or units that correspond to the foregoing function. In a possible implementation, the communication apparatus includes a transceiver module. The transceiver module is configured to: obtain quantity information, where the quantity information indicates a quantity of terminals that an operation requester is allowed to use; and send the quantity information and/or first identification information to a first core network device, where the first identification information includes one or more of the following: a terminal identifier of a terminal, an encrypted terminal identifier, a terminal application identifier, a terminal network identifier, and an operation requester identifier. The operation requester identifier is an identifier of the operation requester, and the terminal belongs to the operation requester.

In a possible implementation, the communication apparatus further includes a processing module, configured to configure the quantity of terminals that the operation requester is allowed to use.

In a possible implementation, the processing module is specifically configured to obtain (for example, allocate) the terminal network identifier of the terminal based on the quantity information.

In a possible implementation, the transceiver module is further configured to send the terminal network identifier of the terminal to the operation requester.

In a possible implementation, the transceiver module is further configured to receive one or more terminal application identifiers from the operation requester. The one or more terminal application identifiers include the terminal application identifier of the terminal.

In a possible implementation, the processing module is further configured to configure the one or more terminal application identifiers.

In a possible implementation, the transceiver module is further configured to obtain a seventh message. The seventh message includes the quantity information and fourth identification information, and the fourth identification information includes one or more of the following: the terminal identifier of the terminal, the encrypted terminal identifier, the terminal application identifier, the terminal network identifier, and the operation requester identifier.

In a possible implementation, the transceiver module is further configured to send the application identifier of the terminal and/or the quantity information to the operation requester.

In a possible implementation, the transceiver module is further configured to receive a fourth message from the first core network device. The fourth message is used to request to execute an authentication procedure on the terminal, the fourth message includes second identification information and authentication information, and the second identification information includes one or more of the following: the terminal identifier of the terminal, the encrypted terminal identifier, the terminal application identifier, the terminal network identifier, and the operation requester identifier. The processing module is further configured to execute the authentication procedure on the terminal based on the fourth message.

In a possible implementation, the fourth message further includes indication information, and the indication information indicates that the authentication procedure is any one of the following: one-way authentication, two-way authentication, one-way authentication performed by the terminal on a network or the operation requester, or one-way authentication performed by a network or the operation requester on the terminal. The processing module is specifically configured to determine a type of the authentication procedure based on the indication information.

In a possible implementation, the second identification information includes the operation requester identifier, and does not include the terminal identifier of the terminal, the encrypted terminal identifier, the terminal application identifier, and the terminal network identifier. The processing module is further configured to allocate the terminal network identifier to the terminal when the terminal passes the authentication.

In a possible implementation, the processing module is further configured to count a quantity of terminals accessing the network among terminals corresponding to the operation requester.

In a possible implementation, the processing module is specifically configured to: after the terminal passes the authentication, update, through the second core network device based on the first identification information and a third correspondence, the quantity of terminals accessing the network among the terminals corresponding to the operation requester. The third correspondence includes one or more correspondences between one or more of the following: the terminal identifier of the terminal, the encrypted terminal identifier, the terminal application identifier, the terminal network identifier, and the operation requester identifier.

In a possible implementation, the transceiver module is further configured to notify the first core network device of the quantity of terminals accessing the network among the terminals corresponding to the operation requester. For example, the transceiver module sends a notification message to the first core network device. The notification message includes the quantity of terminals accessing the network among the terminals corresponding to the operation requester.

In a possible implementation, the terminal is a tag. The processing module is further configured to update or delete identification information of an invalidated tag. The identification information of the invalidated tag includes one or more of the following information: a terminal application identifier of the invalidated tag, a terminal network identifier, a terminal identifier, an encrypted terminal identifier, and a third correspondence, and the third correspondence includes a correspondence between two or more of the following: the terminal application identifier of the invalidated tag, the terminal network identifier, the terminal identifier, and the encrypted terminal identifier.

In a possible implementation, the transceiver module is further configured to receive a tag message from the operation requester. That the second core network device updates or deletes identification information of an invalidated tag includes: The second core network device updates or deletes the identification information of the invalidated tag based on the tag information.

For technical effects brought by the possible implementations of the eighth aspect, refer to the descriptions of the technical effects of the fourth aspect or the possible implementations of the fourth aspect.

According to a ninth aspect, this application provides a communication apparatus. The communication apparatus includes a processor. The processor may be configured to execute computer-executable instructions stored in a memory, to enable the method in any one of the first aspect or the possible implementations of the first aspect to be performed, the method in any one of the second aspect or the possible implementations of the second aspect to be performed, the method in any one of the third aspect or the possible implementations of the third aspect to be performed, or the method in any one of the fourth aspect or the possible implementations of the fourth aspect to be performed.

In this embodiment of this application, in a process of performing the foregoing method, a process of sending information in the foregoing method may be understood as a process of outputting information based on an instruction of the processor. When the information is output, the processor outputs the information to a transceiver, so that the transceiver transmits the information. After the information is output by the processor, the information may further require other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect. In a possible implementation, the memory is located outside the communication apparatus. In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a tenth aspect, this application provides a data processing apparatus. The data processing apparatus includes a processing circuit and an interface circuit. The interface circuit is configured to obtain data or output data. The processing circuit is configured to perform the corresponding method in any one of the first aspect or the possible implementations of the first aspect, the processing circuit is configured to perform the corresponding method in any one of the second aspect or the possible implementations of the second aspect, the processing circuit is configured to perform the corresponding method in any one of the third aspect or the possible implementations of the third aspect, or the processing circuit is configured to perform the corresponding method in any one of the fourth aspect or the possible implementations of the fourth aspect.

According to an eleventh aspect, this application provides a computer-readable storage medium. The computer-readable storage medium is configured to store a computer program. When the computer program is run on a computer, the method in any one of the first aspect or the possible implementations of the first aspect is enabled to be performed, the method in any one of the second aspect or the possible implementations of the second aspect is enabled to be performed, the method in any one of the third aspect or the possible implementations of the third aspect is enabled to be performed, or the method in any one of the fourth aspect or the possible implementations of the fourth aspect is enabled to be performed.

According to a twelfth aspect, this application provides a computer program product. The computer program product includes a computer program or computer code. When the computer program product runs on a computer, the method in any one of the first aspect or the possible implementations of the first aspect is enabled to be performed, the method in any one of the second aspect or the possible implementations of the second aspect is enabled to be performed, the method in any one of the third aspect or the possible implementations of the third aspect is enabled to be performed, or the method in any one of the fourth aspect or the possible implementations of the fourth aspect is enabled to be performed.

According to a thirteenth aspect, this application provides a communication system, including one or more of the following: the first core network device in any one of the fifth aspect or the possible implementations of the fifth aspect, the operation requester in the sixth aspect or the seventh aspect, and the second core network device in any one of the eighth aspect or the possible implementations of the eighth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a service flow in passive internet of things;
FIG. 2A, FIG. 2B, and FIG. 2C are respectively diagrams of three architectures in which a 3GPP network supports P-IoT;
FIG. 3 shows an example of a registration procedure of UE according to an embodiment of this application;
FIG. 4A and FIG. 4B show an example of several manners of allocating an application identifier of a terminal according to an embodiment of this application;
FIG. 5 is a flowchart of a terminal management method according to an embodiment of this application;
FIG. 6A is a flowchart of another terminal management method according to an embodiment of this application;
FIG. 6B is a flowchart of another terminal management method according to an embodiment of this application;
FIG. 7 is a flowchart of another terminal management method according to an embodiment of this application;
FIG. 8A to FIG. 8C are a flowchart of another terminal management method according to an embodiment of this application;
FIG. 9A to FIG. 9C are a flowchart of another terminal management method according to an embodiment of this application;
FIG. 10A to FIG. 10C are a flowchart of another terminal management method according to an embodiment of this application;
FIG. 11A to FIG. 11D are a flowchart of another terminal management method according to an embodiment of this application;
FIG. 12 is a diagram of a structure of a communication apparatus 1200;
FIG. 13 is a diagram of a structure of another communication apparatus 130 according to an embodiment of this application; and
FIG. 14 is a diagram of a structure of another communication apparatus 140 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in the specification means that specific features, structures, or characteristics described in combination with the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiment described in the specification may be combined with another embodiment.

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should be further understood that the term "and/or" used in this application refers to and includes any or all possible combinations of one or more of the listed items. For example, "A and/or B" may represent three cases: Only A exists, only B exists, and both A and B exist, where A and B may be singular or plural. The term "at least one" used in this application means one or more, and the term "a plurality of" means two or more. "At least one item (piece) of the following" or a similar expression thereof indicates any combination of these items, including a singular item (piece) or any combination of plural items (pieces). For example, at least one item (piece) of a, b, and c may indicate a, b, c, a and b, a and c, b and c, or a, b, and c. Each of a, b, and c may be in a singular form or a plural form.

The following first describes terms and technical features in embodiments of this application.

### Passive internet of things (P-IoT)

A part of network nodes in the passive internet of things may be passive, and may be powered by energy harvesting from solar energy, radio frequency, wind energy, water energy, tidal energy, or the like. An energy harvesting manner is not limited. These nodes are not equipped with or do not depend on power supply devices such as batteries, but perform energy harvesting from an ambient environment, to support data sensing, transmission, and distributed computing. These nodes may further store the harvested energy. A passive internet of things architecture may include a passive terminal, a reader (reader), and an operation requester. The passive terminal may be in a tag form (for example, an electronic tag), or may be in any other terminal form. This is not limited in this application. The reader (reader) may read and write an electronic tag or a radio frequency card (Tag) by using a radio frequency manner, to identify a target and exchange data. The reader works in two manners: One is that when a tag enters an effective identification range of the reader, the tag receives a radio frequency signal sent by the reader, and sends, by using energy harvested from an induction current, information (corresponding to a passive tag) stored in a chip. The other is that a tag (which may be referred to as a semi-passive or semi-active tag) may store a part of electric energy from solar energy or the like, so that the tag can actively send a signal of a specific frequency or use the stored electric energy to perform an operation such as communication, data reading, or data writing, and the reader receives information and sends, to a central information system for related data processing, information obtained through decoding. In this application, the tag may be an electronic tag, or may be a passive or semi-passive internet of things tag (for example, a non-electronic tag used for embedding or attaching to an item). In this application, an example of the terminal is a tag. In this application, the reader may be an access network device. The access network device includes a base station, a pole station, a micro base station, a radio access network device, a radio access network node, an integrated access and backhaul node, and the like. This is not limited in this application. In this application, the operation requester may be a server (server), a passive internet of things server (P-IoT server), an application function (application function, AF), a passive internet of things application function (P-IoT AF), or another device that sends an operation instruction.

The passive internet of things may also be referred to as ambient energy harvesting internet of things (ambient IoT or ambient power-enabled IoT, A-IoT). An internet of things terminal in the passive internet of things or the ambient energy harvesting internet of things may include a passive terminal, a semi-passive terminal, a semi-active terminal, or an active terminal. In a possible implementation, the passive terminal, the semi-passive terminal, or the semi-active terminal may perform communication by using a communication manner in which a carrier wave is reflected. For example, the radio frequency signal sent by the reader is received, and the information stored in the chip is sent by using the energy harvested from the induction current. Optionally, the semi-passive terminal or the semi-active terminal may have a capacitor for storing energy (for example, solar energy or wireless radio frequency energy) harvested from an ambient environment. An energy harvesting manner is not limited. The energy may be used for calculation, communication, data reading, data storage, and the like. In another possible implementation, the semi-active terminal or the active terminal may actively generate a carrier for communication. For example, the part of electric energy may be stored from solar energy or the like, so that the signal of the specific frequency can be actively sent, or the stored electric energy can be used to perform the operation such as communication, data reading, or data writing.

This technology is widely applied to various industries. The following simply describes two application scenarios.

Warehouse/Transportation/Materials: Passive or semi-passive tags are embedded or attached to goods. During a logistics process of goods stored in a warehouse or a shopping mall, goods-related information is automatically collected by the reader through internet of things tags. In this way, management personnel can quickly query goods information in a system, to reduce a risk of goods being lost or stolen. This can improve a goods handover speed, improve accuracy, prevent unauthorized sales, and achieve anti-counterfeiting.

Fixed asset management: For places with huge assets or valuable items, such as a library, an art museum, and a museum, complete management procedures or strict protection measures are required. When storage information of books or valuables changes abnormally, an administrator is notified in time to handle the relevant situation.

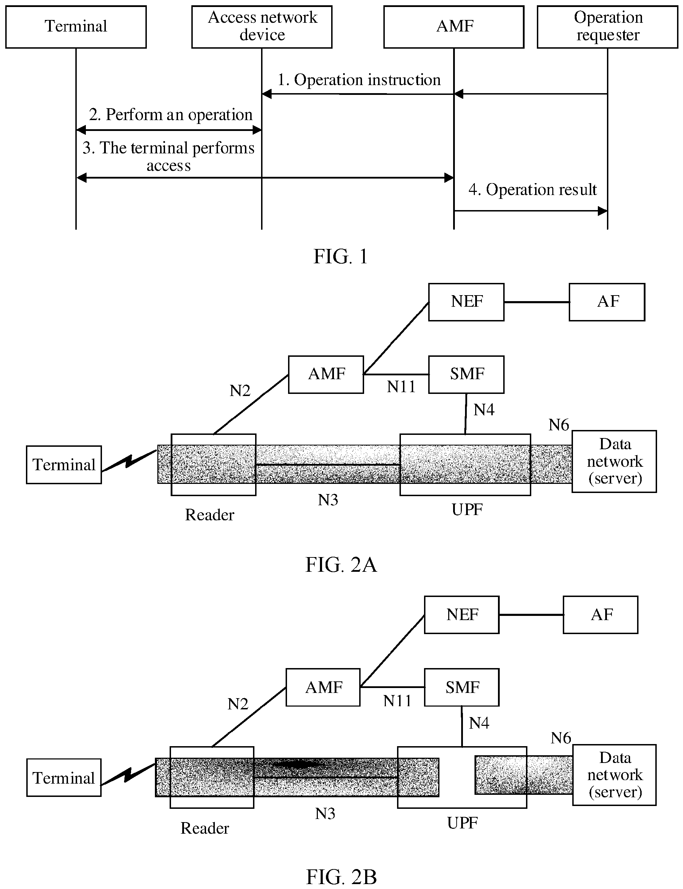

FIG. 1 is a diagram of a service flow in passive internet of things. FIG. 1 shows the following operations: 1. An operation requester sends an operation instruction to an access network device through an AMF. 2. A terminal performs an operation. After receiving the operation instruction from a mobility management device, the access network device sends the operation instruction to the terminal. The terminal obtains or sends corresponding information based on the operation instruction, in other words, performs the corresponding operation based on the operation instruction. 3. The terminal accesses a core network. 4. The terminal sends an operation result to the operation requester through a core network device (for example, the AMF shown in FIG. 1). The operation result is obtained by the terminal by performing the corresponding operation based on the operation instruction.

As shown in FIG. 1, when the operation requester requests to perform an operation on the terminal, the operation requester may send the operation instruction to the terminal through the core network device (for example, the access and mobility management function (access and mobility management function, AMF) device) or the access network device. The operation instruction may include but is not limited to performing an operation of obtaining tag information, an inventory operation (or referred to as a stocktaking operation), a read operation, a write operation, an invalidation operation, or an operation of performing information exchange with a tag. The AMF device is an example of the mobility management device. The operation instruction may include area location information, identification information of the terminal, and the like. After receiving the operation instruction, the access network device sends the operation instruction to the terminal. The terminal obtains or sends the corresponding information based on the operation instruction. For example, when the operation instruction is an inventory instruction or an instruction instructs to perform the inventory, the terminal sends the identification information of the terminal. For another example, when the operation instruction is a read instruction or an instruction instructs to perform the read operation, the terminal sends data information stored in a storage area of the terminal. For another example, when the operation instruction is a write instruction or an instruction instructs to perform the write operation, the terminal stores, in a storage area of the terminal, data information that is to be written into the terminal and that is included in the operation instruction. The access network device receives the information sent by the terminal, and sends the information to the operation requester through the core network device. A manner in which the operation requester sends the instruction to the access network device may be sending through a control plane channel. For example, the operation requester sends the instruction to the access network device through a control plane device. The control plane device may include a mobility management device, a network exposure function device, a session management device, a policy control device, a unified data management device, a unified data repository, an internet of things management device (for example, may be referred to as a tag management function (tag management function, TMF) network element, a passive internet of things management function (passive IoT management function, PIMF) network element, an ambient energy harvesting internet of things management function (ambient IoT management function, AIMF) network element, or a device having an internet of things terminal management function or an internet of things service processing function), and the like. A name of the control plane device is not limited in this application. In FIG. 1, an example in which the control plane device is a mobility management device is used. As shown in FIG. 1, the operation requester sends the instruction to the AMF. In this case, the operation requester may be understood as an application function (application function, AF), a server, a passive internet of things application function (P-IoT AF), or a passive internet of things server. In a possible implementation, P-IoT AF sends the instruction to the AMF. In another possible implementation, P-IoT AF sends the instruction to the AMF through the control plane device. The control plane device may be a network exposure function device (network exposure function, NEF), a session management device (session management function, SMF), a policy control device (policy control function, PCF), a unified data management device (unified data management, UDM), or a unified data repository (unified data repository, UDR). In addition, the operation requester may alternatively send the instruction to the access network device through a user plane channel. In a possible implementation, the operation requester sends the instruction to the reader through a user plane device (user plane function, UPF). In another possible implementation, the operation requester sends the instruction to the reader through a user plane device and another access network device, for example, a radio access network (radio access network, RAN) device. In this case, the reader may be a pole station, an integrated access and backhaul (integrated access and backhaul, IAB) node, a terminal device, or the like.

### Terminal operation

The operation requester may perform different terminal operations on the terminal. The following describes several common terminal operations.

An inventory operation (which may also be referred to as a stocktaking operation) is to perform inventory on a currently existing terminal, or may be understood as obtaining identification information of the terminal. Each terminal has an identifier. The identifier of the terminal may be allocated by an enterprise or a third-party entity (that is, written into the terminal when the enterprise produces or manufactures the terminal), or may be allocated by an operator. In a possible implementation, the identifier of the terminal may be a globally unique code, for example, an electronic product code (electronic product code, EPC), or may be a temporary identifier or a non-globally unique identifier. In a procedure of performing inventory, the operation requester may deliver an inventory instruction to the reader. Usually, the inventory instruction includes information such as an identification range of the terminal, an identifier of the reader, and location information. After receiving the inventory instruction, the reader performs inventory on the corresponding terminal based on the inventory instruction, and sends the identification information of the terminal to the operation requester. Alternatively, the operation requester sends the instruction to the reader, and the reader sends the instruction to the corresponding terminal. The terminal learns, based on content of the instruction, that the operation is the inventory operation, and the terminal sends the identification information of the terminal to the reader. The reader sends the identification information of the terminal to the operation requester.

A read operation is to read data from the terminal. The terminal may have a storage function, and a storage area of the terminal may store data. If the operation requester is intended to perform the read operation on the terminal, the operation requester sends a read instruction to the reader, and the reader performs the read operation on the terminal based on the read instruction, reads data from the storage area of the terminal, and sends the data to the operation requester.

A write operation is to write data to the terminal. The operation requester may send a write instruction to the reader, and the reader performs the write operation on the terminal based on the instruction, and writes data into a storage area of the terminal.

An invalidation operation can invalidate a terminal. The operation requester may send an invalidation instruction to the reader. The invalidation instruction may include a terminal identifier (that is, an identifier of the terminal that is expected to be invalidated). The reader performs the invalidation operation on the terminal based on the instruction. After the operation is completed, the terminal is invalidated. As a result, the inventory or another operation cannot be performed on the terminal. In this application, an example of the terminal is a tag. For example, the invalidation operation can invalidate the tag, and the invalidation instruction may include a tag identifier (that is, an identifier of the tag that is expected to be invalidated).

Obtaining tag information may be understood as a generic description of the foregoing operations (for example, a generic description of the inventory operation and the read operation), and does not distinguish whether the operation requester performs inventory on the terminal or reads data from the terminal. The operation obtains terminal information. The terminal information may be the identification information of the terminal or information stored in the storage area of the terminal.

An operation of performing message exchange with the terminal may be understood as a generic description of the foregoing operations. After receiving an instruction sent by the operation requester, the reader performs information or message exchange with the terminal, and sends information from the terminal to the operation requester. The operation is mainly for a case in which the reader does not view content of the instruction, and is only responsible for forwarding, to the terminal, a message sent by the operation requester and forwarding, to the operation requester, a message sent by the terminal. Therefore, in this scenario, the operation performed by the reader on the terminal may be understood as the operation of performing message exchange with the terminal.

Several possible architectures of the passive internet of things

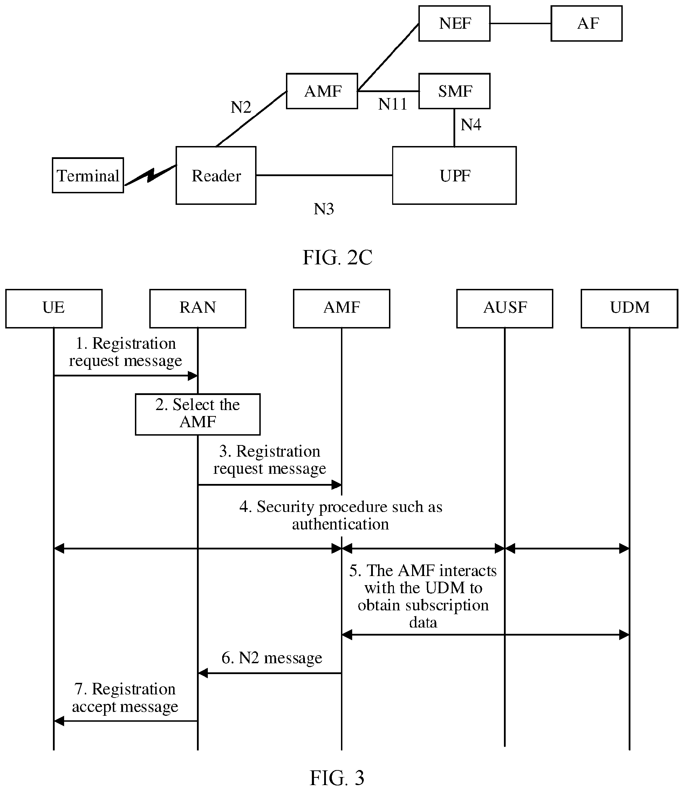

When a 3rd generation partnership project (the 3rd generation partnership project, 3GPP) network supports the passive internet of things, transmission of a passive internet of things instruction needs to be supported. FIG. 2A, FIG. 2B, and FIG. 2C are respectively diagrams of three architectures in which the 3GPP network supports P-IoT. FIG. 2A is a diagram of an architecture of a technical path 1 in which the 3GPP network supports P-IoT. FIG. 2B is a diagram of an architecture of a technical path 2 in which the 3GPP network supports P-IoT. FIG. 2C is a diagram of an architecture of a technical path 3 in which the 3GPP network supports P-IoT.

For the technical path 1, an instruction transmission manner may be transmission through a user plane connection. In FIG. 2A, a slashed area indicates the user plane connection or a user plane channel, and N2, N3, N4, N6, and N11 all represent interfaces. For example, a RAN communicates with a UPF through an N3 interface, or it may be understood that a RAN establishes an N3 tunnel with a UPF. For another example, an interface between the UPF and a data network is N6. In a possible implementation, a reader establishes the user plane connection, and an operation requester (for example, a server) sends an instruction to the reader through the user plane connection. The reader may be a terminal device, or may be a radio access network device, a base station, a micro base station, an integrated access and backhaul (integrated access and backhaul, IAB), a pole station, or the like. FIG. 2A illustrates an example in which the reader is an access network device.

For the technical path 2, an instruction transmission manner may still be transmission through a user plane connection. In FIG. 2B, slashed areas indicate the user plane connection or user plane channels. In FIG. 2B, N2, N3, N4, N6, and N11 all represent interfaces. For example, a RAN communicates with a UPF through an N3 interface, or it may be understood that a RAN establishes an N3 tunnel with a UPF. For another example, an interface between the UPF and a data network is N6. A difference from the technical path 1 lies in that a reader establishes the user plane connection with a user plane device, and the user plane device establishes a connection with an operation requester (for example, a server). That is, the reader does not establish a session at a data network granularity. For example, it is assumed that a server 1 is located in a data network (data network, DN) 1, and a server 2 is located in a data network 2. It is assumed that, in the technical path 1, the reader needs to establish two sessions to connect to the data network 1 and the data network 2 respectively. It is assumed that, in the technical path 2, the reader only needs to establish one user plane connection with the same user plane device, and the user plane device establishes connections with the server 1 and the server 2 respectively. An advantage of the technical path 2 is that, when a server needs to send an instruction to a plurality of access network devices, and a plurality of readers are all served by a same user plane device, in the technical path 1, the server needs to send a plurality of instructions to the user plane device; but in the technical path 2, the server needs to send only one instruction to the user plane device, and the user plane device separately sends the instruction to the plurality of readers. In the technical path 2, the reader may be a terminal device, or may be a radio access network device, a base station, a micro base station, an integrated access and backhaul (integrated access and backhaul, IAB), a pole station, or the like. FIG. 2B illustrates an example in which the reader is an access network device.

For the technical path 3, an instruction transmission manner may be transmission through a control plane channel, in other words, a server (or an application function) sends an instruction to an AMF through a NEF. In FIG. 2C, N2, N3, N4, and N11 all represent interfaces. For example, a RAN communicates with a UPF through an N3 interface, or it may be understood that a RAN establishes an N3 tunnel with a UPF. The AMF sends the instruction to an access network device. After completing information exchange with a terminal, the access network device sends information (for example, information from the terminal) to the AMF. The AMF sends the information to the server through the NEF. FIG. 2C illustrates an example in which a reader is an access network device. When a reader is a terminal device, in the technical path 3, the instruction transmission manner may be that the server (or the application function) sends the instruction to the AMF through the NEF. The AMF sends the instruction to the reader through an access network device.

Operation mode in which the 3GPP network supports the passive internet of things.

The passive internet of things that is supported by the 3GPP network and that is established by an operator may have the following business models.
(1). The operator establishes an independent network for an enterprise. The network supports the passive internet of things. The operator makes profits by charging the enterprise for site deployment.
(2). The operator may establish an independent network or a non-independent network for an enterprise. The network supports the passive internet of things. The operator charges the enterprise by using a contract or a package. For example, the operator may sign a contract with the enterprise, allowing the enterprise to use 10,000 terminals (for example, tags) at CNY 100 per month.
(3). The operator may have another business model, and the business model of the operator is not limited in this application. Except for the business model (1) in which the operator does not need to obtain a terminal use status of the enterprise, for another case in which the operator needs to obtain the terminal use status of the enterprise or the operator needs to perform management, access authentication, accounting, and the like on a terminal, the operator needs to obtain identification information of the terminal, thereby performing terminal management.

### Terminal registration procedure

In this application, a terminal may be referred to as a terminal device or user equipment (user equipment, UE), and subsequently, UE is used to represent a terminal. FIG. 3 is an example of a registration procedure of UE according to an embodiment of this application. As shown in FIG. 3, a possible UE registration procedure is as follows.
1. The UE sends a registration request message to a RAN.

The registration request message may include a registration type (registration type) and identification information of the UE. The identification information of the UE may include one or more of the following: a subscription concealed identifier (subscription concealed identifier, SUCI), a globally unique temporary UE identity (5G globally unique temporary UE identity, 5G-GUTI), or a permanent equipment identifier (permanent equipment identifier, PEI).

The registration types are as follows.

Initial registration (initial registration) is a registration procedure initiated when the UE is in a deregistered state.

Mobility registration update (mobility registration update) is a registration procedure that needs to be initiated due to mobility of the UE.

Periodic registration update (periodic registration update) is a registration procedure initiated when the UE is in a registered state. The registration procedure is initiated because a periodic registration update timer expires.

Emergency registration (emergency registration) is a registration procedure initiated when the UE is in a service-limited state.

For the identification information of the UE, if the UE has a valid 5G-GUTI (a temporary identity allocated by an AMF serving the UE), the 5G-GUTI is carried in a registration request; and if the UE does not have a valid 5G-GUTI, the SUCI is carried. During the emergency registration, if the UE does not have a valid 5G-GUTI and an SUPI (that is, does not have an SUCI, where the SUCI is a concealed SUPI), the PEI is carried.

2. The RAN selects the AMF.

3. The RAN sends, to the AMF, the registration request message sent by the UE.

4. The AMF selects an appropriate AUSF to execute a security procedure such as authentication. The UE, the AMF, the AUSF, and a UDM interact with each other, to complete the security procedure such as authentication.

5. After mutual authentication between the UE and a network side succeeds, the AMF interacts with the UDM to obtain subscription data of the UE.

6. The AMF sends an N2 message to the RAN.

The N2 message may include a NAS message that needs to be forwarded by the RAN to the UE. The NAS message may include a registration accept message (NAS message) sent by the AMF to the UE.

7. The RAN forwards the registration accept message sent by the AMF to the UE.

When performing a terminal operation, an operation requester needs to use an identifier of a terminal to identify the terminal, so that the terminal on which the operation is performed knows whether an instruction corresponds to the terminal. Therefore, the operation requester needs to use one terminal identifier to identify a terminal. In this application, an identifier of a terminal identified by the operation requester is referred to as a terminal application identifier (or referred to as an application identifier of the terminal). The 3GPP network supports the passive internet of things. If the 3GPP network needs to perform access authentication, management, accounting, or the like on the terminal, the 3GPP network also needs to obtain identification information of the terminal. In this application, identification information of a terminal identified by a network may be referred to as a terminal network identifier (or referred to as a network identifier of the terminal). In a possible implementation, an application identifier and a network identifier that are of a same terminal may be the same, or may be different. In a possible implementation, an enterprise (or an operator) allocates an application identifier and/or a network identifier of a terminal. Because an enterprise may have a security and privacy requirement, and does not expect a network to obtain an application identifier of a terminal, a possible implementation is that the application identifier of the terminal is different from a network identifier of the terminal, the application identifier of the terminal is allocated by the enterprise, and the network identifier of the terminal is allocated by an operator. If the operator needs to obtain identification information of the terminal to perform terminal management, how the operator prevents the enterprise from embezzling a tag (where, for example, if different terminals use a same network identifier to access the network, it is clear that only 10,000 tags can be used each month, but the enterprise can use more than the 10,000 tags) also needs to be considered and resolved. In this application, an entity corresponding to the enterprise is a device, for example, a server or an application function, that provides a service for the enterprise; and an entity corresponding to the operator is a device, for example, a business and operation support system (business & operation support system, BOSS), a server, or a core network device, that provides a service for the operator. It may be understood that, that the enterprise allocates the application identifier and/or the network identifier of the terminal means that the operation requester (for example, a server or an application function) allocates the application identifier and/or the network identifier of the terminal; and that the operator allocates the application identifier and/or the network identifier of the terminal means that the operator allocates the application identifier and/or the network identifier of the terminal through a corresponding device (for example, a server, a business and operation support system, or a core network device).

In this application, the enterprise may be understood as a third party, an application party, a service provider, a core network, a network, or an entity other than a mobile network.

Because the operation requester and the terminal need to communicate with each other through a core network device, a solution of how to perform access management on the terminal needs to be studied. Examples of problems involved in the access management performed on the terminal are as follows: 1. How to properly allocate an identifier of the terminal, for example, how to allocate the network identifier and/or the application identifier of the terminal. 2. Who allocates the network identifier and/or the application identifier of the terminal. 3. How to prevent the identifier of the terminal from embezzlement. 4. How to authenticate and authorize the terminal. 5. Who writes the identifier of the terminal.

This application provides several possible solutions for how to allocate the identifier of the terminal.

Solution 1: The operator pre-configures the application identifier of the terminal.

The operator allocates the application identifier of the terminal (which is similar to that an operator allocates a mobile number). In this application, the operator may be replaced with a network, an operation system, a server, or a core network device. Alternatively, the operation requester allocates the application identifier of the terminal and notifies the operator. The operator writes the identifier into the terminal (which is similar to that an operator programs a card and issues a card), or the operator authorizes the enterprise to write the identifier into the terminal. A security parameter (or referred to as a security context) may be written when the identifier is written into the terminal. The security parameter may include but is not limited to a pre-configured key (which is, for example, used for identifier encryption and decryption or for a check operation) or a hash parameter (which is, for example, used for authentication); and the network authenticates the application identifier of the terminal (for example, authenticates a random number and a hashed check value (an AUTH value)). In this application, the network may be a core network and/or an access network. An authentication procedure is executed by writing the security parameter into the terminal. The terminal may send the terminal identifier (or an encrypted terminal identifier), and the network records a correspondence between the application identifier of the terminal and the terminal identifier. An application identifier of one terminal corresponds to only one terminal identifier. In this way, a plurality of terminals are prevented from using a same identifier, that is, the identifier of the terminal is prevented from embezzlement. In a possible implementation, the terminal is a tag, the terminal identifier is a tag identifier (tag identifier, TID), and the encrypted terminal identifier is a concealed tag identifier (concealed tag identifier, CTID). The TID is a unique identifier of the tag. When the tag is produced, the TID and/or the CTID are/is written into a storage area of the tag, and then the storage area is set to be readable but not writable. The TID may be used to identify the tag itself, and may be different from an application identifier of the tag.

Solution 2: The enterprise or the operation requester allocates the application identifier of the terminal, and the operator does not pre-configure the application identifier of the terminal (that is, the operator does not pre-obtain the application identifier of the terminal).

The enterprise writes the identifier into the terminal, or the operator authorizes the enterprise to write the identifier into the terminal. In a possible implementation, the terminal is a tag, and writing the identifier into the terminal means writing identification information of the tag into the tag. A security parameter (or referred to as a security context) may be written when the identifier is written into the terminal. The terminal is authenticated by writing the security parameter when the identifier is written into the terminal. During registration of the terminal, the terminal identifier is sent, and the network records the terminal identifier and may monitor, based on the terminal identifier, a quantity of terminals used by the enterprise.

Solution 3: The enterprise or the operation requester allocates the application identifier of the terminal, and the operator allocates the network identifier of the terminal.

That the operator allocates the network identifier of the terminal may be authorizing the enterprise or the operation requester to write the network identifier of the terminal into the terminal. A security parameter (or referred to as a security context) may be written when the identifier is written into the terminal. The terminal is authenticated and authorized by writing the security parameter when the identifier is written into the terminal. During the registration of the terminal, the terminal identifier can be sent; and the network records the terminal identifier and monitors, based on the terminal identifier, a quantity of terminals used by the enterprise, to prevent the identifier of the terminal from embezzlement.

Solution 4: The enterprise or the operation requester allocates the application identifier of the terminal, and the operator allocates the network identifier of the terminal through online subscription.

In this application, the online subscription may mean that the terminal accesses the network by using a default credential, and after authentication, the network sends, to the terminal, subscription data or a credential used for subsequent network access (which may be understood as obtaining subscription data online). In a possible implementation, the terminal accesses the network by using an identifier or a credential at an enterprise granularity or an operation requester granularity or a default credential. After authentication succeeds, the network sends the network identifier to the terminal. Subsequently, the terminal accesses the network by using the obtained network identifier. A security parameter (or referred to as a security context) may be written into the terminal when the identifier is written into the terminal, and the network authenticates an identifier at an enterprise granularity (for example, authenticates an AUTH value obtained by performing an operation on a random number and a key). In this way, the network can authenticate the terminal.

When performing online subscription, the terminal needs to send an enterprise identifier or a default identifier, and the network allocates the network identifier based on the enterprise identifier or the default identifier. The default identifier may be any identifier negotiated or agreed by the terminal and the network. During the registration of the terminal, the network identifier needs to be sent, and the network records the network identifier. The network records or monitors, based on the network identifier, a quantity of terminals used by the enterprise (or the operation requester), to prevent the quantity of terminals used by the enterprise (or the operation requester) from exceeding an allowed quantity (that is, a quantity threshold). An example in which the network records or monitors, based on the network identifier, the quantity of terminals used by the enterprise (or the operation requester) is as follows: A UDM or an AMF records or monitors, based on the network identifier, the quantity of terminals used by the enterprise (or the operation requester).

To resolve a problem of how to perform access management on the terminal, this application provides a terminal management method. According to the terminal management method provided in this application, the access management for the terminal can be implemented, and the identifier of the terminal is prevented from embezzlement. The terminal management method provided in this application is applicable to passive internet of things architectures shown in FIG. 2A to FIG. 2C, and is further applicable to another architecture for performing access management on a terminal. In this application, a 5G network is used as an example to describe this solution. It should be noted that the terminal management method provided in this application is also applicable to a 4G network, a 6G network, and the like.

For a system architecture of the 5G network, involved devices include core network devices such as an AMF, an AUSF, and a UDM, and a server such as an operation requester (to be specific, a server that delivers an instruction or an application function AF). The following describes devices involved in this application.

A mobility management network element is mainly configured to perform mobility management, access management, and the like, and may be configured to implement a function other than session management among functions of the mobility management network element (mobility management entity, MME), for example, a function such as lawful monitoring or access authorization/authentication. The mobility management network element (which may also be referred to as an access and mobility management device, an access and mobility management function entity, an access and mobility management function network element, a mobility management network element, or a mobility management entity) is a type of core network device. The mobility management device may be configured to manage access control and mobility for user equipment. An example of the mobility management device is an AMF network element in 5G. During actual application, the AMF network element includes an access and mobility management function of a mobility management entity (mobility management entity, MME) in a long term evolution (long term evolution, LTE) network framework, and an access management function is added. The AMF network element may be specifically responsible for user equipment registration, mobility management, a tracking area update procedure, reachability detection, selection of a session management network element, mobility state conversion management, and the like. For example, in 5G, the access and mobility management network element may be an AMF network element. In future communication, for example, in 6G, the access and mobility management network element may still be an AMF network element, or may have another name. This is not limited in this application. When the access and mobility management network element is an AMF network element, the AMF network element may provide an Namf service. For example, the AMF may provide an N1N2 message transmission service (Namf_Communication_N1N2MessageTransfer service), and another core network element may send an N1 message to a terminal device by using the AMF service or send an N2 message to an access network device by using the AMF service.

An internet of things management device is a device configured to manage an internet of things terminal or process an internet of things service. For example, a function of the internet of things management device may include one or more of the following functions: identifying a service instruction from an operation requester, indicating a reader to execute an access procedure (for example, a random access procedure) for the internet of things terminal, collecting and/or processing service data from the internet of things terminal, performing data routing on the internet of things service, and the like. The internet of things management device may be a TMF network element, a PIMF network element, an AIMF network element, or the like. A name of the internet of things management device is not limited in this application.

A user plane network element is used for packet routing and forwarding, handling of quality of service (quality of service, QoS) of user plane data, and the like. In a 5G communication system, the user plane network element may be a user plane function (user plane function, UPF) network element, and may include an intermediate user plane function (intermediate user plane function, I-UPF) network element and an anchor user plane function (PDU Session anchor user plane function, PSA-UPF) network element. In a future communication system, the user plane network element may still be a UPF network element, or may have another name. This is not limited in this application. The UPF network element (which may also be referred to as a user plane device) is a type of core network device. The UPF network element may be responsible for forwarding and receiving user data in user equipment. The UPF network element may receive user data from a data network, and transmit the user data to the user equipment through an access network element. The user plane function network element may alternatively receive user data from the user equipment through an access network element, and forward the user data to a data network. A transmission resource and a scheduling function that are used by the user plane function network element to provide a service for the user equipment are managed and controlled by a session management function network element.

A session management network element is mainly used for session management, internet protocol (internet protocol, IP) address allocation and management for a terminal device, selection of a termination that can manage a plane function interface and a policy control and charging function interface of the terminal device, downlink data notification, and the like. In a 5G communication system, the session management network element may be a session management function (session management function, SMF) network element, and may include an intermediate session management function (intermediate session management function, I-SMF) network element and an anchor session management function (anchor session management function, A-SMF) network element. In a future communication system, the session management network element may still be an SMF network element, or may have another name. This is not limited in this application. The SMF network element (which may also be referred to as a session management device) is a type of core network device. The SMF network element may be configured to be responsible for session management (including session establishment, modification, and release) for user equipment, selection and reselection of a user plane function network element, internet protocol (internet protocol, IP) address allocation for the user equipment, quality of service (quality of service, QoS) control, and the like. For example, in 5G, the session management network element may be a session management function (session management function, SMF) network element. In a future communication system, for example, in 6G, the session management network element may still be an SMF network element, or may have another name. This is not limited in this application. When the session management network element is an SMF network element, the SMF network element may provide an Nsmf service.

An authentication service network element is configured to perform service authentication, generate a key to implement two-way authentication for a terminal device, and support a unified authentication framework. In a 5G communication system, the authentication service network element may be an authentication service function (authentication server function, AUSF) network element. In a future communication system, the authentication service function network element may still be an AUSF network element, or may have another name. This is not limited in this application.

An application function network element may interact with a 5G system through an application function network element, and is configured to access a network exposure function network element, interact with a policy framework for policy control, or the like. In a 5G communication system, the application function network element may be an (application function, AF) network element. In a future communication system, the application function network element may still be an AF network element, or may have another name. This is not limited in this application.

A network exposure function network element is configured to provide a customized function of network exposure. In a 5G communication system, the network exposure function network element may be a network exposure function (network exposure function, NEF) network element. In a future communication system, the network exposure function network element may still be a NEF network element, or may have another name. This is not limited in this application. The 5G communication system may further expose, through the NEF network element to an external application function network element, a capability supported by a 5GC, for example, provide a small-data transfer capability. The NEF network element (which may also be referred to as a network exposure device) is a type of core network device. The network exposure network element may be configured to enable a 3GPP to securely provide a network service capability for an AF (for example, a services capability server (services capability server, SCS), an application server (application server, AS), or the like) of a third party. For example, in 5G, the network exposure network element may be a network exposure function (network exposure function, NEF) network element. In the future communication system, for example, in 6G, the network exposure network element may still be a NEF network element, or may have another name. This is not limited in this application. When the network exposure network element is a NEF network element, the NEF network element may provide an Nnef service for another network function network element.

A data management network element is used for handling an identifier of a terminal device, access authentication, registration, mobility management, and the like. In a 5G communication system, the data management network element may be a unified data management (unified data management, UDM) network element or a unified data repository (unified data repository, UDR) network element. In a future communication system, the unified data management may still be a UDM network element or a UDR network element, or may have another name. This is not limited in this application. The UDM network element or the UDR network element in this embodiment of this application may be a user database, and may exist as a single logical repository for storing user data. The UDM network element may also be referred to as a unified data management device, a data management device, or a unified data management entity. In the 5G communication system, the unified data management network element may be a UDM network element or a unified data management device. In the future communication system, the unified data management network element may still be a UDM network element, or may have another name. This is not limited in this embodiment of this application. The unified data management device may be a core network device. The unified data management device may be a control plane device. The UDR network element (which may also be referred to as a user database device or a user database entity) may be understood as a name of a unified data storage network element in a 5G architecture. The user database mainly includes the following functions: a function of accessing types of data such as subscription data, policy data, and application data.

User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network or a terminal device in a future evolved public land mobile communication network (public land mobile network, PLMN) or in a non-terrestrial network (non-terrestrial network, NTN), or the like, may be an end device, a logical entity, or an intelligent device, for example, a terminal device such as a mobile phone or an intelligent terminal, or may be a communication device such as a server, a gateway, a base station, or a controller, or an internet of things (internet of things, IoT) device such as a tag, a passive tag, an active tag, a semi-active tag, a semi-passive tag, a sensor, an electric meter, or a water meter. The UE may alternatively be an uncrewed aerial vehicle (unmanned aerial vehicle or uncrewed aerial vehicle, UAV) having a communication function. When the terminal is a passive, semi-passive, or semi-active terminal or tag, data may be received or sent through energy harvesting. The energy may be harvested from radio, solar energy, light energy, wind energy, water energy, heat energy, kinetic energy, and the like. A manner of obtaining the energy by the passive, semi-passive, or semi-active terminal is not limited in this application. This is not limited in embodiments of this application.

An operation requester may be understood as a device that sends an operation instruction. For example, the operation requester may be a server (server), a P-IoT server, an application function (application function, AF), or another device that sends an operation instruction. The operation requester may correspond to a specific type of user. The specific type of user includes an enterprise, a tenant, a third party, or a company, which is not limited. That the operation requester corresponds to a specific type of user may be understood as that the operation requester belongs to the specific type of user and is managed by the specific type of user.

An access network device interacts with a terminal (for example, a tag) by using a radio frequency signal or a radio signal. It should be understood that a name of the access network device is not limited in this application, and the access network device may also have another name. The access network device herein has a part or all of functions of a reader in this application, for example, has a function of performing an operation (for example, an operation of obtaining tag information, an inventory operation, a read operation, a write operation, an invalidation operation, or an operation of performing message exchange with a tag) described in this application on a terminal (for example, a tag), a function of obtaining charging-related information and/or charging information, a function of sending charging information to a charging function (charging function, CHF), and the like. In a possible implementation, the access network device may send an instruction from a server, an application function, or a core network device to a terminal (for example, a tag), or the access network device may send a message from a terminal (for example, a tag) to a server or an application function. In a possible implementation, the access network device may obtain, based on an instruction delivered by a server, information stored in a specified terminal (for example, a tag). For example, if an operation is an inventory operation (or may be referred to as a stock operation), the access network device obtains identification information of the terminal (for example, a tag). The identification information may be a unique identifier of the terminal, or may be a temporary identifier of the terminal. For example, if an operation is a read operation, the access network device reads data in a storage area of the terminal or sends data from a storage area of the terminal to a core network device. Optionally, in some scenarios in which information stored in a terminal needs to be rewritten, the access network device may have a write function. For example, if an operation is a write operation, the access network device writes data into a storage area of the terminal (for example, a tag), or forwards the instruction from the server, the application function, or the core network device, to the terminal (for example, a tag), and writes data into a storage area of the tag. In addition, the access network device may further perform an invalidation operation on the terminal (for example, a tag). After the invalidation operation is performed on the terminal (for example, a tag), the terminal (for example, the tag) is invalidated, and an operation such as an operation of obtaining tag information, an inventory operation, a read operation, an operation of performing message exchange with the terminal, or a write operation cannot be performed on the terminal (for example, a tag). In a possible implementation, that the terminal is invalidated and an operation of obtaining tag information cannot be performed may be understood as that the access network device cannot obtain the tag information of the invalidated terminal after the terminal is invalidated. In another possible implementation, that the terminal is invalidated and an operation of performing message exchange with the terminal cannot be performed may be understood as that the access network device cannot perform message exchange with the invalidated terminal after the terminal is invalidated. In this application, the access network device may be a pole site, an eNodeB, a gNodeB, an integrated access and backhaul (integrated access and backhaul, IAB) node, or the like. A form of the access network device is not limited in this application. In this application, the reader may be an access network device, or may be a terminal device. A form of the reader is not limited in this application.

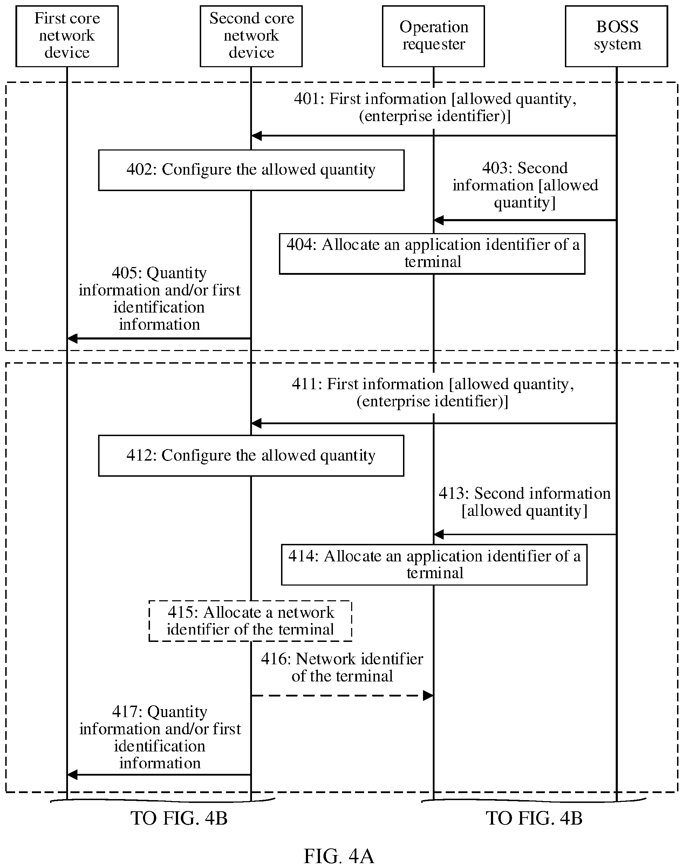

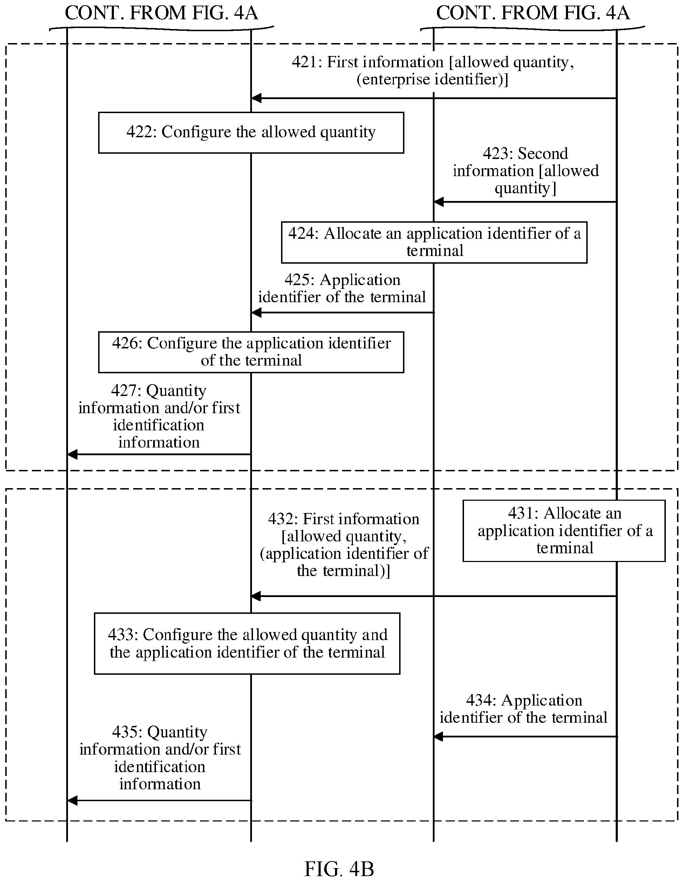

Before some possible embodiments provided in this application are described, several possible manners of allocating the application identifier and/or the network identifier of the terminal are first described as a whole. In this way, when embodiments are described subsequently, one or more of the several possible manners may be directly referenced, and details may not need to be described again. FIG. 4A and FIG. 4B show an example of several manners of allocating an application identifier of a terminal according to an embodiment of this application.

Manner 1: An operation requester allocates the application identifier of the terminal, and a second core network device obtains an allowed quantity.

The allowed quantity can be understood as a quantity of terminals that the operation requester (for example, an enterprise) is allowed to use. In a possible implementation, the terminal is a tag, and the quantity of terminals is a quantity of tag identifiers or a quantity of entity tags. A difference between the two lies in that the former is the quantity of tag identifiers, and if a tag is damaged, the tag may be replaced with a new tag, but a tag identifier of the new tag may be a tag identifier of the original damaged tag; and the latter is the tag, that is, the terminal itself. In this embodiment of this application, the second core network device may be a UDM, a UDR, or another core network element. As shown in FIG. 4A, in the manner 1, allocating the application identifier of the terminal includes the following operations.

401: The second core network device obtains first information.

The first information may include the allowed quantity. In this application, the allowed quantity may be understood as a quantity of numbers, the quantity of terminals, or a quantity of identifiers. The allowed quantity is interchangeable with the quantity of identifiers, the quantity of terminals, the quantity of numbers, quantity information, or the like. A possible implementation of step 401 is as follows: The second core network device receives the first information (which may be referred to as a message including an allowed quantity) sent by a business & operation support system (business & operation support System, BOSS) of an operator. The BOSS may be replaced with another entity of the operator. That is, a manner in which the operator sends the first information to the second core network device is not limited in this embodiment of this application.

In a possible implementation, the first information may further include an enterprise identifier. The enterprise identifier is used to identify an enterprise. Because an independent network may be deployed for the enterprise, the second core network device (for example, a UDM or a UDR) may serve only the enterprise. Therefore, the enterprise identifier is used as an optional parameter. In a public network scenario or when a core network device serves a plurality of enterprises, enterprise identifiers may be used to identify different enterprises. In this application, the enterprise identifier may be understood as or may be replaced with an operation requester identifier or a user identifier. The operation requester identifier may include one or more of the following: address information, identification information, a port number, a service identifier, and a transaction number.

402: The second core network device configures the allowed quantity.

The second core network device configures the allowed quantity, to perform access management based on the allowed quantity. The performing access management based on the allowed quantity may include one or more of the following: allocating a network identifier of the terminal based on the allowed quantity, allocating the application identifier of the terminal based on the allowed quantity, determining, based on the allowed quantity, the quantity of terminals that the operation requester is allowed to use, and determining, based on the allowed quantity, whether a quantity of terminals used by the operation requester exceeds the quantity of terminals that the operation requester is allowed to use.

403: The operation requester obtains second information.

The second information includes the allowed quantity. A possible implementation of step 403 is as follows: The operation requester receives the second information (for example, a message including an allowed quantity) sent by the BOSS system of the operator. The BOSS may be replaced with another entity of the operator. That is, a manner in which the operator sends the second information to the operation requester is not limited in this embodiment of this application. The first information and the second information may be the same, or may be different. For example, the first information and the second information each are a message including an allowed quantity, and each include the allowed quantity. For another example, the first information includes the allowed quantity and the enterprise identifier, and the second information includes the allowed quantity but does not include the enterprise identifier. In the manner 1, a sequence of step 401 and step 403 is not limited. It may be understood that the operations (step 401 and step 402) performed by the second core network device are independent of the operations (step 403 and step 404) performed by the operation requester.

404: The operation requester allocates the application identifier of the terminal.

In a possible implementation, the operation requester allocates the application identifier of the terminal based on the allowed quantity. For example, the allowed quantity is 10,000, the operation requester allocates application identifiers of 10,000 terminals based on the allowed quantity, and each terminal corresponds to one application identifier.

405: A first core network device receives the quantity information and/or first identification information from the second core network device.

The first core network device may be an AMF, or may be an internet of things management device, that is, a device having an internet of things terminal management function or an internet of things service processing function. The first identification information includes one or more of the following: a terminal identifier of the terminal, an encrypted terminal identifier, a terminal application identifier, a terminal network identifier, and the operation requester identifier. The operation requester identifier is used to identify the operation requester. The quantity information may include the quantity of terminals that the operation requester is allowed to use (which may be understood as the allowed quantity).

Manner 2: An operation requester allocates the application identifier of the terminal, and an operator allocates a network identifier of the terminal and sends the network identifier of the terminal to the operation requester, or the operation requester allocates a network identifier of the terminal.

411: A second core network device obtains first information.

For step 411, refer to step 401. The first information may further include an enterprise identifier or the network identifier of the terminal. In a possible implementation, the network identifier of the terminal is allocated by a BOSS system. In this case, the first information may further include the network identifier of the terminal. In another possible implementation, the network identifier of the terminal is allocated by the second core network device (for example, a UDM or a UDR). In this case, the first information does not need to include the network identifier of the terminal.

412: The second core network device configures an allowed quantity.

For step 412, refer to step 402.

413: The operation requester obtains second information.

For step 413, refer to step 403. The second information may further include the network identifier of the terminal. If the network identifier of the terminal is allocated by the BOSS system, the second information further includes the network identifier of the terminal. If the network identifier of the terminal is allocated by the second core network device (for example, a UDM or a UDR), the second information does not need to include the network identifier of the terminal.

414: The operation requester allocates the application identifier of the terminal.

For step 414, refer to step 404.

415: The second core network device allocates the network identifier of the terminal.

A possible implementation of step 415 is as follows: The second core network device allocates the network identifier of the terminal based on the allowed quantity. The terminal network identifier allocated by the second core network device may be a terminal network identifier allocated by the second core network device to the operation requester, that is, a network identifier allocated to a terminal of the operation requester.

Step 415 may be replaced with the following: The first information includes the network identifier of the terminal, and the second core network device obtains network identifiers of one or more terminals based on the first information.

416: The second core network device sends the network identifier of the terminal to the operation requester.

Step 415 and step 416 are optional rather than mandatory. It may be understood that, if the network identifier of the terminal is allocated by the second core network device, the second core network device may allocate the network identifier of the terminal based on the allowed quantity, to perform access management based on the network identifier of the terminal. If the network identifier of the terminal is allocated by the second core network device, after performing step 415, the second core network device sends the allocated terminal network identifier to the operation requester, that is, performs step 416. In a possible implementation, the second core network device may send the allocated terminal network identifier to the operation requester through a NEF. If the network identifier of the terminal is allocated by the operator, and both the first information and the second information may include the network identifier allocated by the operator to the terminal of the operation requester, the second core network device may obtain the network identifier of the terminal based on the first information, and the operation requester may obtain the network identifier of the terminal based on the second information. That is, if the network identifier of the terminal is allocated by the operator, the second core network device does not need to allocate the network identifier of the terminal, and step 416 does not need to be performed.

417: A first core network device receives quantity information and/or first identification information from the second core network device.

For step 417, refer to step 405.

Manner 3: An operation requester allocates the application identifier of the terminal, and a second core network device obtains an allowed quantity and the application identifier of the terminal allocated by the operation requester.

421: The second core network device obtains first information.

For step 421, refer to step 401.

422: The second core network device configures the allowed quantity.

For step 422, refer to step 402.

423: The operation requester obtains second information.

For step 423, refer to step 403.

424: The operation requester allocates the application identifier of the terminal.

For step 424, refer to step 404.

425: The second core network device obtains the application identifier of the terminal.

A possible implementation of step 425 is as follows: The second core network device receives the application identifier of the terminal allocated by the operation requester based on the allowed quantity. Correspondingly, the operation requester sends the application identifier of the terminal allocated by the operation requester to the second core network device. In a possible implementation, the operation requester sends a list of application identifiers of terminals to the second core network device, that is, a list including application identifiers of one or more terminals. In a possible implementation, the operation requester sends a message to the second core network device. The message includes one or more terminal application identifiers. Optionally, the message that includes the terminal application identifier and that is sent by the operation requester to the second core network device may further include an enterprise identifier. The enterprise identifier is used to identify an enterprise. Because an independent network may be deployed for the enterprise, the second core network device may serve only the enterprise. Therefore, the enterprise identifier is used as an optional parameter. In a public network scenario or when the second core network device serves a plurality of enterprises, enterprise identifiers may be used to identify different enterprises. In a possible implementation, the operation requester sends, to the second core network device through a NEF, a message including application identifiers of one or more terminals.

426: The second core network device configures the application identifier of the terminal.

That the second core network device configures the application identifier of the terminal may be that the second core network device stores a correspondence between a terminal identifier of the terminal and the terminal application identifier, or may be configuring one or more terminal application identifiers as terminal application identifiers that can be used by the operation requester.

427: A first core network device receives quantity information and/or first identification information from the second core network device.

For step 427, refer to step 405.

Manner 4: An operator allocates the application identifier of the terminal, and the operator sends the application identifier of the terminal to an operation requester.

431: A BOSS system of the operator allocates the application identifier of the terminal.

A possible implementation of step 431 is as follows: The BOSS system of the operator allocates the application identifier of the terminal based on an allowed quantity. To be specific, the BOSS system of the operator allocates a corresponding quantity of terminal application identifiers to the operation requester based on a quantity of terminals that the operation requester is allowed to use.

432: A second core network device obtains first information.

The first information includes the allowed quantity and a terminal application identifier. The terminal application identifier included in the first information may be the application identifier of the terminal allocated by the BOSS system of the operator to the operation requester in step 431. The first information may further include an enterprise identifier. For step 432, refer to step 401.

433: The second core network device configures the allowed quantity and the application identifier of the terminal.

434: The operation requester obtains the application identifier of the terminal.

In step 434, the application identifier of the terminal obtained by the operation requester may be a terminal application identifier allocated to the operation requester.

A possible implementation of step 434 is as follows: The operation requester receives the terminal application identifier sent by the BOSS system of the operator. The operation requester may alternatively obtain, by using another manner, one or more terminal application identifiers from a device that provides a service for the operator. Optionally, the operation requester may further obtain the allowed quantity and/or the enterprise identifier. For example, the operation requester receives second information from the BOSS system of the operator. The second information includes one or more terminal application identifiers allocated by the operator to the operation requester. The second information may further include the allowed quantity and/or the enterprise identifier.

Another possible implementation of step 434 is as follows: The operation requester receives the terminal application identifier sent by the second core network device. For example, the operation requester receives second information from the second core network device. The second information includes one or more terminal application identifiers allocated by the operator to the operation requester. The second information may further include the allowed quantity and/or the enterprise identifier.

43 5: A first core network device receives quantity information and/or first identification information from the second core network device.

For step 435, refer to step 405.

It should be noted that the manner 1 to the manner 4 are merely several possible examples of allocating the application identifier and/or the network identifier of the terminal in this embodiment of this application, but not all examples.

FIG. 4A and FIG. 4B show the several possible examples of allocating the application identifier and/or the network identifier of the terminal, which are respectively implemented by the operation requester, the BOSS system, the second core network device, and the first core network device. The following describes, with reference to the accompanying drawings, a method procedure executed by the operation requester in a process of allocating the application identifier and/or the network identifier of the terminal.

In this application, the first core network device may be a mobility management device, a session management device, a policy control device, a unified data management device, a unified data repository, a network exposure function device, a user plane device, or an internet of things management device. This is not limited in this application. In this application, the second core network device may be a mobility management device, a session management device, a policy control device, a unified data management device, a unified data repository, a network exposure function device, or a user plane device. This is not limited in this application.

In this application, that a terminal accesses a network may be understood as that the terminal registers with the network, the terminal successfully registers with a core network, or the terminal successfully executes a procedure. That the network accepts the access of the terminal to the network may be understood as that the network accepts registration of the terminal, the network accepts a registration request of the terminal, the network accepts registration of the terminal with the network, the network accepts a registration procedure of the terminal, a core network accepts registration of the terminal with the network, or a core network accepts registration of the terminal with the core network. That the network rejects the access of the terminal to the network may be understood as that the network rejects registration of the terminal, the network rejects a registration request of the terminal, the network rejects registration of the terminal with the network, the network rejects a registration procedure of the terminal, a core network rejects registration of the terminal with the network, or a core network rejects registration of the terminal with the core network.

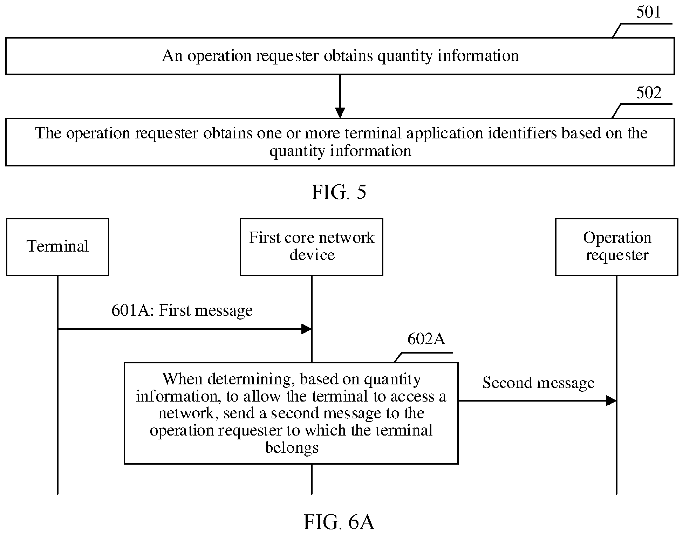

FIG. 5 is a flowchart of a terminal management method according to an embodiment of this application. As shown in FIG. 5, the method includes the following steps.

501: An operation requester obtains quantity information.

The quantity information indicates a quantity of terminals that the operation requester is allowed to use. That the operation requester obtains the quantity information may be that the operation requester receives the quantity information sent by a BOSS system, and reference may be made to step 403.

502: The operation requester obtains one or more terminal application identifiers based on the quantity information.

A possible implementation of step 502 is as follows: The operation requester allocates the one or more terminal application identifiers based on the quantity information. A quantity of the terminal application identifiers allocated by the operation requester is the quantity of terminals that the operation requester is allowed to use. For example, the quantity of terminals that the operation requester is allowed to use is 10,000, the operation requester allocates 10,000 terminal application identifiers, and each terminal application identifier corresponds to one terminal.

The operation requester may further perform the following operation: sending an operation instruction. The operation instruction includes a first terminal application identifier, the first terminal application identifier is included in the one or more terminal application identifiers, and the operation instruction is used to perform an operation on a terminal corresponding to the first terminal application identifier. The operation herein may include an operation such as stocktaking (or referred to as inventory), request for tag information, read, write, invalidation, or security authentication. The operation requester may send the operation instruction to the terminal through a core network device and an access network device.

The operation requester may further perform the following operation: obtaining network identification information. The network identification information includes one or more terminal network identifiers. That the operation requester obtains the network identification information may be receiving the one or more terminal network identifiers sent by a second core network device, or may be receiving the one or more terminal network identifiers from the BOSS system.

The operation requester may further perform the following operation: sending the one or more terminal application identifiers and/or an operation requester identifier to the core network device. In FIG. 4A and FIG. 4B, the operation of sending, by the operation requester, the terminal application identifier and/or the operation requester identifier to the second core network device is an example of sending the one or more terminal application identifiers and/or the operation requester identifier to the core network device.

The method procedure in FIG. 5 describes a possible example in which the operation requester obtains the one or more terminal application identifiers. The method procedure in FIG. 5 describes a method procedure executed by the operation requester in the manner 1, manner 2, and manner 3. Step 501 and step 502 may be replaced with the following: The operation requester obtains the one or more terminal application identifiers (referring to step 434). The operation requester may obtain the one or more terminal application identifiers by receiving the one or more terminal application identifiers from the BOSS system, or by receiving the one or more terminal application identifiers from the core network device. For example, after receiving first information from the BOSS system, the second core network device sends the one or more terminal application identifiers to the operation requester. The first information includes an application identifier of a terminal allocated by a BOSS system of an operator to the operation requester.

In this embodiment of this application, the operation requester obtains the one or more terminal application identifiers based on the quantity information, so that a quantity of the obtained terminal application identifiers is less than or equal to, or is not greater than the quantity of terminals that the operation requester is allowed to use.

The following describes, with reference to the accompanying drawings, a terminal management method provided in this application.

FIG. 6A is a flowchart of another terminal management method according to an embodiment of this application. Before executing a method procedure in FIG. 6A, a first core network device may obtain quantity information and/or first identification information by performing the operations performed by the first core network device in the manner 1 to the manner 4. As shown in FIG. 6A, the method includes the following steps.

601A: The first core network device receives a first message from a terminal.

The first message is used to request to access a network, the network may include a core network, an access network, or another network, and one or more core network devices and access network devices may be deployed in the network. For example, the network that the terminal requests to access is an independent network deployed for an enterprise, a public network, or a public network integrated non-public network. For another example, the network that the terminal requests to access is a network shared by a plurality of enterprises. The first core network device may be a mobility management device AMF, may be another device that can implement a terminal management function, or may be an internet of things management device. The first message may be a registration request message used to request to access the network. The first message may be a non-access stratum (non-access stratum, NAS) message or another protocol message. This is not limited in this application.

That the first core network device receives the first message from the terminal may be that the first core network device receives the first message that is of the terminal and that is forwarded by an access network device. For example, the terminal sends the registration request message (an example of the first message) to the access network device, and the first core network device receives the registration request message forwarded by the access network device to the first core network device.

In a possible implementation, the first message includes the first identification information, and the first identification information identifies the terminal. The first identification information includes one or more of the following: a terminal identifier of the terminal, an encrypted terminal identifier, a terminal application identifier, a terminal network identifier, and an operation requester identifier.

In a possible implementation, the first message includes identification information and authentication information, the identification information and the authentication information are used to execute an authentication procedure, and the identification information includes one or more of the following: the terminal identifier of the terminal, the encrypted terminal identifier, the terminal application identifier, the terminal network identifier, and the operation requester identifier. The authentication information may include one or more of information such as a random number, a message authentication code (message authentication code, MAC), a check value, and a token (token).

602A: When determining, based on the quantity information, to allow the terminal to access the network, the first core network device sends a second message to an operation requester to which the terminal belongs.

The quantity information includes a quantity of terminals that the operation requester is allowed to use, that is, an allowed quantity, where the terminal belongs to the operation requester. The quantity of terminals that the operation requester is allowed to use may be understood as a quantity of terminals allowed to be used by the operation requester. The second message may include the first identification information, and the first identification information includes one or more of the following: the terminal identifier of the terminal, the encrypted terminal identifier, the terminal application identifier, the terminal network identifier, and the operation requester identifier. Exemplarily, the second message is used to feed back, to the operation requester, identification information of the terminal accessing the network; or the second message is used as a response message to a request from the operation requester for obtaining terminal information.

In a possible implementation, the first core network device is an AMF, and when determining, based on the quantity information, to allow the terminal to access the network, the first core network device sends, through a NEF, the second message to the operation requester to which the terminal belongs. For example, the second message is an operation result obtained when the terminal executes an operation instruction from the operation requester.

A possible implementation of step 602A is as follows: When a quantity of terminals accessing the network among terminals corresponding to the operation requester is less than or equal to a quantity threshold, the core network device determines to allow the terminal to access the network. The quantity threshold is the quantity of terminals that the operation requester is allowed to use. The terminals corresponding to the operation requester refer to terminals belonging to the operation requester or terminals that are allowed to be used by the operation requester. The quantity of terminals accessing the network among the terminals corresponding to the operation requester may be understood as a quantity of terminals that have accessed the network among the terminals belonging to the operation requester. It is assumed that there are F terminals belonging to the operation requester, H terminals of the F terminals have accessed the network, the quantity of terminals accessing the network among the terminals corresponding to the operation requester is H, and both F and H are integers greater than or equal to 0.

In this embodiment of this application, when determining, based on the quantity information, to allow the terminal to access the network, the first core network device sends the second message to the operation requester to which the terminal belongs. That is, before sending the second message, the first core network device needs to determine, based on the quantity information, to allow the terminal to access the network, instead of directly allowing the terminal to access the network. The first core network device determines, based on the quantity information, to allow the terminal to access the network, so that the quantity of terminals accessing the network among the terminals corresponding to the operation requester can be prevented from being greater than or equal to the quantity of terminals that the operation requester is allowed to use.

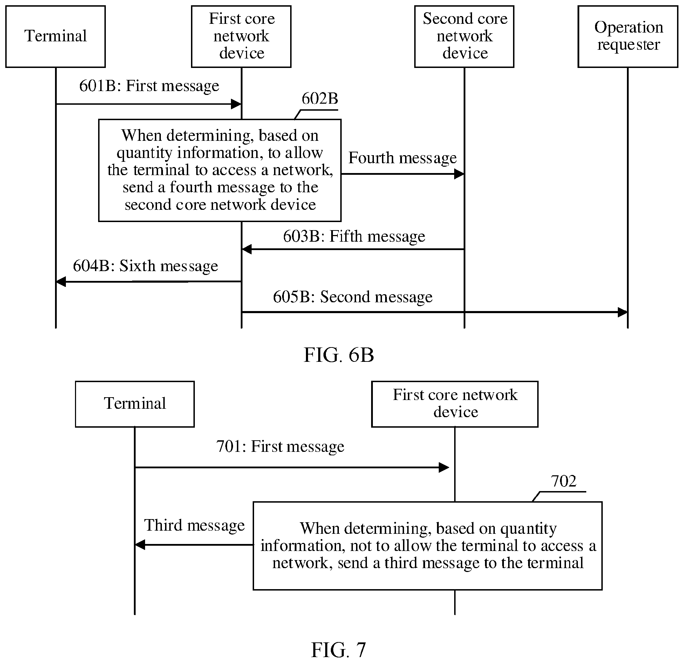

FIG. 6B is a flowchart of another terminal management method according to an embodiment of this application. Before executing the method procedure in FIG. 6A, a first core network device may obtain quantity information and/or first identification information by performing the operations performed by the first core network device in the manner 1 to the manner 4. A method procedure in FIG. 6B is a possible implementation of the method described in FIG. 6A. As shown in FIG. 6B, the method includes the following steps.

601B: The first core network device receives a first message from a terminal.

For step 601B, refer to step 601A.

602B: When determining, based on the quantity information, to allow the terminal to access a network, the first core network device sends a fourth message to a second core network device.

The second core network device may be a UDM, a UDR, or another core network device. For example, the first core network device sends the fourth message to the second core network device through another core network device (for example, an AUSF).

In a possible implementation, the fourth message is used to request to execute an authentication procedure on the terminal. In this application, verification and authentication may be a same concept, and the verification and the authentication may be replaced with each other. The authentication procedure may be one-way authentication for authenticating whether the terminal is a trusted terminal or an authorized terminal; or the authentication procedure may be one-way authentication for the terminal to authenticate whether the network or an operation requester is a trusted network or a trusted operation requester; or the authentication procedure may be two-way authentication, to be specific, the authentication procedure includes that the terminal authenticates the network or an operation requester and also includes that the network or the operation requester authenticates the terminal.

In a possible implementation, the fourth message includes second identification information and authentication information. The second identification information and the authentication information are used to execute the authentication procedure. The second identification information includes one or more of the following: a terminal identifier of the terminal, an encrypted terminal identifier, a terminal application identifier, a terminal network identifier, and an operation requester identifier. The authentication information may include a random number, a MAC, and the like. In a possible implementation, the fourth message further includes indication information; and the indication information indicates that the authentication procedure is any one of the following: one-way authentication, two-way authentication, one-way authentication performed by the terminal on the network or the operation requester, or one-way authentication performed by the network or the operation requester on the terminal. In a possible implementation, the indication information indicates that the authentication procedure is an authentication procedure applied to passive internet of things. For example, the fourth message is an authentication request message, and the indication information included in the fourth message indicates that the authentication is authentication applied to the passive internet of things.

In a possible implementation, after receiving the first message from the terminal, the first core network device determines, based on third identification information included in the first message, the operation requester to which the terminal belongs. The third identification information includes one or more of the following: the terminal identifier of the terminal, the encrypted terminal identifier, the terminal application identifier, the terminal network identifier, and the operation requester identifier. The first core network device determines the operation requester to which the terminal belongs, to determine, based on the quantity information, whether to allow the terminal to access the network. For example, the first core network device determines, based on the third identification information and a first correspondence, the operation requester to which the terminal belongs. The first correspondence indicates that the terminal belongs to the operation requester. Optionally, the first correspondence includes a correspondence between the application identifier (the terminal identifier or the network identifier) of the terminal and the operation requester identifier. The operation requester identifier is an identifier of the operation requester. The first core network device may configure or store a correspondence between one or more terminals and operation requesters to which the terminals belong, and the first core network device may determine, based on the correspondence, the operation requester to which the terminal belongs. For another example, the first core network device determines a second correspondence based on an operation instruction from the operation requester. The second correspondence indicates that the terminal belongs to the operation requester. The first core network device determines, based on the third identification information included in the first message and the second correspondence, the operation requester to which the terminal belongs. The operation instruction may include a first identifier of the terminal. The first identifier is any one of the following: the terminal identifier of the terminal, the encrypted terminal identifier, the terminal application identifier, or the terminal network identifier.

603B: The first core network device receives a fifth message from the second core network device.

The fifth message indicates that the operation requester successfully receives or unsuccessfully receives identification information of the terminal, or the fifth message indicates that the authentication procedure of the terminal succeeds or fails. The fifth message may notify the terminal of an authentication result of the fifth message, so that the terminal performs a corresponding subsequent operation based on the authentication result. That the first core network device receives the fifth message may be receiving a fifth message sent by another core network device. The second core network device may be a UDM, a UDR, or another core network device. In a possible implementation, the first core network device is an AMF, and the first core network device receives the fifth message sent by the another core network device (for example, a UDM or an AUSF). For example, the first core network device is an AMF, and the AMF receives a fifth message sent by a UDM (corresponding to the second core network device) to the first core network device through an AUSF, or receives a fifth message sent by an AUSF (corresponding to the second core network device).

In a possible implementation, step 602B and step 603B may be replaced with the following: The first core network device executes the authentication procedure on the terminal based on the first message. The first message includes the third identification information and the authentication information, and the third identification information and the authentication information are used to execute the authentication procedure. The third identification information includes one or more of the following: the terminal identifier of the terminal, the encrypted terminal identifier, the terminal application identifier, the terminal network identifier, and the operation requester identifier. For example, the first message includes the application identifier of the terminal, a random number, and a message authentication code. The first core network device retrieves a security parameter based on the application identifier of the terminal, and verifies the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal). The security parameter may be a key or a hash algorithm. If the security parameter is a key, the message authentication code may be a value obtained by encrypting the random number by using the key. If the security parameter is a hash algorithm, the message authentication code may be a value obtained by performing an operation on the random number by using the hash algorithm.

604B: The first core network device sends a sixth message to the terminal.

The fifth message indicates that the operation requester successfully receives the identification information of the terminal or that the authentication procedure succeeds, and the sixth message indicates that the access of the terminal to the network is accepted. Alternatively, the fifth message indicates that the operation requester unsuccessfully receives the identification information of the terminal or that the authentication procedure fails, and the sixth message indicates that the access of the terminal to the network is rejected. A possible implementation of step 604B is as follows: The first core network device sends the sixth message to the terminal based on the fifth message. If the fifth message indicates that the operation requester successfully receives the identification information of the terminal or indicates that the authentication procedure of the terminal succeeds, the first core network device sends, to the terminal, the sixth message indicating that the access of the terminal to the network is accepted. If the fifth message indicates that the operation requester unsuccessfully receives the identification information of the terminal or indicates that the authentication procedure of the terminal fails, the first core network device sends, to the terminal, the sixth message indicating that the access of the terminal to the network is rejected. That is, the first core network device may send the corresponding sixth message to the terminal based on the fifth message.

In a possible implementation, the first core network device may further perform the following operation: obtaining the quantity information and/or the first identification information. The first identification information includes one or more of the following: the terminal identifier of the terminal, the encrypted terminal identifier, the terminal application identifier, the terminal network identifier, and the operation requester identifier. The first core network device may further configure an allowed quantity (or the quantity information) and the first identification information. For example, the first core network device configures one or more of the following: the terminal identifier of the terminal, the encrypted terminal identifier, the terminal application identifier, the terminal network identifier, the operation requester identifier, and the allowed quantity (or the quantity information). In some embodiments, the first core network device may be the first core network device in FIG. 4A and FIG. 4B, and obtains the quantity information and/or the first identification information by executing any method procedure in the manner 1 to the manner 4. It should be understood that the first core network device can perform the method procedures in FIG. 6A and FIG. 6B only after obtaining the quantity information and/or the first identification information.

605B: The first core network device sends a second message to the operation requester to which the terminal belongs.

In this embodiment of this application, the first core network device sends the fourth message to the second core network device, to execute the authentication procedure on the terminal, thereby ensuring that the terminal is a trusted terminal.

In this embodiment of this application, before sending the second message, the first core network device needs to determine, based on the quantity information, to allow the terminal to access the network. If determining, based on the quantity information, not to allow the terminal to access the network, the first core network device does not need to send the fourth message used to request to execute the authentication procedure on the terminal. In this way, signaling overheads can be reduced. The first core network device determines, based on the quantity information, to allow the terminal to access the network. In this way, whether to execute the authentication procedure on the terminal can be quickly and accurately determined. It should be understood that, when the first core network device determines, based on the quantity information, to allow the terminal to access the network, it may not indicate that the terminal can pass the authentication procedure.

FIG. 7 is a flowchart of another terminal management method according to an embodiment of this application. Before executing the method procedure in FIG. 6A, a first core network device may obtain quantity information and/or first identification information by performing the operations performed by the first core network device in the manner 1 to the manner 4. FIG. 7 and FIG. 6A show two different method procedures that may be executed by the first core network device after the first core network device receives a first message from a terminal. As shown in FIG. 7, the method includes the following steps.

701: The first core network device receives the first message from the terminal.

For step 701, refer to step 601B. The first core network device may be an AMF, may be another device that can implement a function of an AMF, or may be an internet of things management device.

702: When determining, based on the quantity information, not to allow the terminal to access a network, the first core network device sends a third message to the terminal.

The third message indicates to reject the access of the terminal to the network. The third message may be a registration reject message. The quantity information includes a quantity of terminals that an operation requester is allowed to use, and may be understood as an allowed quantity, where the terminal belongs to the operation requester.

A possible implementation of step 702 is as follows: When a quantity of terminals accessing the network among terminals corresponding to the operation requester is greater than or equal to a quantity threshold, the first core network device determines not to allow the terminal to access the network. The quantity threshold is the quantity of terminals that the operation requester is allowed to use.

In a possible implementation, the first core network device may further perform the following operation: obtaining the quantity information and/or the first identification information. The first identification information includes one or more of the following: a terminal identifier of the terminal, an encrypted terminal identifier, a terminal application identifier, a terminal network identifier, and an operation requester identifier. The core network device may further configure the allowed quantity and identification information. For example, the first core network device configures one or more of the following: the terminal identifier of the terminal, the encrypted terminal identifier, the terminal application identifier, the terminal network identifier, the operation requester identifier, and the allowed quantity. In some embodiments, the first core network device may be the first core network device in FIG. 4A and FIG. 4B, and obtains the quantity information and/or the first identification information by executing any method procedure in the manner 1 to the manner 4. It should be understood that the first core network device can execute the method procedure in FIG. 7 only after obtaining the quantity information and/or the first identification information.

In this embodiment of this application, when determining, based on the quantity information, not to allow the terminal to access the network, the first core network device sends the third message to the terminal, and does not need to execute an authentication procedure on the terminal. In this way, unnecessary operations can be reduced, and the access of the terminal can be rejected in time.

The following describes, with reference to the accompanying drawings, some possible terminal management method procedures provided in embodiments of this application.

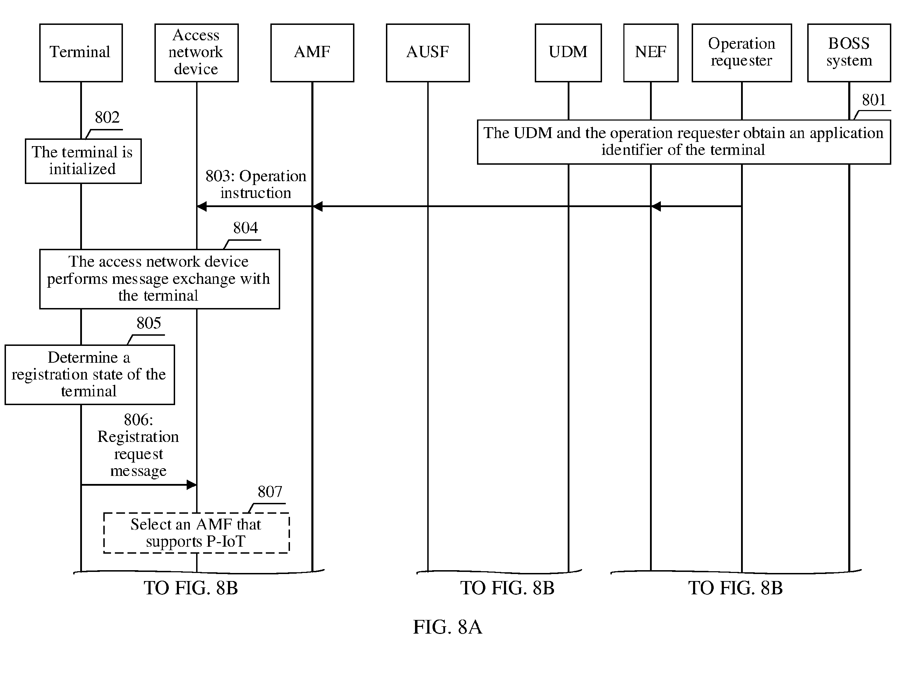

The following describes in detail the terminal management methods in FIG. 6A, FIG. 6B, and FIG. 7 in the foregoing embodiments with reference to FIG. 8A to FIG. 8C. FIG. 8A to FIG. 8C are a flowchart of interaction in a terminal management method according to an embodiment of this application. FIG. 8A to FIG. 8C are described by using an example in which a reader is an access network device. The method is also applicable to a scenario in which a reader is a terminal device (for example, UE). As shown in FIG. 8A to FIG. 8C, the method includes the following steps.

801. A UDM and an operation requester obtain an application identifier of a terminal.

A possible implementation of step 801 is as follows: The UDM (or UDR), the operation requester, and a BOSS system of an operator allocate the application identifier of the terminal according to the manner 3 or the manner 4. The UDM in FIG. 8A to FIG. 8C is an example of the second core network device in FIG. 4A and FIG. 4B, and the UDM in FIG. 8A to FIG. 8C may be replaced with a UDR or another core network element. With reference to the manner 3 and the manner 4 in FIG. 4B, it can be learned that, when the application identifier of the terminal is allocated according to the manner 3 or the manner 4, both a second core network device (for example, the UDM or the UDR) and the operation requester may obtain the application identifier of the terminal, and a first core network device (the AMF in FIG. 8A to FIG. 8C) may obtain quantity information and/or identification information. The AMF in FIG. 8A to FIG. 8C is an example of the first core network device in FIG. 4A and FIG. 4B.

802: The terminal is initialized.

When the terminal is a tag, the terminal initialization may be understood as printing the tag by a tag party. The tag printing party may be an operator or the operation requester. A tag of the terminal may be printed by the operator or printed by the operation requester (for example, an enterprise) authorized by the operator. Content of the terminal initialization may include the application identifier of the terminal. Optionally, content of the tag of the terminal may further include a security parameter (or referred to as a security context). The security parameter may include a pre-configured key, a hash (hash) parameter, and the like. The pre-configured key may be used to encrypt or decrypt data, used to generate or derive a key, or used to execute a hash algorithm or another algorithm used to execute authentication. The hash parameter is used to perform a hash operation. The hash operation may be understood as a hash algorithm (hash), or referred to as a digest algorithm (digest). A function of the hash operation is to perform calculation on any group of input data to obtain a fixed-length output digest. The most important feature of the hash operation lies in that a same input leads to a same output and different inputs probably lead to different outputs.

Step 801 and step 802 are optional. Step 801 and step 802 may be operations completed in advance before other steps in FIG. 8A to FIG. 8C are performed. In the method procedure in FIG. 8A to FIG. 8C, step 801 and step 802 may be considered as operations performed in a preparation phase, and other steps may be considered as operations performed in an application phase. It should be understood that, if the tag of the terminal has been printed, and the UDM and the operation requester have obtained the application identifier of the terminal, steps after step 803 (including step 803) in the method procedure in FIG. 8A to FIG. 8C may be directly performed, to implement access management for the terminal.

803: The operation requester sends an operation instruction to the access network device.

The operation instruction may include application identifiers of one or more terminals. The operation requester may send the operation instruction to the access network device through a control plane channel or a user plane channel. In FIG. 8A to FIG. 8C, an example in which the operation requester (for example, a P-IoT AF) sends the operation instruction to the access network device through the control plane channel is used for descriptions. For example, the operation requester may send the operation instruction to the access network device through a NEF network element or the AMF network element. Alternatively, the operation requester may send the operation instruction to the access network device through the AMF. If the operation instruction is sent through the user plane channel, the operation requester (for example, a P-IoT server) may send the operation instruction to the access network device through a UPF.

In a possible implementation, step 803 may be that the operation requester sends an operation instruction to a core network device and the core network device sends an operation instruction to the terminal through the access network device. It may be understood that the operation instruction (or message) sent by the operation requester to the core network device may be different from the operation instruction (or message) sent by the core network device to the terminal. In other words, the core network device may generate, based on the operation instruction from the operation requester, the operation instruction (or message) sent to the terminal. In a possible implementation, the operation requester communicates with the core network device by using a first protocol, and the core network device communicates with the terminal by using a second protocol. The first protocol and the second protocol may be the same, or may be different. For example, the first protocol may be a service-based interface protocol or an application programming interface (application programming interface) protocol; and the second protocol may be a NAS protocol or another non-access stratum protocol.

804: The access network device performs message exchange with the terminal.

In a possible implementation, the access network device may learn of the content of the operation instruction, and perform a corresponding operation based on the learned content of the operation instruction. For example, the access network device performs message exchange with the terminal to perform an inventory operation, a read operation, or a write operation.

In another possible implementation, the access network device forwards the operation instruction to the terminal, and performs message exchange with the terminal.

805: The terminal determines a registration state of the terminal.

Step 805 is optional rather than mandatory. The terminal may determine the registration state of the terminal. If the terminal has not registered, step 805 to step 816 may be performed; or if the terminal has registered, step 817 may be performed. If the terminal is incapable of determining the registration state of the terminal, or is incapable of recording the registration state, the terminal needs to perform step 806.

806: The terminal sends a registration request message to the access network device.

The registration request message (for example, a registration request) may include the application identifier of the terminal. In a possible implementation, the registration request message may further include one or more of the following: a terminal identifier, an encrypted terminal identifier, a random number, a message authentication code (message authentication code, MAC), a check value, and a token. The registration request message may include a plurality of random numbers and message authentication codes. The terminal identifier may be understood as an identifier used to uniquely identify the terminal (or uniquely identify the terminal, which is an object or a device). The encrypted terminal identifier may be understood as an identifier obtained by encrypting the terminal identifier. In this embodiment of this application, a possible form of the terminal is a tag. A tag identifier (tag identifier, TID) may be used as an example of the terminal identifier, and a concealed tag identifier (concealed tag Identifier, CTID) may be used as an example of the encrypted terminal identifier.

In a possible implementation, the terminal encrypts the terminal identifier by using a key that is pre-configured (or referred to as a pre-configured key), to obtain the encrypted terminal identifier. In another possible implementation, the encrypted terminal identifier may be written into the terminal. In a possible manner, the operation requester may generate the encrypted terminal identifier in advance, and write the encrypted terminal identifier into the terminal (for example, the tag) when the tag is printed or after the tag is printed. The random number and the message authentication code may be used to authenticate whether the message is tampered with in a transmission process, or may be used by the network to authenticate whether the terminal is a trusted terminal. The terminal may generate the random number, and perform an operation on the security parameter and the random number to obtain the message authentication code (which may also be referred to as a verification value or a token). The security parameter may be a key or a hash algorithm. If the security parameter is a key, the message authentication code may be a value obtained by encrypting the random number by using the key. If the security parameter is a hash algorithm, the message authentication code may be a value obtained by performing an operation on the random number by using the hash algorithm. The random number and the message authentication code may be included in the registration request message. In a possible implementation, the registration request message is a NAS message (for example, a NAS registration request).

807: The access network device selects an AMF that supports P-IoT.

Step 807 is optional. In a possible implementation, the access network device may directly send the registration request message from the terminal to any AMF, and does not need to select the AMF that supports P-IoT.

808: The access network device sends the registration request message from the terminal to the AMF.

The AMF in FIG. 8A to FIG. 8C is an example of the first core network device in FIG. 6A, FIG. 6B, and FIG. 7. That the AMF receives the registration request message is an example in which the first core network device receives the first message from the terminal.

809: The AMF determines, based on the quantity information, whether to allow the terminal to access the network.

A possible implementation of step 809 is as follows: When a quantity of terminals accessing the network among terminals corresponding to the operation requester is less than or equal to a quantity threshold, the AMF determines to allow the terminal to access the network; otherwise, the AMF determines not to allow the terminal to access the network. If the AMF determines to allow the terminal to access the network, step 810 is performed; or if the AMF determines not to allow the terminal to access the network, step 816 is performed, that is, a registration reject message is sent to the terminal. The AMF may count and record a quantity of terminals that belong to a same operation requester and that access the network. For example, after one or more terminals pass authentication, the AMF updates a quantity of terminals that have been used by an operation requester to which the one or more terminals belong. The AMF may determine, based on the counted quantity of terminals that belong to the operation requester and that access the network, whether the quantity of terminals that belong to the operation requester and that access the network exceeds the quantity threshold.

In a possible implementation, after determining, based on the quantity information, to allow the terminal to access the network, the AMF may learn, based on the application identifier of the terminal in the registration request message, that an AUSF that supports P-IoT needs to be selected; and then send an authentication request message to the AUSF. In a possible implementation, the application identifier of the terminal is different from an identifier of a 3rd generation partnership project (3rd Generation Partnership Project, 3GPP) terminal, for example, a subscription concealed identifier (subscription concealed identifier, SUCI), a subscription permanent identifier (subscription permanent identifier, SUPI), a 5G globally unique temporary identity (5G globally unique temporary identity, 5G-GUTI), or a temporary mobile subscriber identity (temporary mobile subscriber identity, TMSI). The AMF learns, based on the application identifier of the terminal, that the terminal is a passive internet of things terminal or a P-IoT terminal, and the AUSF that supports P-IoT needs to be selected. In a possible implementation, the AMF may not select the AUSF that supports P-IoT, but send a first authentication request message to any AUSF.

810: The AMF sends the first authentication request message to the AUSF.

The first authentication request message (for example, Nausf_UEAuthentication_Authenticate Request) may include the application identifier of the terminal. A possible implementation of step 810 is as follows: The AMF selects the AUSF that supports P-IoT, and sends the first authentication request message to the AUSF selected by the AMF. Another possible implementation of step 810 is as follows: The AMF sends the first authentication request message to any AUSF. If the registration request message sent by the terminal includes one or more of the following: the terminal identifier, the encrypted terminal identifier, the random number, and the message authentication code, the first authentication request message sent by the AMF to the AUSF may include one or more of the following: the terminal identifier, the encrypted terminal identifier, the random number, and the message authentication code. In a possible implementation, the AMF sends indication information 1 (for example, P-IoT indication information) to the AUSF, to indicate that authentication corresponding to the first authentication request message is authentication applied to the passive internet of things or authentication for the passive internet of things terminal. For example, the first authentication request message may include the indication information 1, and the indication information 1 indicates that the first authentication request message is used to perform authentication applied to the passive internet of things or is used for authentication for the passive internet of things terminal. For another example, the AMF sends the indication information 1 to the AUSF by using a message other than the first authentication request message, and the indication information 1 indicates that the authentication corresponding to the first authentication request message is the authentication applied to the passive internet of things or is used for authentication for the passive internet of things terminal. In a possible implementation, the indication information 1 is used to indicate that an authentication procedure is one or more of the following: one-way authentication, two-way authentication, authentication performed by the terminal on the network or the operation requester, or authentication performed by the network or the operation requester on the terminal.

811: The AUSF selects a UDM that supports P-IoT.

In a possible implementation, the AUSF learns, based on the indication information 1 sent by the AMF or based on the application identifier of the terminal, that the UDM that supports P-IoT needs to be selected. In a possible implementation, the application identifier of the terminal is different from the identifier of the 3GPP terminal, for example, the SUCI, the SUPI, the 5G-GUTI, or the TMSI. The AUSF learns, based on the application identifier of the terminal, that the terminal is the passive internet of things terminal or P-IoT terminal, and the UDM that supports P-IoT needs to be selected. For example, the first authentication request message includes the indication information 1 indicating the AUSF to select the UDM that supports P-IoT, and the AUSF selects, based on the indication information 1, the UDM that supports P-IoT.

Step 811 is optional. In a possible implementation, the AUSF may not select the UDM, but directly send a second authentication request message to any UDM.

812: The AUSF sends the second authentication request message to the UDM.

The second authentication request message (for example, Nudm_UEAuthentication GetRequest) may include the application identifier of the terminal. If the first authentication request message sent by the AMF to the AUSF includes one or more of the following: the terminal identifier, the encrypted terminal identifier, the random number, and the message authentication code, the second authentication request message sent by the AUSF to the UDM may include one or more of the following: the terminal identifier, the encrypted terminal identifier, the random number, and the message authentication code. In a possible implementation, the second authentication request message sent by the AUSF to the UDM includes indication information 2 (for example, P-IoT indication information), and the indication information 2 is used to indicate that authentication corresponding to the second authentication request message is authentication applied to the passive internet of things, or is used for authentication for the passive internet of things terminal. In a possible implementation, the indication information 2 is used to indicate that an authentication procedure is one or more of the following: one-way authentication, two-way authentication, authentication performed by the terminal on the network or the operation requester, or authentication performed by the network or the operation requester on the terminal.

813: The UDM performs authentication on the terminal based on the second authentication request message.

In a possible implementation, the second authentication request message includes the application identifier of the terminal, the random number, and the message authentication code. The UDM may retrieve the security parameter based on the application identifier of the terminal, and verify the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal). The security parameter may be a key or a hash algorithm. If the security parameter is a key, the message authentication code may be a value obtained by encrypting the random number by using the key. If the security parameter is a hash algorithm, the message authentication code may be a value obtained by performing an operation on the random number by using the hash algorithm. In another possible implementation, if any terminal passes authentication, the UDM marks an application identifier as being used; or if the message authentication code in the second authentication request message passes the verification and the application identifier of the terminal is not marked as having been used, it is considered that the application identifier of the terminal passes the authentication.

In a possible implementation, the UDM may select, based on the indication information 2 sent by the AUSF to the UDM, a method for performing authentication on the terminal (that is, select an authentication method applicable to the passive internet of things or the passive internet of things terminal).

In a possible implementation, if the second authentication request message sent by the AUSF to the UDM includes the terminal identifier, the UDM may record a correspondence between the application identifier of the terminal and the terminal identifier. If the second authentication request message sent by the AUSF to the UDM includes the encrypted terminal identifier, the UDM may decrypt the encrypted terminal identifier, to obtain the terminal identifier. The UDM may record the correspondence between the application identifier of the terminal and the terminal identifier, record a correspondence between the application identifier of the terminal and the encrypted terminal identifier, or record a correspondence between the application identifier of the terminal, the encrypted terminal identifier, and the terminal identifier. The UDM may count, based on a recorded terminal application identifier or correspondence, a quantity of terminals that have been used. For example, the second authentication request message includes a terminal application identifier 1 and a terminal identifier 1. If the UDM has recorded a correspondence between the terminal application identifier 1 and a terminal identifier 2, it is determined that the terminal does not pass the authentication, and a counted quantity of terminals that have been used by the operation requester remains unchanged. In this example, the UDM has recorded a correspondence between the terminal application identifier 1 and the terminal identifier 2, which indicates that the terminal application identifier 1 has been used by another terminal, that is, the terminal application identifier 1 is embezzled. It can be learned that the UDM may determine, based on a recorded correspondence between a terminal application identifier and a terminal identifier (or an encrypted terminal identifier), whether the terminal application identifier is used by a plurality of terminals. In a possible implementation, when a terminal application identifier has been used by another terminal, the UDM determines that the terminal does not pass the authentication. That is, if the application identifier of the terminal is embezzled, it is determined that the terminal does not pass the authentication. For another example, the second authentication request message includes a terminal application identifier 1 and a terminal identifier 1. If the UDM has recorded the terminal application identifier 1, it is determined that the terminal does not pass the authentication, and a counted quantity of terminals that have been used by the operation requester remains unchanged. In this example, the UDM has recorded the terminal application identifier 1, which indicates that the terminal application identifier 1 has been used by another terminal, that is, the terminal application identifier 1 is embezzled. For another example, the second authentication request message includes a terminal application identifier 1 and a terminal identifier 1. If the UDM has not recorded a correspondence between the terminal application identifier 1 and another terminal identifier and has not recorded the terminal application identifier 1, the UDM records a correspondence between the terminal application identifier 1 and the terminal identifier 1, and adds one to a quantity of terminals that have been used by the operation requester. In this example, the UDM has not recorded the correspondence between the terminal application identifier 1 and the another terminal identifier and has not recorded the terminal application identifier 1, which indicates that the terminal application identifier 1 is not used. The UDM may count, based on a recorded terminal application identifier or correspondence, a quantity of terminals that have been used.

814: The UDM sends a first authentication response message to the AUSF.

The first authentication response message (for example, Nudm_UEAuthentication_Get Response) may include an authentication result. For example, the authentication result may include that the authentication succeeds or the authentication fails. That the authentication succeeds means that the terminal passes the authentication. That the authentication fails means that the terminal does not pass the authentication.

In a possible implementation, if an authentication procedure corresponds to one-way authentication performed by the network on the terminal or two-way authentication between the terminal and the network, the first authentication response message sent by the UDM to the AUSF may include a random number and a MAC value (or a check value or a token) that are generated by the UDM. For example, the MAC value may be a MAC value (or a check value or a token) generated by the UDM based on the security parameter corresponding to the terminal and the random number; or the MAC value may be a MAC value (or a check value or a token) generated by the UDM based on a random number sent by the terminal, the random number generated by the UDM, and the security parameter corresponding to the terminal. The MAC value (or the check value or the token) is sent to the terminal through a core network. The terminal parses the random number based on the preconfigured security parameter and the MAC value (or the check value or the token), and authenticates, based on a parsed random number, whether the network is a trusted network. For example, when the parsed random number includes a random number generated by the terminal, the network is a trusted network.

815: The AUSF sends a second authentication response message to the AMF.

The second authentication response message (for example, Nausf_UEAuthentication_Authenticate Response) may include an authentication result. For example, the authentication result may include that the authentication succeeds or the authentication fails. The authentication result included in the second authentication response message is the same as the authentication result included in the first authentication response message.

816: The AMF sends a registration accept message or a registration reject message to the terminal.

In a possible implementation, if the terminal passes the authentication, the AMF sends the registration accept message (for example, registrationaccept) to the terminal; or if the terminal does not pass the authentication, the AMF sends the registration reject message (for example, registrationreject) to the terminal. In a possible implementation, the registration accept message or the registration reject message may be a NAS message (for example, NAS Registration Accept or NAS Registration Reject). If the terminal is capable of recording a registration state, after receiving the registration accept message, the terminal may record that the terminal has registered. In this way, the terminal may determine the registration state of the terminal. That is, before receiving the registration accept message, the terminal is in an unregistered state, indicating that the terminal has not registered; and after receiving the registration accept message, the terminal changes the unregistered state to a registered state, indicating that the terminal has registered.

817: The terminal sends a NAS message to the AMF.

After registration of the terminal succeeds, if the terminal needs to send information (for example, the application identifier of the terminal) to the operation requester (a P-IoT AF or a P-IoT server), and the information sent by the terminal is sent to P-IoT AF through the control plane channel, the information may be sent to the AMF by using the NAS message, and the AMF sends the information to P-IoT AF (or the AMF sends the information to P-IoT AF through a NEF), as shown in FIG. 8A to FIG. 8C.

In a possible implementation, if a NAS encryption mechanism needs to be used between the terminal and the AMF, before step 817 is performed, the AMF further needs to exchange the security parameter with the terminal, to execute a NAS security mechanism.

In another possible implementation, if the information sent by the terminal is sent to P-IoT server through the user plane channel, the information may be sent to the access network device by using an RRC message, and the access network device sends the information to P-IoT server through the user plane channel (for example, the access network device sends the information to P-IoT server through a UPF network element).

818: The AMF sends data from the terminal to the operation requester through the NEF.

If the terminal sends the information to P-IoT AF through the control plane channel, the AMF may send the data from the terminal to P-IoT AF through the NEF. For example, data of the terminal may include the application identifier of the terminal and information stored in a storage area of the terminal. Step 818 may be replaced with the following: The AMF sends data from the terminal to the operation requester through the NEF. If the terminal sends the information to P-IoT server through the user plane channel, the terminal may send the information to the access network device by using the RRC message, and the access network device sends the information to P-IoT server through the user plane channel.

819: The operation requester sends invalidation information to the UDM.

The invalidation information indicates one or more invalidated terminals. If the operation requester has one or more invalidated terminals (for example, tags), and the invalidated terminal needs to be replaced, the operation requester may send a terminal identifier (or an encrypted terminal identifier) of the invalidated terminal to the UDM (through the NEF). The invalidation information may include the terminal identifiers (or the encrypted terminal identifiers) of the one or more invalidated terminals.

820: The UDM updates or deletes identification information of the invalidated terminal.

The identification information of the invalidated terminal may include one or more of the following information: an application identifier of the invalidated terminal, a network identifier, a terminal identifier, the encrypted terminal identifier, and a second correspondence. The second correspondence includes a correspondence between two or more of the following: the application identifier of the invalidated terminal, the network identifier, the terminal identifier, and the encrypted terminal identifier.

A possible implementation of step 820 is as follows: The UDM updates or deletes the identification information of the invalidated terminal based on the invalidation information. For example, the invalidation information indicates that a terminal 1 and a terminal 5 are invalidated, and the UDM deletes an application identifier of the terminal 1, a network identifier, a terminal identifier, and an encrypted terminal identifier; deletes or updates a correspondence between two or more of the following: an application identifier of the terminal 1, a network identifier, a terminal identifier, and an encrypted terminal identifier and deletes an application identifier of the terminal 5, a network identifier, a terminal identifier, and an encrypted terminal identifier; or deletes or updates a correspondence between two or more of the following: an application identifier of the terminal 5, a network identifier, a terminal identifier, and an encrypted terminal identifier.

It may be understood that step 806 to step 816 are steps in which the terminal registers with or accesses the network (for example, a core network).

In a possible implementation, step 813 and step 814 performed by the UDM may be implemented by the AMF, and step 810 to step 815 may be replaced with the following: The AMF retrieves the security parameter based on the application identifier of the terminal, and verifies the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal). If the AMF considers that the terminal passes the authentication, the AMF sends the registration accept message to the terminal. If the AMF considers that the terminal does not pass the authentication, the AMF sends the registration reject message to the terminal.

In this embodiment of this application, the AMF determines, based on the quantity information, whether to allow the terminal to access the network. If determining, based on the quantity information, not to allow the terminal to access the network, the AMF does not need to send a message used to request to execute an authentication procedure on the terminal. In this way, signaling overheads can be reduced.

In this embodiment of this application, before the terminal registers with the network through the operator, the UDM learns of the application identifier of the terminal, and authenticates the terminal by using the application identifier of the terminal. A quantity of terminals is counted, so that an application identifier of one terminal can be prevented from being used by a plurality of terminals. This helps the network perform tag management and charging.

In this embodiment of this application, the access management is performed by using the application identifier of the terminal. If authentication needs to be performed on the terminal, the security parameter may be further written into or configured for the terminal when the tag is printed, after the tag is printed, or when the tag is initialized, so that when the terminal registers with the network, information (for example, a random number and a message authentication code) used for the authentication is sent to the network. In addition, an application identifier of one terminal may be prevented, further based on a terminal identifier, from being used by a plurality of terminals. This helps the operator perform terminal management and charging.

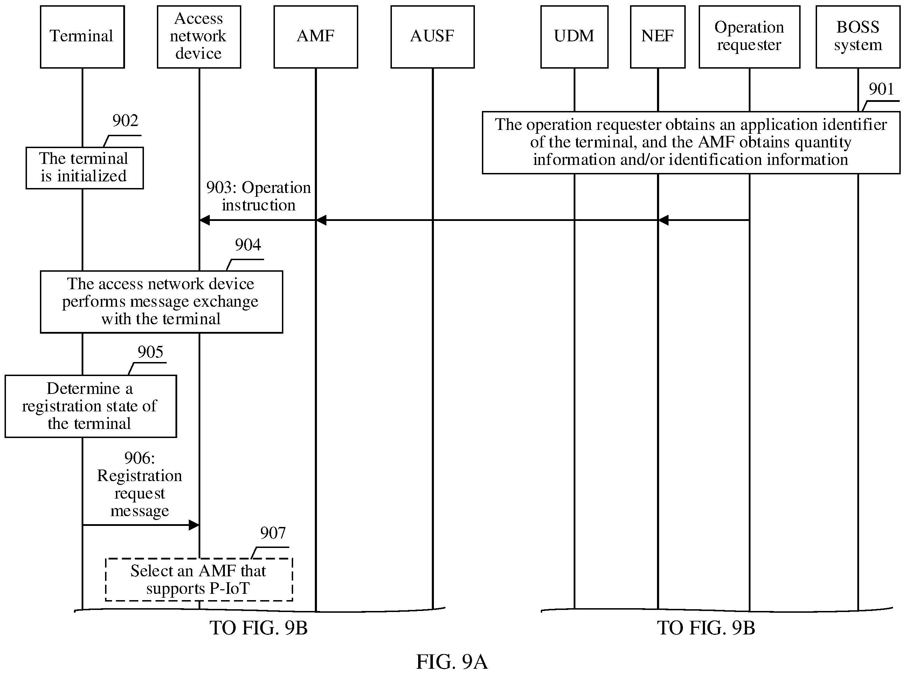

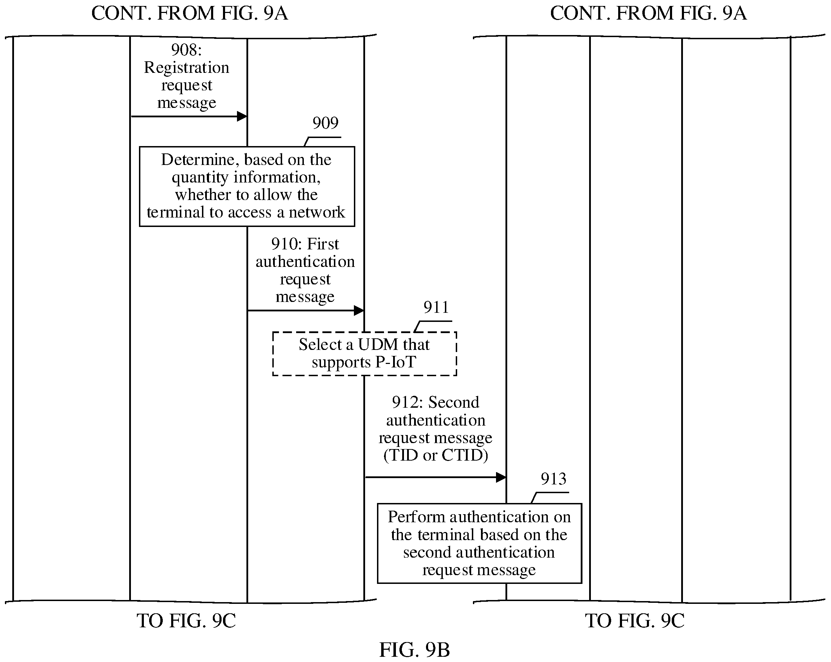

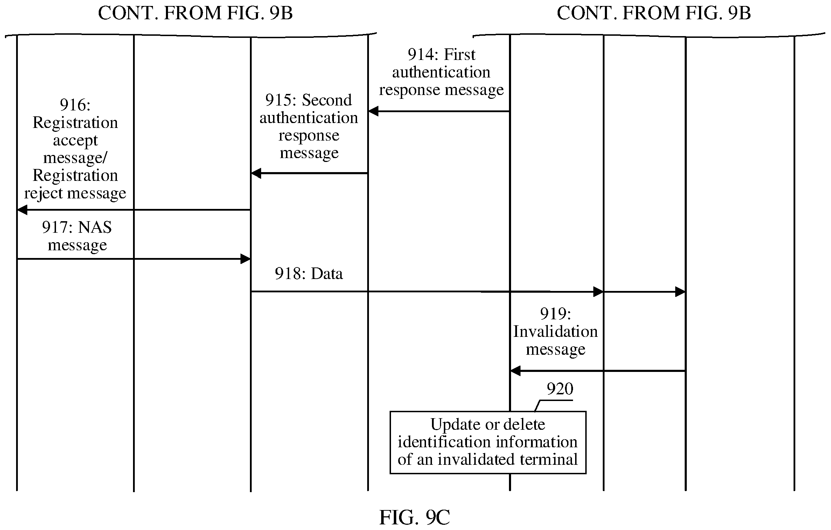

The following describes in detail the terminal management methods in FIG. 6A, FIG. 6B, and FIG. 7 in the foregoing embodiments with reference to FIG. 9A to FIG. 9C. FIG. 9A to FIG. 9C are a flowchart of interaction in another terminal management method according to an embodiment of this application. FIG. 9A to FIG. 9C are described by using an example in which a reader is an access network device. The method is also applicable to a scenario in which a reader is a terminal device (for example, UE). As shown in FIG. 9A to FIG. 9C, the method includes the following steps.

901: An operation requester obtains an application identifier of a terminal, and an AMF obtains quantity information and/or identification information.

A possible implementation of step 901 is as follows: The operation requester and a BOSS system of an operator allocate the application identifier of the terminal according to the manner 1. A UDM in FIG. 9A to FIG. 9C is an example of the second core network device in FIG. 4A and FIG. 4B, and the UDM in FIG. 9A to FIG. 9C may be replaced with a UDR or another core network element. With reference to the manner 1 in FIG. 4A, it can be learned that, when the application identifier of the terminal is allocated according to the manner 1, the operation requester may obtain the application identifier of the terminal, and a second core network device (corresponding to the UDM in FIG. 9A to FIG. 9C) does not obtain the application identifier of the terminal. In the method embodiment shown in FIG. 9A to FIG. 9C, the operator does not pre-configure the application identifier of the terminal, and the operation requester allocates the application identifier of the terminal. In a possible implementation, the UDM, the operation requester, and the BOSS system of the operator perform the method procedure in the manner 1. In this way, the UDM can configure an allowed quantity, the operation requester can obtain the application identifier of the terminal, and a first core network device (the AMF in FIG. 9A to FIG. 9C) can obtain the quantity information and/or the identification information.

902: The terminal is initialized.

For step 902, refer to step 802. Step 901 and step 902 are optional. Step 901 and step 902 may be operations completed in advance before subsequent steps are performed.

903: The operation requester sends an operation instruction to the access network device.

For step 903, refer to step 803.

904: The access network device performs message exchange with the terminal.

For step 904, refer to step 804.

905: The terminal determines a registration state of the terminal.

For step 905, refer to step 805.

906: The terminal sends a registration request message to the access network device.

For step 906, refer to step 806.

907: The access network device may select an AMF that supports P-IoT.

For step 907, refer to step 807.

908: The access network device sends the registration request message from the terminal to the AMF.

For step 908, refer to step 808.

909: The AMF determines, based on the quantity information, whether to allow the terminal to access a network.

For step 909, refer to step 809. If the AMF determines to allow the terminal to access the network, step 910 is performed; or if the AMF determines not to allow the terminal to access the network, step 916 is performed, that is, a registration reject message is sent to the terminal.

910: The AMF sends a first authentication request message to an AUSF.

For step 910, refer to step 810. A difference between step 910 and step 810 lies in that the first authentication request message does not include the application identifier of the terminal.

The first authentication request message (for example, Nausf_UEAuthentication_Authenticate Request) may include a terminal identifier (or an encrypted terminal identifier). In a possible implementation, the first authentication request message includes one or more of the following: the terminal identifier, the encrypted terminal identifier, a random number, and a message authentication code.

911: The AUSF selects a UDM that supports P-IoT.

For step 911, refer to step 811.

912: The AUSF sends a second authentication request message to the UDM.

For step 912, refer to step 812. The second authentication request message (for example, Nudm_UEAuthentication GetRequest) may include the terminal identifier (TID) or the encrypted terminal identifier (CTID). A difference between step 912 and step 812 lies in that the second authentication request message does not include the application identifier of the terminal. If the first authentication request message sent by the AMF to the AUSF includes one or more of the following: the terminal identifier, the encrypted terminal identifier, the random number, and the message authentication code, the second authentication request message sent by the AUSF to the UDM may include one or more of the following: the terminal identifier, the encrypted terminal identifier, the random number, and the message authentication code.

913: The UDM performs authentication on the terminal based on the second authentication request message.

For step 913, refer to step 813.

In a possible implementation, the second authentication request message includes the terminal identifier (or the encrypted terminal identifier) of the terminal, the random number, and the message authentication code. The UDM may retrieve a security parameter based on the terminal identifier of the terminal or a plaintext part in the encrypted terminal identifier, and verify the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal).

914: The UDM sends a first authentication response message to the AUSF.

For step 914, refer to step 814.

915: The AUSF sends a second authentication response message to the AMF.

For step 915, refer to step 815.

916: The AMF sends a registration accept message or a registration reject message to the terminal.

For step 916, refer to step 816.

917: The terminal sends a NAS message to the AMF.

For step 917, refer to step 817.

918: The AMF sends data from the terminal to the operation requester through a NEF.

For step 918, refer to step 818.

919: The operation requester sends invalidation information to the UDM.

For step 919, refer to step 819.

920: The UDM updates or deletes identification information of an invalidated terminal.

For step 920, refer to step 820.

In a possible implementation, step 913 and step 914 performed by the UDM may be implemented by the AMF, and step 910 to step 915 may be replaced with the following: The AMF retrieves the security parameter based on the terminal identifier of the terminal or the plaintext part in the encrypted terminal identifier, and verifies the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal). If the AMF considers that the terminal passes the authentication, the AMF sends the registration accept message to the terminal. If the AMF considers that the terminal does not pass the authentication, the AMF sends the registration reject message to the terminal.

In this embodiment of this application, the UDM performs access management and authentication on the terminal without obtaining the application identifier of the terminal. In comparison with the method procedure in FIG. 8A to FIG. 8C, a privacy security requirement of an enterprise, a user, or the operation requester can be met, that is, the network does not obtain the application identifier of the terminal. Similarly, based on the terminal identifier, the network (that is, the UDM) may count a quantity of used terminals and prevent the terminal identifier from embezzlement.

In this embodiment of this application, the UDM performs access management by using the terminal identifier. If authentication needs to be performed on the terminal, the security parameter may be further written into the terminal when a tag is printed or after a tag is printed, so that when the terminal registers with the network, information (for example, a random number and a message authentication code) used for the authentication is sent to the network. In addition, one terminal identifier may be prevented from being used by a plurality of terminals further based on the terminal identifier. This helps the operator perform terminal management and charging.

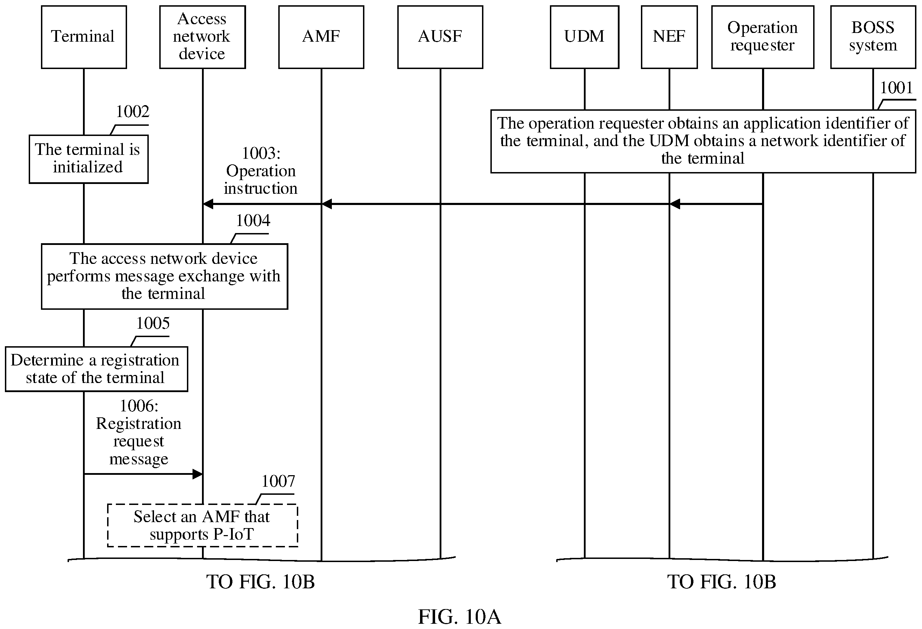

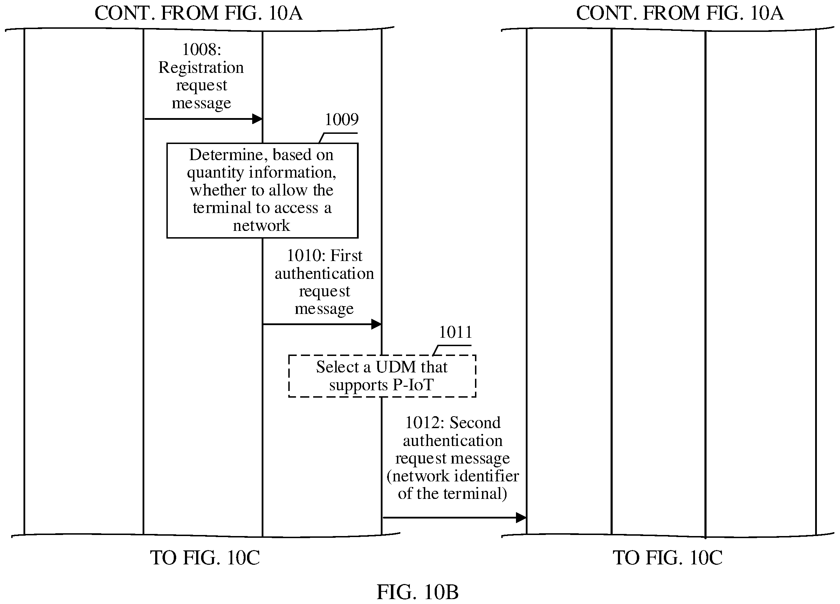

The following describes in detail the terminal management methods in FIG. 6A, FIG. 6B, and FIG. 7 in the foregoing embodiments with reference to FIG. 10A to FIG. 10C. FIG. 10A to FIG. 10C are a flowchart of interaction in another terminal management method according to an embodiment of this application. FIG. 10A to FIG. 10C are described by using an example in which a reader is an access network device. The method is also applicable to a scenario in which a reader is a terminal device (for example, UE). As shown in FIG. 10A to FIG. 10C, the method includes the following steps.

1001: An operation requester obtains an application identifier of a terminal, and a UDM obtains a network identifier of the terminal.

A possible implementation of step 1001 is as follows: The operation requester, the UDM (or a UDR), and a BOSS system of an operator allocate the application identifier and the network identifier that are of the terminal according to the manner 2. With reference to the manner 2 in FIG. 4A, it can be learned that, when the application identifier and the network identifier that are of the terminal are allocated according to the manner 2, the operation requester may obtain the application identifier of the terminal, and a second core network device may obtain the network identifier of the terminal. The UDM in FIG. 10A to FIG. 10C is an example of the second core network device in FIG. 4A and FIG. 4B, the UDM in FIG. 10A to FIG. 10C may be replaced with a UDR or another core network element, and an AMF in FIG. 10A to FIG. 10C is an example of the first core network device in FIG. 4A and FIG. 4B. In the method embodiment shown in FIG. 10A to FIG. 10C, the operator does not pre-configure the application identifier of the terminal, and the operation requester allocates the application identifier of the terminal. In a possible implementation, the second core network device (for example, a UDM or a UDR), a first core network device (for example, the AMF), that is, the operation requester, and the BOSS system of the operator execute the method procedure in the manner 2. In this way, the second core network device can obtain the network identifier of the terminal, the operation requester can obtain the application identifier of the terminal, and the first core network device (the AMF in FIG. 10A to FIG. 10C) can obtain quantity information and/or identification information.

1002: The terminal is initialized.

For step 1002, refer to step 802. Step 1001 and step 1002 are optional. Step 1001 and step 1002 may be operations completed in advance before subsequent steps are performed.

1003: The operation requester sends an operation instruction to the access network device.

For step 1003, refer to step 803.

1004: The access network device performs message exchange with the terminal.

For step 1004, refer to step 804.

1005: The terminal determines a registration state of the terminal.

For step 1005, refer to step 805.

1006: The terminal sends a registration request message to the access network device.

For step 1006, refer to step 806. The registration request message may include the network identifier of the terminal. In a possible implementation, the registration request message may further include one or more of the following: the application identifier of the terminal, a terminal identifier (or an encrypted terminal identifier), a random number, and a message authentication code. The network identifier of the terminal is an identifier that is allocated by the operator to the terminal and that is used to implement access management or authentication.

1007: The access network device selects an AMF that supports P-IoT.

For step 1007, refer to step 807.

1008: The access network device sends the registration request message from the terminal to the AMF.

For step 1008, refer to step 808.

1009: The AMF determines, based on the quantity information, whether to allow the terminal to access a network.

For step 1009, refer to step 809. If the AMF determines to allow the terminal to access the network, step 1010 is performed; or if the AMF determines not to allow the terminal to access the network, step 1016 is performed, that is, a registration reject message is sent to the terminal.

1010: The AMF sends a first authentication request message to an AUSF.

For step 1010, refer to step 810.

The first authentication request message (for example, Nausf_UEAuthentication_Authenticate Request) may include the network identifier of the terminal. A difference between step 1010 and step 810 lies in that the first authentication request message includes the network identifier of the terminal.

1011: The AUSF selects a UDM that supports P-IoT.

For step 1011, refer to step 811.

1012: The AUSF sends a second authentication request message to the UDM.

For step 1012, refer to step 812. The second authentication request message (for example, Nudm_UEAuthentication GetRequest) may include the network identifier of the terminal. A difference between step 1012 and step 812 lies in that the second authentication request message includes the network identifier of the terminal. If the first authentication request message sent by the AMF to the AUSF includes one or more of the following: the network identifier of the terminal, the terminal identifier, the encrypted terminal identifier, the random number, and the message authentication code, the second authentication request message sent by the AUSF to the UDM may include one or more of the following: the network identifier of the terminal, the terminal identifier, the encrypted terminal identifier, the random number, and the message authentication code.

1013: The UDM performs authentication on the terminal based on the second authentication request message.

For step 1013, refer to step 813. A difference between step 1013 and step 813 lies in that the UDM performs authentication on the terminal according to different manners. In a possible implementation, the second authentication request message includes the network identifier of the terminal, the random number, and the message authentication code. The UDM may retrieve a security parameter based on the network identifier of the terminal, and verify the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal).

In a possible implementation, if the second authentication request message sent by the AUSF to the UDM includes the terminal network identifier, the terminal application identifier, the terminal identifier, and the encrypted terminal identifier, the UDM may record a correspondence. The correspondence includes a correspondence between two or more of the following: the terminal network identifier, the terminal application identifier, the terminal identifier, and the encrypted terminal identifier. If the second authentication request message sent by the AUSF to the UDM includes the encrypted terminal identifier, the UDM may decrypt the encrypted terminal identifier, to obtain the terminal identifier. The UDM may count a quantity of terminals that have been used by the operation requester based on the correspondence.

A possible implementation of step 1013 is as follows: The UDM retrieves the security parameter based on the terminal network identifier in the second authentication request message, verifies the message authentication code based on the security parameter and the random number, and if the verification succeeds, records the terminal network identifier, and counts the quantity of terminals that have been used by the operation requester. For example, the second authentication request message includes a terminal network identifier 1 of a terminal 1. After the terminal 1 passes authentication, the UDM checks whether the terminal network identifier 1 has been recorded. If the UDM has not recorded the terminal network identifier 1, the UDM adds one to the quantity of terminals that have been used by the operation requester; or if the UDM has recorded the terminal application identifier 1, the UDM keeps the quantity of terminals that have been used by the operation requester unchanged.

Another possible implementation of step 1013 is as follows: The UDM retrieves the security parameter based on the terminal network identifier in the second authentication request message, and verifies the message authentication code based on the security parameter and the random number. If the verification succeeds, the UDM may record the terminal network identifier and a correspondence of the terminal network identifier. The correspondence includes a correspondence between the terminal network identifier and one or more of the following: the encrypted terminal identifier, the terminal identifier, and the application identifier of the terminal. The UDM may count a quantity of terminals used by the operation requester based on the correspondence. For example, the second authentication request message includes a terminal network identifier 1 of a terminal 1. After the terminal 1 passes authentication, the UDM checks whether the terminal network identifier 1 and a correspondence of the terminal network identifier 1 have been recorded. If the UDM has not recorded the terminal network identifier 1 and has not recorded the correspondence of the terminal network identifier 1, the UDM adds one to the quantity of terminals that have been used by the operation requester; or if the UDM has recorded the terminal application identifier 1 or the correspondence of the terminal application identifier 1, the UDM keeps the quantity of terminals that have been used by the operation requester unchanged.

1014: The UDM sends a first authentication response message to the AUSF.

For step 1014, refer to step 814.

1015: The AUSF sends a second authentication response message to the AMF.

For step 1015, refer to step 815.

1016: The AMF sends a registration accept message or a registration reject message to the terminal.

For step 1016, refer to step 816.

1017: The terminal sends a NAS message to the AMF.

For step 1017, refer to step 817.

1018: The AMF sends data from the terminal to the operation requester through a NEF.

For step 1018, refer to step 818.

1019: The operation requester sends invalidation information to the UDM.

For step 1019, refer to step 819.

1020: The UDM updates or deletes identification information of an invalidated terminal.

For step 1020, refer to step 820.

In a possible implementation, step 1013 and step 1014 performed by the UDM may be implemented by the AMF, and step 1010 to step 1015 may be replaced with the following: The AMF retrieves the security parameter based on the network identifier of the terminal, and verifies the message authentication code based on the security parameter and the random number. If the verification succeeds, it may be considered that the terminal passes the authentication (or it is considered that the terminal is a trusted terminal); or if the verification fails, it may be considered that the terminal does not pass the authentication (or it is considered that the terminal is not a trusted terminal). If the AMF considers that the terminal passes the authentication, the AMF sends the registration accept message to the terminal. If the AMF considers that the terminal does not pass the authentication, the AMF sends the registration reject message to the terminal.

In this embodiment of this application, a core network can perform access management and authentication on the terminal without obtaining the application identifier of the terminal. In comparison with the method procedure in FIG. 8A to FIG. 8C, a privacy security requirement of an enterprise can be met, that is, the network does not obtain the application identifier of the terminal. In comparison with the method procedure in FIG. 9A to FIG. 9C, the network performs access management and authentication on the terminal by using the network identifier of the terminal. This mechanism can meet a requirement of an enterprise for not reporting data to the network (for example, the enterprise does not report the application identifier and the terminal identifier that are of the terminal). Similarly, based on the terminal identifier, the network may count a quantity of used terminals and prevent the terminal identifier from embezzlement.

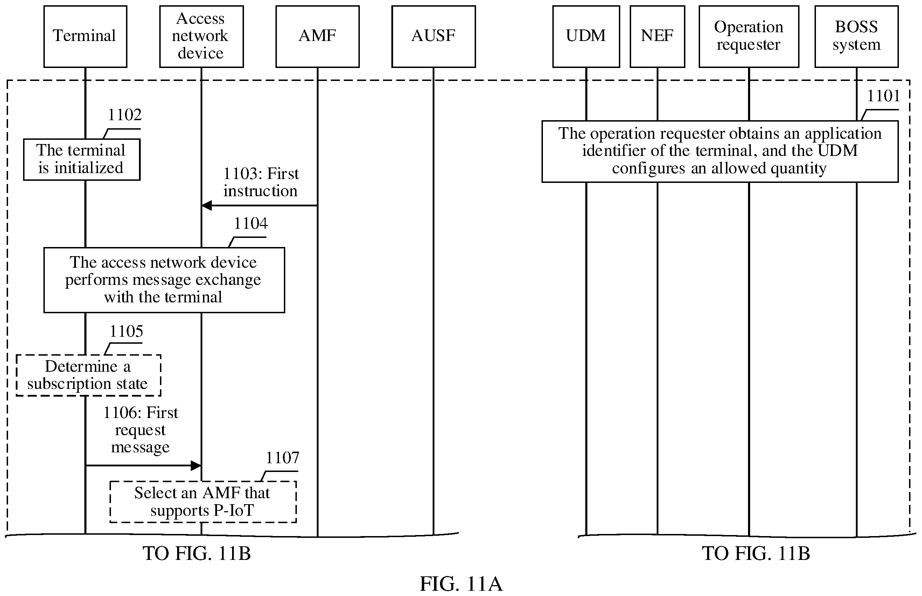

The following describes in detail the terminal management methods in FIG. 6A, FIG. 6B, and FIG. 7 in the foregoing embodiments with reference to FIG. 11A to FIG. 11D. FIG. 11A to FIG. 11D are a flowchart of interaction in another terminal management method according to an embodiment of this application. FIG. 11A to FIG. 11D are described by using an example in which a reader is an access network device. The method is also applicable to a scenario in which a reader is a terminal device (for example, UE). As shown in FIG. 11A to FIG. 11D, the method includes the following steps.

1101: An operation requester obtains an application identifier of a terminal and a UDM configures an allowed quantity.

A possible implementation of step 1001 is as follows: The operation requester, a second core network device (for example, a UDM or a UDR), a first core network device (an AMF in FIG. 11A to FIG. 11D), and a BOSS system of an operator execute the method procedure in the manner 1. With reference to the manner 1 in FIG. 4A, it can be learned that, when the method procedure in the manner 1 is executed, the operation requester may obtain the application identifier of the terminal, the second core network device may configure an allowed quantity, and the first core network device (the AMF in FIG. 8A to FIG. 8C) may obtain quantity information and/or identification information. The UDM in FIG. 11A to FIG. 11D is an example of the second core network device in FIG. 4A and FIG. 4B, the UDM in FIG. 11A to FIG. 11D may be replaced with a UDR or another core network element, and the AMF in FIG. 11A to FIG. 11D is an example of the first core network device in FIG. 4A and FIG. 4B. In the method embodiment shown in FIG. 11A to FIG. 11D, the operator does not pre-configure the application identifier of the terminal, and the operation requester allocates the application identifier of the terminal.

1102: The terminal is initialized.

For step 1102, refer to step 802. Step 1101 and step 1102 are optional. Step 1101 and step 1102 may be operations completed in advance before subsequent steps are performed.

1103: The AMF sends a first instruction to the access network device.

The first instruction (which may be referred to as an online subscription instruction) is used for performing online subscription or is used to trigger the terminal to perform online subscription. Alternatively, the first instruction instructs the terminal to perform online subscription.

1104: The access network device performs message exchange with the terminal.

In a possible implementation, the access network device learns that the first instruction is an online subscription instruction, and the access network device performs message exchange with the terminal based on the first instruction, for example, notifies or triggers the terminal to perform online subscription. In another possible implementation, the access network device forwards the first instruction to the terminal, and the access network device performs message exchange with the terminal, to notify or trigger the terminal to perform online subscription.

1105: The terminal determines a subscription state.

In a possible implementation, after receiving the first instruction forwarded by the access network device, the terminal may determine the subscription state of the terminal. If the terminal is in an unsubscribed state or has not obtained subscription data, the terminal performs step 1106; or if the terminal has obtained subscription data or the terminal is in a subscribed state, step 1106 to step 1116 may be skipped. The subscription data may include the identification information and/or authentication information of the terminal. The identification information may include a terminal network identifier. After the terminal obtains the identification information and/or the authentication information allocated by a core network device (for example, the UDM), the terminal adjusts the unsubscribed state to a subscribed state. Alternatively, before the terminal obtains the identification information and/or the authentication information allocated by a core network device (for example, the UDM), the terminal has not obtained the subscription data; and after the terminal obtains the identification information and/or the authentication information allocated by the core network device (for example, the UDM), the terminal obtains the subscription data.

In a possible implementation, after the terminal learns, by performing message exchange with the access network device, that the online subscription needs to be performed, the terminal may determine the subscription state of the terminal. If the terminal is in the unsubscribed state or has not obtained the subscription data, the terminal performs step 1106; or if the terminal has obtained the subscription data or the terminal is in the subscribed state, step 1106 to step 1116 may be skipped.

Step 1105 is optional. In a possible implementation, the terminal may not perform step 1105, but directly performs step 1106 after performing step 1104.

1106: The terminal sends a first request message to the access network device.

The first request message (which, for example, may be an online subscription request message or a registration request message, where the registration request message is used to indicate the network with which the terminal registers to perform online subscription) is used to request to perform online subscription.

In a possible implementation, the first request message may include one or more of the following: an enterprise identifier (or an operation requester identifier or a user identifier), a network identifier that is of the terminal and which is an empty set (that is, an empty terminal network identifier), a random number, and a message authentication code. The message authentication code may be a value obtained by encrypting the random number or executing a hash algorithm on the random number. In a possible implementation, if a network serves a plurality of enterprises or users or operation requesters, the network may allocate network identifiers based on enterprise identifiers (or user identifiers or operation requester identifiers) sent by terminals. If a network serves only one enterprise (or a user or an operation requester), the terminal may not send an enterprise identifier (or a user identifier or an operation requester identifier). In another possible implementation, the first request message sent by the terminal includes a random number and a message authentication code, and the network may allocate a network identifier of the terminal to the terminal after the terminal passes authentication.

The access network device selects the AMF that supports P-IoT.

The access network device may select the AMF that supports online subscription of P-IoT. The AMF that supports the online subscription of P-IoT has functions of performing operations performed by the AMF in FIG. 11A to FIG. 11D.

1107: The access network device selects the AMF that supports P-IoT.

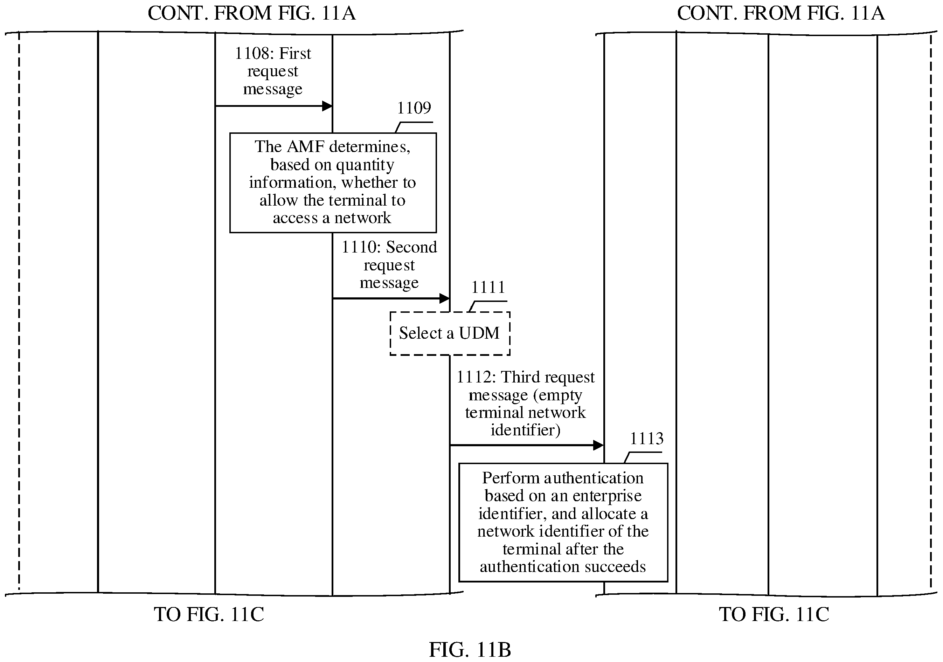

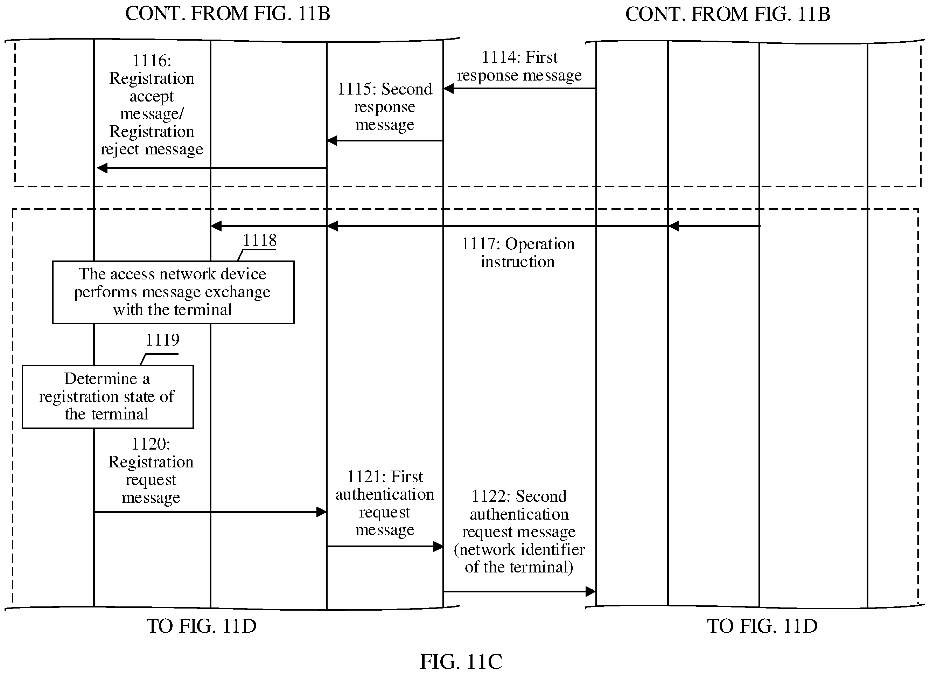

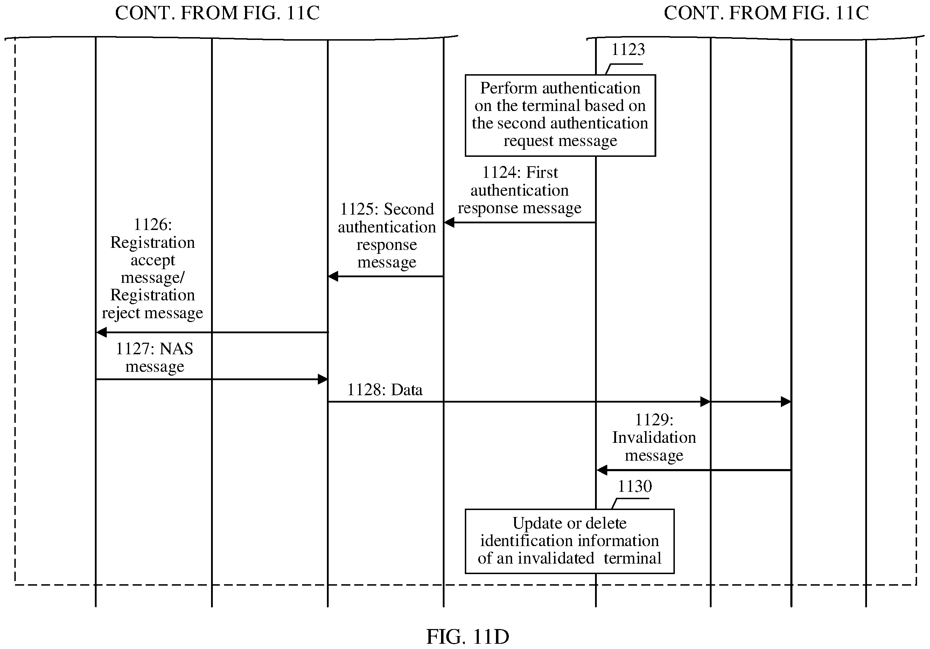

The access network device may select the AMF that supports the online subscription of P-IoT. The AMF that supports the online subscription of P-IoT has the functions of performing the operations performed by the AMF in FIG. 11 Ato FIG. 11D.

1108: The access network device sends the first request message from the terminal to the AMF.

The first request message may include one or more of the following: the enterprise identifier (or the user identifier or the operation requester identifier), the empty terminal network identifier, the random number, and the message authentication code.

1109: The AMF determines, based on the quantity information, whether to allow the terminal to access the network.

If the AMF determines to allow the terminal to access the network, step 1110 is performed; or if the AMF determines not to allow the terminal to access the network, step 1116 is performed, that is, a registration reject message is sent to the terminal.

1110: The AMF sends a second request message to an AUSF.

The second request message (which, for example, may be an authentication message or Nausf_UEAuthentication_Authenticate Request) is used to request the core network device (for example, the UDM) to perform online subscription. If the first request message sent by the terminal includes one or more of the following: the enterprise identifier (or the user identifier or the operation requester identifier), the empty terminal network identifier, the random number, and the message authentication code, the second request message sent by the AMF to the AUSF may include one or more of the following: the enterprise identifier (or the user identifier or the operation requester identifier), the empty terminal network identifier, the random number, and the message authentication code. In a possible implementation, the AMF sends indication information 3 (for example, P-IoT indication information) to the AUSF, to indicate the online subscription, the online subscription of the passive internet of things, or online subscription of a passive internet of things terminal. The indication information 3 sent by the AMF to the AUSF may be included in the second request message, or may be included in another message.

Before sending the second request message to the AUSF, the AMF may select the AUSF that supports P-IoT (or supports the online subscription of P-IoT). The AUSF that supports P-IoT (or supports the online subscription of P-IoT) has functions of performing operations performed by the AUSF in FIG. 11A to FIG. 11D. In a possible implementation, the AMF may learn, based on the first request message or from the access network device, that the AUSF that supports P-IoT (or supports the online subscription of P-IoT) needs to be selected. In a possible implementation, a type of the first request message is a specific type, and the AMF may determine, based on the message type of the first request message, that the AUSF that supports P-IoT (or supports the online subscription of P-IoT) needs to be selected. In another possible implementation, the access network device is an access network device having a capability of supporting P-IoT, and the AMF learns, from the access network device or based on the capability of the access network device, that the AUSF that supports P-IoT (or supports the online subscription of P-IoT) needs to be selected.

1111: The AUSF selects the UDM.

The AUSF selects the UDM that supports P-IoT (or the online subscription of P-IoT). The UDM that supports P-IoT (or supports the online subscription of P-IoT) has functions of performing operations performed by the UDM in FIG. 11A to FIG. 11D. In a possible implementation, the AUSF learns, based on the indication information 3 sent by the AMF or the second request message, that the UDM that supports P-IoT (or supports the online subscription of P-IoT) needs to be selected.

1112: The AUSF sends a third request message to the UDM.

The third request message (which, for example, may be an authentication request message or Nudm _UEAuthentication GetRequest) is used to request to perform authentication on the terminal. The third request message may include one or more of the following: the enterprise identifier (or the user identifier or the operation requester identifier), the empty terminal network identifier, the random number, and the message authentication code. For example, the second request message sent by the AMF to the AUSF includes one or more of the following: the enterprise identifier (or the user identifier or the operation requester identifier), the empty terminal network identifier, the random number, and the message authentication code; and the third request message sent by the AUSF to the UDM may include one or more of the following: the enterprise identifier (or the user identifier or the operation requester identifier), the empty terminal network identifier, the random number, and the message authentication code. In a possible implementation, the AUSF sends indication information 4 (for example, P-IoT indication information) to the UDM, to indicate the online subscription, the online subscription of the passive internet of things, or the online subscription of the passive internet of things terminal. The indication information 4 sent by the AUSF to the UDM may be included in the third request message, or may be included in another message.

1113: The UDM performs authentication based on the enterprise identifier (or the user identifier or the operation requester identifier), and allocates the network identifier of the terminal after the authentication succeeds.

After the terminal passes the authentication, the UDM may further allocate a security parameter to the terminal. The security parameter is used to authenticate the terminal. The UDM may further record a correspondence between the network identifier and the security parameter that are allocated to the terminal, to retrieve the security parameter based on the network identifier of the terminal. For example, the terminal may process the random number by using the security parameter allocated by the UDM to the terminal, to obtain the message authentication code. The registration request message sent by the terminal may include the random number and the message authentication code. The UDM may retrieve the security parameter based on the network identifier of the terminal, and verify the message authentication code by using the security parameter.

In a possible implementation, if the third request message includes one or more of the following: the enterprise identifier (or the user identifier or the operation requester identifier), the empty terminal network identifier, the random number, or the message authentication code, the UDM retrieves the security parameter based on the enterprise identifier (or the user identifier or the operation requester identifier). The UDM verifies the message authentication code based on the retrieved security parameter and the random number. If the verification succeeds, it may be considered that the terminal passes the authentication (or it is considered that the terminal is a trusted terminal, or it is considered that the terminal is from a trusted operation requester). The UDM verifies the message authentication code based on the security parameter and the random number. If the verification fails, it may be considered that the terminal does not pass the authentication (or it is considered that the terminal is not a trusted terminal). In a possible implementation, the UDM may select an authentication method based on the indication information 4 sent by the AUSF to the UDM (that is, select a method applicable to the online subscription, the online subscription of the passive internet of things, or the online subscription of the passive internet of things terminal).

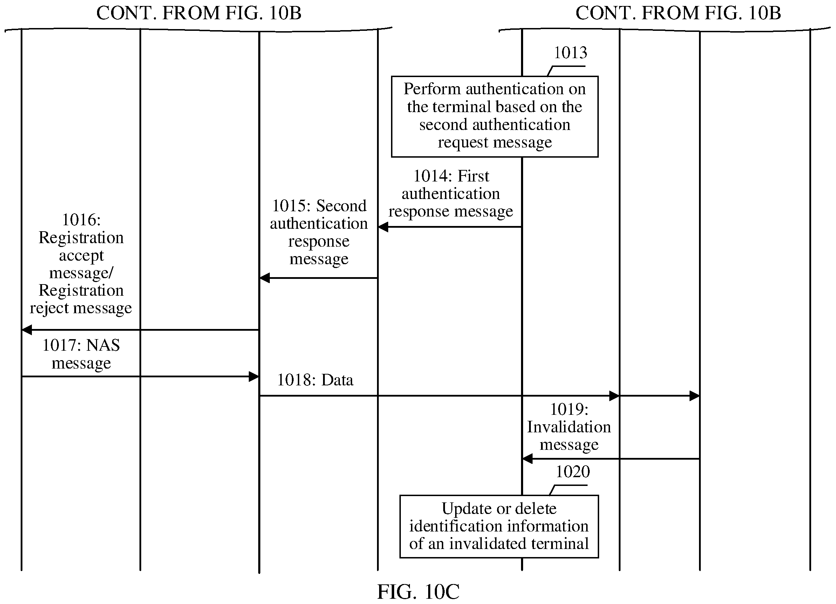

In a possible implementation, after the UDM allocates the network identifier of the terminal, the UDM may record a correspondence between the network identifier of the terminal and the enterprise identifier (or the user identifier or the operation requester identifier). Optionally, the UDM may count, based on the network identifier of the terminal or the correspondence, a quantity of terminals used by the operation requester, or the UDM may count a quantity of terminals used by the operation requester during subsequent terminal registration. That the UDM may count the quantity of used terminals based on the network identifier of the terminal or the correspondence may refer to step 1013 in FIG. 10C.

1114: The UDM sends a first response message to the AUSF.

The first response message (which, for example, may be an authentication response message or Nudm_UEAuthentication_Get Response) may include an authentication result. The authentication result may include, for example, that the authentication succeeds or the authentication fails. If the authentication result included in the first response message is that the authentication succeeds, the first response message may further include the network identifier and the security parameter that are allocated by the UDM to the terminal. If the authentication result included in the first response message is that the authentication succeeds, the first response message may include only the authentication result.

1115: The AUSF sends a second response message to the AMF.

The second response message (which, for example, may be an authentication response message, and Nausf_UEAuthentication_Authenticate Response) may include an authentication result, which may include, for example, that the authentication succeeds or the authentication fails. If the authentication result included in the second response message is that the authentication succeeds, the second response message may further include the network identifier and the security parameter that are allocated by the UDM to the terminal.

1116: The AMF sends a registration accept message or a registration reject message to the terminal.

The registration accept message (or referred to as an online subscription accept message or an online subscription complete message) may include the network identifier allocated to the terminal. The registration accept message may further include the security parameter. The registration accept message indicates that the online subscription of the terminal succeeds. Alternatively, the registration accept message indicates that the terminal completes the online subscription. The registration reject message (or referred to as an online subscription reject message, an online subscription failure message, or the like) indicates that the online subscription of the terminal fails. Alternatively, the registration reject message indicates that the online subscription of the terminal fails or is not completed.

In a possible implementation, if the terminal passes the authentication, the AMF sends the online subscription accept message, the online subscription complete message, or the registration accept message (for example, registrationaccept) to the terminal. The online subscription accept message, the online subscription complete message, and the registration accept message all include the network identifier allocated to the terminal. If the terminal does not pass the authentication, the AMF sends the online subscription failure message, the online subscription reject message, or the registration reject message (for example, Registration Reject) to the terminal. The online subscription failure message, the online subscription reject message, and the registration reject message all indicate that the online subscription fails or the terminal does not pass the authentication.

In a possible implementation, the registration accept message or the registration reject message may be a NAS message, or may be included in a NAS message for sending (for example, NAS Registration Accept, NAS Onboarding Accept, NAS Onboarding complete, NAS Registration Reject, NAS Onboarding Reject, or NAS Onboarding failed).

1117: The operation requester sends an operation instruction to the access network device.

For step 1003, refer to step 803.

The operation instruction may include application identifiers of one or more terminals. The operation requester may send the operation instruction to the access network device through a control plane channel or a user plane channel. In the figure, an example in which the operation requester sends the operation instruction to the access network device through the control plane channel is used for descriptions. The operation requester (for example, a P-IoT AF) may send the operation instruction to the access network device by using through a NEF and the AMF, or the operation requester may send the operation instruction to the access network device through the AMF. If the operation instruction is sent through the user plane channel, the operation requester (a P-IoT server) may send the operation instruction to the access network device through a UPF.

1118: The access network device performs message exchange with the terminal.

For step 1118, refer to step 804.

1119: The terminal determines a registration state of the terminal.

For step 1119, refer to step 805.

1120: The terminal sends a registration request message to the AMF.

The registration request message may include the network identifier of the terminal. In a possible implementation, the registration request message may further include one or more of the following: the application identifier of the terminal, the terminal identifier (or an encrypted terminal identifier), the random number, and the message authentication code. The network identifier of the terminal is an identifier that is allocated by the operator to the terminal and that is used for access management or authentication.

Step 1120 may be replaced with the following: The terminal sends a registration request message to the AMF through the access network device. In a possible implementation, the registration request message is a NAS message (for example, NAS Registration Request). The terminal sends the registration request message to the access network device, and the access network device may select the AMF that supports P-IoT, and send the registration request message from the terminal to the selected AMF.

1121: The AMF sends a first authentication request message to the AUSF.

For step 1121, refer to step 810.

The first authentication request message (for example, Nausf_UEAuthentication_Authenticate Request) may include the network identifier of the terminal. The first authentication request message is used to request to perform authentication on the terminal. If the registration request message sent by the terminal includes one or more of the following: the application identifier of the terminal, the terminal identifier (or the encrypted terminal identifier), the random number, and the message authentication code, the first authentication request message sent by the AMF to the AUSF may include one or more of the following: the application identifier of the terminal, the terminal identifier (or the encrypted terminal identifier), the random number, and the message authentication code. In a possible implementation, the AMF sends indication information 1 (for example, P-IoT indication information) to the AUSF, to indicate that the authentication is authentication for the passive internet of things or authentication for the passive internet of things terminal.

Optionally, the AMF selects the AUSF that supports P-IoT. In a possible implementation, the AMF may learn, based on the network identifier of the terminal in the registration request message or based on the indication information 1, that the AUSF that supports P-IoT needs to be selected. In a possible implementation, the network identifier of the terminal is different from an identifier of a 3GPP terminal, such as an SUCI, an SUPI, a 5G-GUTI, or a TMSI. The AMF learns, based on the application identifier of the terminal, that the terminal is the passive internet of things terminal or P-IoT terminal, and the AUSF that supports P-IoT needs to be selected.

1122: The AUSF sends a second authentication request message to the UDM.

For step 1122, refer to step 812.

The second authentication request message (for example, Nausf_UEAuthentication_Authenticate Request) may include the network identifier of the terminal. The second authentication request message is used to request to perform authentication on the terminal. If the first authentication request message sent by the AMF to the AUSF includes one or more of the following: the application identifier of the terminal, the terminal identifier (or the encrypted terminal identifier), the random number, and the message authentication code, the second authentication request message sent by the AUSF to the UDM may include one or more of the following: the application identifier of the terminal, the terminal identifier (or the encrypted terminal identifier), the random number, and the message authentication code. In a possible implementation, the AMF sends indication information 2 (for example, P-IoT indication information) to the AUSF, to indicate that the authentication is authentication applied to the passive internet of things or authentication for the passive internet of things terminal. In a possible implementation, the indication information 2 is used to indicate that an authentication procedure is one or more of the following: one-way authentication, two-way authentication, authentication performed by the terminal on the network or the operation requester, or authentication performed by the network or the operation requester on the terminal.

Optionally, the AUSF selects the UDM that supports P-IoT. In a possible implementation, the AUSF learns, based on the indication information sent by the AMF or based on the network identifier of the terminal, that the UDM that supports P-IoT needs to be selected.

1123: The UDM performs authentication on the terminal based on the second authentication request message.

For step 1123, refer to step 1013.

1124: The UDM sends a first authentication response message to the AUSF.

For step 1124, refer to step 814.

1125: The AUSF sends a second authentication response message to the AMF.

For step 1125, refer to step 815.

1126: The AMF sends a registration accept message or a registration reject message to the terminal.

For step 1126, refer to step 816.

1127: The terminal sends a NAS message to the AMF.

For step 1127, refer to step 817.

1128: The AMF sends data from the terminal to the operation requester through the NEF.

For step 1128, refer to step 818.

1129: The operation requester sends invalidation information to the UDM.

For step 1129, refer to step 819.

1130: The UDM updates or deletes identification information of an invalidated terminal.

For step 1130, refer to step 820.

In a possible implementation, step 1113 and step 1114 that are performed by the UDM may be implemented by the AMF, and step 1110 to step 1115 may be replaced with the following: The AMF performs authentication based on the enterprise identifier, and allocates the network identifier of the terminal after the authentication succeeds. It should be understood that, if the terminal passes the authentication, the registration accept message is sent to the terminal; otherwise, the registration reject message is sent to the terminal.

In the method procedure in FIG. 11A to FIG. 11D, step 1101 to step 1116 are a procedure of performing online subscription to obtain the network identifier of the terminal, and step 1107 to step 1130 are steps of executing a registration procedure.

In comparison with the method procedure in FIG. 10A to FIG. 10C, in the method procedure in FIG. 11A to FIG. 11D, the network identifier of the terminal is sent to the terminal by using an online subscription procedure. This brings the following beneficial effects: The network identifier of the terminal may not need to be configured in an enterprise in advance, and the enterprise can be prevented from using a network identifier of one terminal in a plurality of terminals. That is, the terminal can obtain the network identifier of the terminal by using a unified procedure, which is more secure. In addition, the AMF determines, based on the quantity information, whether to allow the terminal to access the network. If a quantity of terminal devices accessing the network among terminals corresponding to the operation requester is less than or equal to a quantity threshold, it is unnecessary to allocate the network identifier to the terminal (belonging to the operation requester) that requests to perform online subscription. In this way, unnecessary operations can be reduced.

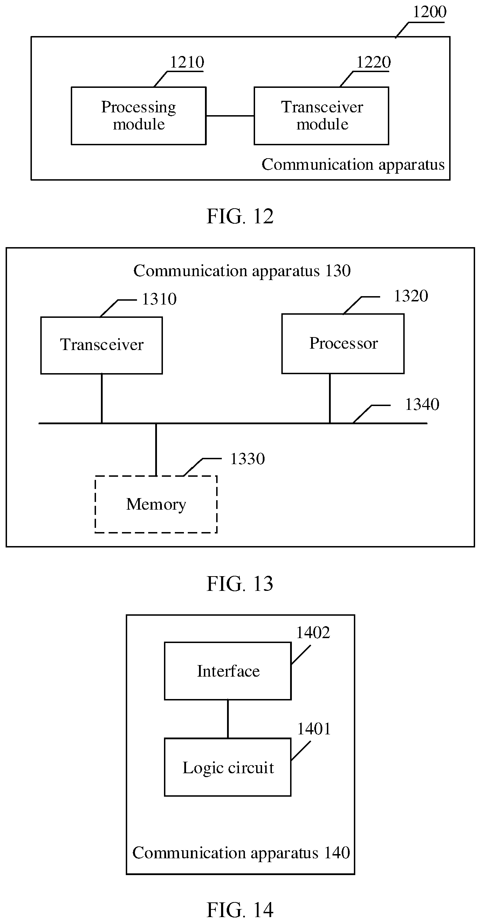

FIG. 12 is a diagram of a structure of a communication apparatus 1200. The communication apparatus 1200 may correspondingly implement the functions or steps implemented by the core network device (for example, the first core network device or the second core network device in FIG. 4A and FIG. 4B and FIG. 6B) in the foregoing method embodiments, or may implement the functions or steps implemented by the operation requester in the foregoing method embodiments. The communication apparatus may include a processing module 1210 and a transceiver module 1220. Optionally, a storage unit may be further included. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing units may be independently disposed, or may be partially or completely integrated. For example, the transceiver module 1220 may include a sending module and a receiving module.

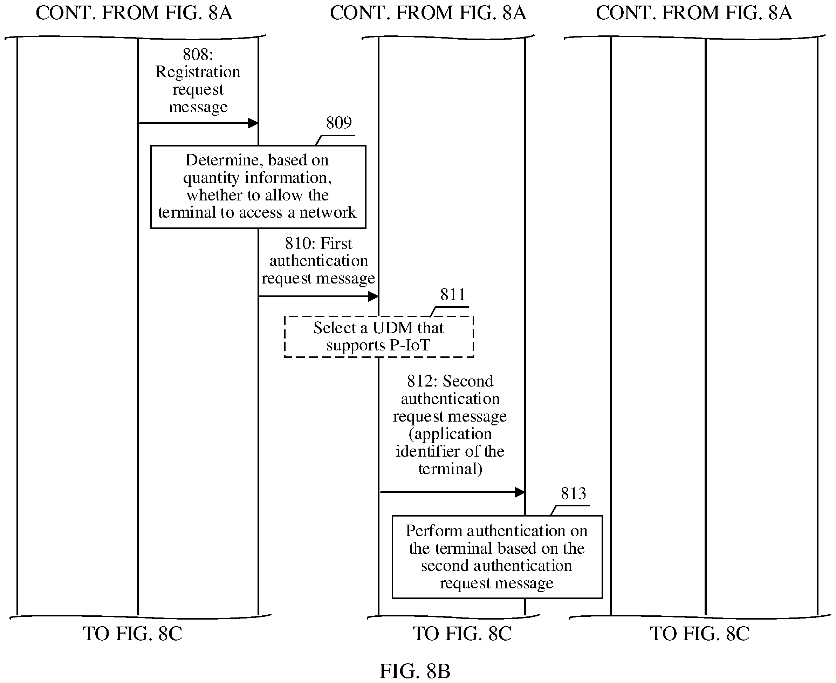

In some possible implementations, the communication apparatus 1200 can correspondingly implement the operations and functions of the first core network device in the foregoing method embodiments. For example, the communication apparatus 1200 may be a first core network device, or may be a component (for example, a chip or a circuit) used in a first core network device. For example, the transceiver module 1220 may be configured to perform all receiving or sending operations performed by the first core network device or the AMF in the embodiments shown in FIG. 4A and FIG. 4B, FIG. 6A, FIG. 6B, FIG. 7, FIG. 8A to FIG. 8C, FIG. 9A to FIG. 9C, FIG. 10A to FIG. 10C, and FIG. 11A to FIG. 11D, for example, step 405, step 417, step 427, and step 435 in the embodiment shown in FIG. 4A and FIG. 4B, and step 601A and step 602A in the embodiment shown in FIG. 6A, and/or configured to support another process of the technology described in this specification. The processing module 1210 is configured to perform all operations, except receiving and sending operations, performed by the first core network device or the AMF in the embodiments shown in FIG. 6A, FIG. 6B, FIG. 7, FIG. 8A to FIG. 8C, FIG. 9A to FIG. 9C, FIG. 10A to FIG. 10C, and FIG. 11A to FIG. 11D, for example, step 602A in the embodiment shown in FIG. 6A, step 702 in the embodiment shown in FIG. 7, and step 809 in the embodiment shown in FIG. 8B.

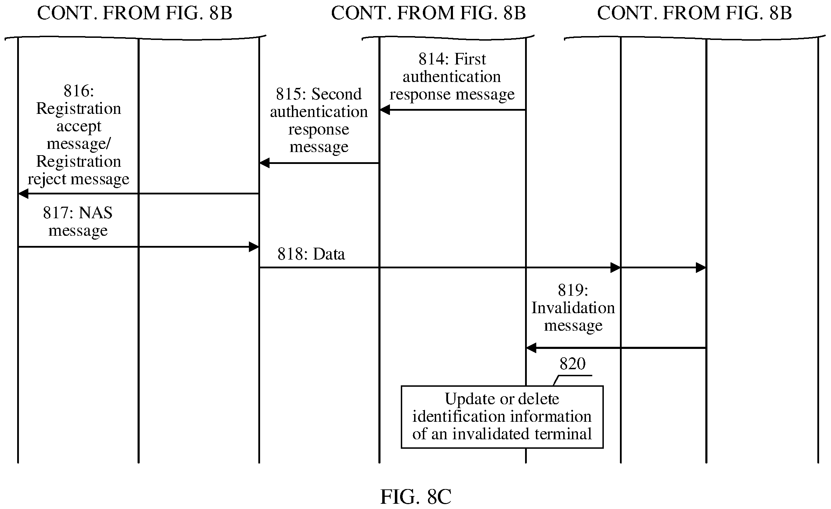

In some possible implementations, the communication apparatus 1200 can correspondingly implement the operations and functions of the second core network device in the foregoing method embodiments. For example, the communication apparatus 1200 may be a second core network device, or may be a component (for example, a chip or a circuit) used in a second core network device. For example, the transceiver module 1220 may be configured to perform all receiving or sending operations performed by the second core network device in the embodiments shown in FIG. 4A and FIG. 4B, FIG. 6B, FIG. 8A to FIG. 8C, FIG. 9A to FIG. 9C, FIG. 10A to FIG. 10C, and FIG. 11A to FIG. 11D, for example, step 401, step 405, step 411, step 417, step 421, step 425, step 427, step 432, and step 435 in the embodiment shown in FIG. 4A and FIG. 4B, step 602B and step 603B in the embodiment shown in FIG. 6B, and step 812, step 814, and step 819 in the embodiment shown in FIG. 8B and FIG. 8C, and/or configured to support another process of the technology described in this specification. The processing module 1210 is configured to perform all operations, except receiving and sending operations, performed by the second core network device in the embodiments shown in FIG. 4A and FIG. 4B, FIG. 8A to FIG. 8C, FIG. 9A to FIG. 9C, FIG. 10A to FIG. 10C, and FIG. 11A to FIG. 11D, for example, step 402, step 412, step 415, step 422, step 426, and step 433 in the embodiment shown in FIG. 4A and FIG. 4B, and step 813 and step 820 in the embodiment shown in FIG. 8B and FIG. 8C.

In some possible implementations, the communication apparatus 1200 can correspondingly implement the operations and functions of the operation requester in the foregoing method embodiments. For example, the communication apparatus 1200 may be an operation requester, or may be a component (for example, a chip or a circuit) used in an operation requester. For example, the transceiver module 1220 may be configured to perform all receiving or sending operations performed by the operation requester in the embodiments shown in FIG. 4A and FIG. 4B, FIG. 5, FIG. 6A, FIG. 6B, FIG. 8A to FIG. 8C, FIG. 9A to FIG. 9C, FIG. 10A to FIG. 10C, and FIG. 11A to FIG. 11D, for example, step 403, step 413, step 416, step 423, step 425, and step 434 in the embodiment shown in FIG. 4A and FIG. 4B, step 501 in the embodiment shown in FIG. 5, step 602A in the embodiment shown in FIG. 6A, and step 803, step 818, and step 819 in the embodiment shown in FIG. 8A and FIG. 8C, and/or configured to support another process of the technology described in this specification. The processing module 1210 is configured to perform all operations, except receiving and sending operations, performed by the operation requester in the embodiments shown in FIG. 4A and FIG. 4B, FIG. 5, FIG. 8A to FIG. 8C, FIG. 9A to FIG. 9C, FIG. 10A to FIG. 10C, and FIG. 11A to FIG. 11D, for example, step 401, step 414, and step 424 in the embodiment shown in FIG. 4A and FIG. 4B, step 502 in the embodiment shown in FIG. 5, and step 801 in the embodiment shown in FIG. 8A.

FIG. 13 is a diagram of a structure of another communication apparatus 130 according to an embodiment of this application. The communication apparatus in FIG. 13 may be the foregoing first core network device. The communication apparatus in FIG. 13 may be the foregoing second core network device. The communication apparatus in FIG. 13 may be the foregoing operation requester.

As shown in FIG. 13, the communication apparatus 130 includes at least one processor 1320 and a transceiver 1310.

In some other embodiments of this application, the processor 1320 and the transceiver 1310 may be configured to perform the functions, the operations, or the like performed by the foregoing first core network device. For example, the processor 1320 may perform one or more the following operations: step 602A in the embodiment shown in FIG. 6A, step 702 in the embodiment shown in FIG. 7, and step 809 in the embodiment shown in FIG. 8B. For example, the transceiver 1310 may perform one or more of the following operations: step 405, step 417, step 427, and step 435 in the embodiment shown in FIG. 4A and FIG. 4B, and step 601A and step 602A in the embodiment shown in FIG. 6A.

In some embodiments of this application, the processor 1320 and the transceiver 1310 may be configured to perform the functions, the operations, or the like performed by the foregoing second core network device. For example, the processor 1320 may perform one or more of the following operations: step 402, step 412, step 415, step 422, step 426, and step 433 in the embodiment shown in FIG. 4A and FIG. 4B, and step 813 and step 820 in the embodiment shown in FIG. 8B and FIG. 8C. For example, the transceiver 1310 may perform one or more of the following operations: step 401, step 405, step 411, step 417, step 421, step 425, step 427, step 432, and step 435 in the embodiment shown in FIG. 4A and FIG. 4B, step 602B and step 603B in the embodiment shown in FIG. 6B, and step 812, step 814, and step 819 in the embodiment shown in FIG. 8B and FIG. 8C.

In some embodiments of this application, the processor 1320 and the transceiver 1310 may be configured to perform the functions, the operations, or the like performed by the foregoing operation requester. For example, the processor 1320 may perform one or more of the following operations: step 401, step 414, and step 424 in the embodiment shown in FIG. 4A and FIG. 4B, step 502 in the embodiment shown in FIG. 5, and step 801 in the embodiment shown in FIG. 8A. The transceiver 1310 may perform one or more of the following operations: step 403, step 413, step 416, step 423, step 425, and step 434 in the embodiment shown in FIG. 4A and FIG. 4B FIG. 4A and FIG. 4B, step 501 in the embodiment shown in FIG. 5, step 602Ain the embodiment shown in FIG. 6A, and step 803, step 818, and step 819 in the embodiment shown in FIG. 8A and FIG. 8C.

The transceiver 1310 is configured to communicate with another device/apparatus by using a transmission medium. The processor 1320 receives and sends data and/or signaling through the transceiver 1310, and is configured to implement the methods in the foregoing method embodiments. The processor 1320 may implement the functions of the processing module 1210, and the transceiver 1310 may implement the functions of the transceiver module 1220.

Optionally, the communication apparatus 130 may further include at least one memory 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may cooperate with the memory 1330. The processor 1320 may execute the program instructions stored in the memory 1330. At least one of the at least one memory may be included in a processor.

A specific connection medium between the transceiver 1310, the processor 1320, and the memory 1330 is not limited in this embodiment of this application. In this embodiment of this application, in FIG. 13, the memory 1330, the processor 1320, and the transceiver 1310 are connected through a bus 1340. The bus is represented by a bold line in FIG. 13. A connection manner between other components is merely a schematic description, and is not limited thereto. The bus may include an address bus, a data bus, a control bus, and the like. For ease of representation, only one bold line is used to represent the bus in FIG. 13, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by a combination of hardware in the processor and a software module.

FIG. 14 is a diagram of a structure of another communication apparatus 140 according to an embodiment of this application. As shown in FIG. 14, the communication apparatus shown in FIG. 14 includes a logic circuit 1401 and an interface 1402. The processing module 1210 in FIG. 12 may be implemented by the logic circuit 1401, and the transceiver module 1220 in FIG. 12 may be implemented by the interface 1402. The logic circuit 1401 may be a chip, a processing circuit, an integrated circuit, a system-on-chip (system-on-chip, SoC), or the like, and the interface 1402 may be a communication interface, an input/output interface, or the like. In this embodiment of this application, the logic circuit and the interface may be further coupled to each other. A specific manner of connection between the logic circuit and the interface is not limited in this embodiment of this application.

In some embodiments of this application, the logic circuit and the interface may be configured to perform the functions, the operations, or the like performed by the foregoing first core network device.

In some other embodiments of this application, the logic circuit and the interface may be configured to perform the functions, the operation, or the like performed by the foregoing second core network device.

In some other embodiments of this application, the logic circuit and the interface may be configured to perform the functions, the operations, or the like performed by the foregoing operation requester.

In some embodiments of this application, the logic circuit and the interface may be configured to perform the functions, the operations, or the like performed by the foregoing access network device 2.

This application further provides a computer-readable storage medium. The computer-readable storage medium stores computer code. When the computer code is run on a computer, the computer is enabled to perform the method in the foregoing embodiments.

This application further provides a computer program product. The computer program product includes computer code or a computer program. When the computer code or the computer program is run on a computer, the authentication method in the foregoing embodiments is enabled to be performed.

This application further provides a communication system, including a terminal device, an access network device 1, a second access network device, and a third access network device.

This application further provides a communication system, including a terminal device and an access network device 2.

The foregoing descriptions are merely specific implementations of this application, but are not intended to limit the scope of the protection of this application. Any variation or replacement readily figured out by a person skilled in the art within the technical scope disclosed in this application shall fall within the scope of the protection of this application. Therefore, the scope of the protection of this application shall be subject to the scope of the protection of the claims.

## Claims

1. A terminal management method, comprising:
receiving, by a first core network device, a first message from a terminal, wherein the first message is used to request to access a network; and
when determining, based on quantity information, to allow the terminal to access the network, sending, by the first core network device, a second message to an operation requester to which the terminal belongs, wherein the quantity information comprises a quantity of terminals that the operation requester is allowed to use, the second message comprises first identification information, and the first identification information comprises one or more of the following: a terminal identifier of the terminal, an encrypted terminal identifier, a terminal application identifier, a terminal network identifier, and an operation requester identifier.

2. The method according to claim 1, wherein the determining, based on quantity information, to allow the terminal to access the network comprises:
when a quantity of terminals accessing the network among terminals corresponding to the operation requester is less than a quantity threshold, determining, by the first core network device, to allow the terminal to access the network, wherein the quantity threshold is the quantity of terminals that the operation requester is allowed to use.

3. The method according to claim 1 or 2, wherein the method further comprises:
when determining, based on the quantity information, not to allow the terminal to access the network, sending, by the first core network device, a third message to the terminal, wherein the third message indicates to reject the access of the terminal to the network.

4. The method according to claim 3, wherein the determining, based on the quantity information, not to allow the terminal to access the network comprises:
when the quantity of terminals accessing the network among the terminals corresponding to the operation requester is greater than or equal to the quantity threshold, determining, by the first core network device, not to allow the terminal to access the network, wherein the quantity threshold is the quantity of terminals that the operation requester is allowed to use.

5. The method according to any one of claims 1 to 4, wherein the method further comprises:
sending, by the first core network device, a fourth message to a second core network device, wherein the fourth message is used to request to execute an authentication procedure on the terminal, the fourth message comprises second identification information and authentication information, the second identification information and the authentication information are used to execute the authentication procedure, and the second identification information comprises one or more of the following: the terminal identifier of the terminal, the encrypted terminal identifier, the terminal application identifier, the terminal network identifier, and the operation requester identifier.

6. The method according to claim 5, wherein the second message further comprises indication information, and the indication information indicates that the authentication procedure is any one of the following: one-way authentication, two-way authentication, one-way authentication performed by the terminal on the network or the operation requester, or one-way authentication performed by the network or the operation requester on the terminal.

7. The method according to any one of claims 1 to 4, wherein the method further comprises:
executing, by the first core network device, an authentication procedure on the terminal based on the first message, wherein the first message comprises third identification information and authentication information, the third identification information and the authentication information are used to execute the authentication procedure, and the third identification information comprises one or more of the following: the terminal identifier of the terminal, the encrypted terminal identifier, the terminal application identifier, the terminal network identifier, and the operation requester identifier.

8. The method according to any one of claims 1 to 7, wherein the method further comprises:
determining, by the first core network device based on the third identification information comprised in the first message, the operation requester to which the terminal belongs, wherein the third identification information comprises one or more of the following: the terminal identifier of the terminal, the encrypted terminal identifier, the terminal application identifier, the terminal network identifier, and the operation requester identifier.

9. The method according to claim 5, 6, or 7, wherein the method further comprises:
receiving, by the first core network device, a fifth message; and
sending, by the first core network device, a sixth message to the terminal, wherein the fifth message indicates that the authentication procedure succeeds, and the sixth message indicates to accept the access of the terminal to the network; or the fifth message indicates that the authentication procedure fails, and the sixth message indicates to reject the access of the terminal to the network.

10. The method according to any one of claims 1 to 9, wherein the method further comprises:
obtaining, by the core network device, the quantity information and/or the first identification information.

11. A communication apparatus, comprising:
a transceiver module, configured to receive a first message from a terminal, wherein the first message is used to request to access a network, wherein
the transceiver module is further configured to: when a processing module determines, based on quantity information, to allow the terminal to access the network, send a second message to an operation requester to which the terminal belongs, wherein the quantity information comprises a quantity of terminals that the operation requester is allowed to use, the second message comprises first identification information, and the first identification information comprises one or more of the following: a terminal identifier of the terminal, an encrypted terminal identifier, a terminal application identifier, a terminal network identifier, and an operation requester identifier.

12. The apparatus according to claim 11, wherein
the processing module is specifically configured to: when a quantity of terminals accessing the network among terminals corresponding to the operation requester is less than a quantity threshold, determine to allow the terminal to access the network, wherein the quantity threshold is the quantity of terminals that the operation requester is allowed to use.

13. The apparatus according to claim 11 or 12, wherein
the transceiver module is further configured to: when the processing module determines, based on the quantity information, not to allow the terminal to access the network, send a third message to the terminal, wherein the third message indicates to reject the access of the terminal to the network.

14. The apparatus according to claim 13, wherein
the processing module is specifically configured to: when the quantity of terminals accessing the network among the terminals corresponding to the operation requester is greater than or equal to the quantity threshold, determine not to allow the terminal to access the network, wherein the quantity threshold is the quantity of terminals that the operation requester is allowed to use.

15. The apparatus according to any one of claims 11 to 14, wherein
the transceiver module is further configured to send a fourth message to a second core network device, wherein the fourth message is used to request to execute an authentication procedure on the terminal, the fourth message comprises second identification information and authentication information, the second identification information and the authentication information are used to execute the authentication procedure, and the second identification information comprises one or more of the following: the terminal identifier of the terminal, the encrypted terminal identifier, the terminal application identifier, the terminal network identifier, and the operation requester identifier.

16. The apparatus according to claim 15, wherein the fourth message further comprises indication information, and the indication information indicates that the authentication procedure is any one of the following: one-way authentication, two-way authentication, one-way authentication performed by the terminal on the network or the operation requester, or one-way authentication performed by the network or the operation requester on the terminal.

17. The apparatus according to any one of claims 11 to 14, wherein
the processing module is further configured to execute an authentication procedure on the terminal based on the first message, wherein the first message comprises third identification information and authentication information, the third identification information and the authentication information are used to execute the authentication procedure, and the third identification information comprises one or more of the following: the terminal identifier of the terminal, the encrypted terminal identifier, the terminal application identifier, the terminal network identifier, and the operation requester identifier.

18. The apparatus according to any one of claims 11 to 17, wherein
the processing module is further configured to determine, based on the third identification information comprised in the first message, the operation requester to which the terminal belongs, wherein the third identification information comprises one or more of the following: the terminal identifier of the terminal, the encrypted terminal identifier, the terminal application identifier, the terminal network identifier, and the operation requester identifier.

19. The apparatus according to claim 15, 16, or 17, wherein
the transceiver module is further configured to: receive a fifth message; and send a sixth message to the terminal, wherein the fifth message indicates that the authentication procedure succeeds, and the sixth message indicates to accept the access of the terminal to the network; or the fifth message indicates that the authentication procedure fails, and the sixth message indicates to reject the access of the terminal to the network.

20. The apparatus according to any one of claims 11 to 19, wherein
the processing module is further configured to obtain the quantity information and/or the first identification information.

21. A computer-readable storage medium, wherein the computer-readable storage medium stores a computer program, and the computer program comprises program instructions; and when the program instructions are executed by a processor, the processor is enabled to perform the method according to any one of claims 1 to 10.

22. A communication apparatus, comprising a processor and a memory, wherein
the memory is configured to store a computer program or instructions; and
the processor is configured to execute the computer program or the instructions in the memory, to perform the method according to any one of claims 1 to 10.

23. A communication system, comprising a device configured to perform the method according to any one of claims 1 to 10.
